(19)

**Europäisches Patentamt**

**European Patent Office**

**Office européen des brevets**

(11) **EP 3 139 229 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**13.11.2024 Patentblatt 2024/46**

(45) Hinweis auf die Patenterteilung:
**05.05.2021 Patentblatt 2021/18**

(21) Anmeldenummer: **16169743.8**

(22) Anmeldetag: **14.05.2016**

(51) Internationale Patentklassifikation (IPC):
*G05B 19/4093* (2006.01)    *B24B 53/08* (2006.01)
*B24B 53/14* (2006.01)    *G05B 19/18* (2006.01)

(52) Gemeinsame Patentklassifikation (CPC):
**B24B 53/083; B24B 53/14; G05B 19/186; G05B 19/40937; Y02P 90/02**

(54) **VERFAHREN ZUM ABRICHTEN EINES WERKZEUGES**

METHOD FOR ALIGNING A TOOL

PROCEDE D'AJUSTEMENT D'UN OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2015 DE 102015008963**

(43) Veröffentlichungstag der Anmeldung:
**08.03.2017 Patentblatt 2017/10**

(73) Patentinhaber: **Liebherr-Verzahntechnik GmbH**
**87437 Kempten (DE)**

(72) Erfinder: **Würfel, Robert**
**87499 Wildpoldsried (DE)**

(74) Vertreter: **Behr, Wolfgang et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
WO-A1-2010/060596    DE-A1- 102005 030 846
DE-A1- 102005 034 882    DE-A1- 102013 015 232
DE-A1- 19 624 842    DE-A1- 19 706 867
DE-B4- 102004 020 947    US-A1- 2006 025 050

- **WÜRFEL ROBERT, HANSJORG GEISER: "Neue Möglichkeiten bei der Wahl der Makro- und Mikrogeometrie von wäizgeschliffenen Verzahnungen", GETPRO KONGRESS, WÜRZBURG, 25 March 2015 (2015-03-25) - 26 March 2015 (2015-03-26), Würzburg, pages 1 - 14**
- **JOSE LOPEZ: "Effizient und produktiv mit technologischer flexibiliaet", WERKSTATT UND BETRIEB, HANSER, vol. 145, no. 10, 1 October 2012 (2012-10-01), München DE, pages 60 - 64, ISSN: 0043-2792**
- **"Kontinuierliches Wälzschleifen von Verzahnungen", 1 July 2008, REISHAUER, article SCHNEFER H., DR. THYSSEN, W. WLRZ, W. SCACCHI, G. GRETLER, M.: "1. Auflage"**

EP 3 139 229 B2

**Beschreibung**

Die vorliegende Erfindung betrifft ein Verfahren zum Abrichten eines Werkzeuges, welches zur Verzahnbearbeitung eines Werkstückes einsetzbar ist, auf einer Abrichtmaschine, wobei das Abrichten mit Linienkontakt zwischen Abrichter und Werkzeug erfolgt. Dabei wird eine gezielte Modifikation der Oberflächengeometrie des Werkzeuges erzeugt, indem die Position des Abrichters zum Werkzeug beim Abrichten in Abhängigkeit von der Werkzeugbreitenposition variiert wird.

Aus der DE102012015846A1 ist ein solches Verfahren bekannt, bei welchem durch Zusatzbewegungen beim Abrichten auf dem Werkzeug eine Modifikation der Oberflächengeometrie erzeugt wird, welche auf der Zahnradflanke im Wälzbild zumindest lokal in einer ersten Richtung einen konstanten Wert aufweist und in einer zweiten Richtung, welche senkrecht zur ersten Richtung verläuft, durch eine Funktion f(x) gegeben ist. Aus der EP1995010A1 und der WO 2010/060596A1 ist ein Verfahren bekannt, durch Änderung des Achsabstands während des Abrichtens eine Schnecke über ihre Breite ballig abzurichten. Aus der DE19624842A1 und der DE 19706867A1 ist ein Verfahren bekannt, bei dem durch eine stetige Änderung der Position des Abrichters zum Werkzeug beim Abrichten eine Schnecke erzeugt wird, deren Profilwinkel sich über ihre Breite verändert. Aus der DE 102005030846A1 und der DE 102006061759A1 sind ebenfalls Verfahren bekannt, bei welchen eine Schnecke durch eine entsprechende Abrichtkinematik entweder über ihre gesamte Breite mit einem konstant modifizierten Profilwinkel hergestellt wird, oder der Profilwinkel über die Schneckenbreite modifiziert wird. Ein zweiflankiges Abrichten zum verschränkungsfreien Wälzschleifen ist aus *Kapp, Effizient und produktiv mit technologischer Flexibilität, JOSE LOPEZ,* bekannt.

Druckschrift DE 10 2013 015 232 A1 zeigt ein Verfahren zur Herstellung eines Abrichtwerkzeugs, wobei die Berührlinie des Abrichtwerkzeugs mit der abzurichtenden Schleifschnecke berechnet und das Abrichtwerkzeug mit einem hohlballigen Profil versehen wird.

Allerdings wurden bei den Verfahren gemäß dem Stand der Technik die sich bietenden Möglichkeiten zur Erzeugung gezielter Modifikationen der Oberflächengeometrie des Werkzeuges noch nicht voll ausgeschöpft.

Aufgabe der vorliegenden Erfindung ist es daher, ein Verfahren zum modifizierten Abrichten eines Werkzeuges dahingehend weiterzuentwickeln, dass sich zusätzliche Möglichkeiten im Hinblick auf die Ausgestaltung der erzielbaren Modifikationen ergeben.

Diese Aufgabe wird erfindungsgemäß durch die Verfahren gemäß den unabhängigen Ansprüchen der vorliegenden Anmeldung erfüllt. Vorteilhafte Ausgestaltungen der vorliegenden Erfindung sind Gegenstand der Unteransprüche.

In einem ersten Aspekt zeigt die vorliegende Erfindung ein Verfahren zum Abrichten eines Werkzeuges, welches zur Verzahnbearbeitung eines Werkstückes einsetzbar ist, auf einer Abrichtmaschine, wobei das Abrichten mit Linienkontakt zwischen Abrichter und Werkzeug erfolgt. Dabei wird eine gezielte Modifikation der Oberflächengeometrie des Werkzeuges erzeugt, indem die Position des Abrichters zum Werkzeug beim Abrichten in Abhängigkeit von der Werkzeugbreitenposition variiert wird, wobei bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade unabhängig voneinander zur Erzeugung der gewünschten Modifikation angesteuert werden. Erfindungsgemäß umfasst das Verfahren gemäß dem ersten Aspekt dabei mehrere Varianten, welche im Folgenden näher dargestellt werden: Gemäß einer ersten Variante ist die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an einem Wälzwinkel als eine Funktion $C_{0FS}$ der Position in Werkzeugbreitenrichtung vorgebbar und zumindest die Steigung der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar. Bevorzugt sind dabei die Funktion $C_{0FS}$, mit welcher die Modifikation an einen Wälzwinkel vorgebbar ist, sowie die Steigung unabhängig voneinander vorgebbar.

Gemäß einer zweiten Variante kann die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens zwei Wälzwinkeln als eine Funktion der Werkzeugbreitenposition vorgebbar sein. Vorteilhafterweise ist die Modifikation dabei an den beiden Wälzwinkeln unabhängig voneinander vorgebbar.

Gemäß der ersten und der zweiten Variante ist damit zusätzlich zu der Vorgabe der Modifikation an zumindest einem Wälzwinkel in Werkzeugbreitenrichtung eine Vorgabe der Steigung der Modifikation bzw. eine Vorgabe an einem zweiten Wälzwinkel möglich. Hierdurch werden die Modifikationen, welche erfindungsgemäß erzeugt werden können, erheblich erweitert.

Gemäß einer dritten Variante kann die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens einem Wälzwinkel als eine Funktion der Werkzeugbreitenposition vorgebbar sein, und zusätzlich eine Zuordnung eines bestimmten Radius des Abrichters zu einem bestimmten Radius des Werkzeuges erfolgen. Bevorzugt ist die Zuordnung dabei ebenfalls als eine Funktion der Werkzeugbreitenposition vorgebbar. Weiterhin kann die Zuordnung unabhängig von der Vorgabe der Modifikation an mindestens einem Wälzwinkel vorgebbar sein.

Die Zuordnung eines bestimmten Radius des Abrichters zu einem bestimmten Radius des Werkzeuges kann zum einen fertigungstechnische Vorteile haben, indem zum Beispiel ein Unterhöhlen des Schneckenganges verhindert wird. Alternativ oder zusätzlich kann eine solche Zuordnung insbesondere bei einem modifizierten Abrichter eingesetzt werden, um die Position, in welcher die Modifikation des Abrichters auf dem Werkzeug abgebildet wird, zu definieren. Erfolgt die Zuordnung dabei als eine Funktion der Werkzeugbreitenposition, kann die Position, in welcher die Modifikation des Abrichters auf das Werkzeug abgebildet wird, in Werkzeugbreitenrichtung variiert werden.

Gemäß einer vierten Variante kann zumindest die Steigung der gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar sein, und zusätzlich eine Zuordnung eines bestimmten Radius des Abrichters zu einem bestimmten Radius des Werkzeuges erfolgen. Bevorzugt erfolgt die Zuordnung dabei als eine Funktion der Werkzeugbreitenposition und / oder unabhängig von der Vorgabe der Steigung. Die Zuordnung des Radius gemäß dem vierten Aspekt hat dabei die gleichen Vorteile, welche bereits im Hinblick auf den dritten Aspekt beschrieben wurden.

Gemäß einer fünften Variante kann die Balligkeit der gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar sein. Anders als gemäß dem Stand der Technik ist damit nicht nur die Steigung der Modifikation vorgebbar, sondern alternativ oder zusätzlich deren Balligkeit.

Gemäß einer sechsten Variante kann eine gezielte Modifikation der Oberflächengeometrie des Werkzeuges vorgebbar oder erzeugbar sein, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist. Bevorzugt kann dabei vorgesehen sein, dass die Koeffizienten-Funktion $F_{FtC,1}$ quadratisch von der Position in der zweiten Richtung abhängt und/oder die Koeffizienten-Funktion $F_{FtL,1}$ linear von der Position in der zweiten Richtung abhängt.

Gemäß einer siebten Variante kann eine gezielte Modifikation der Oberflächengeometrie des Werkzeuges vorgebbar oder erzeugbar sein, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert. Bevorzugt kann vorgesehen sein, dass die Modifikation des Werkzeuges eine Steigung aufweist, welche in Abhängigkeit von dem Werkzeugdrehwinkel und/oder der Werkzeugbreitenposition linear variiert und die Zahndicke in Abhängigkeit von dem Werkzeugdrehwinkel und/oder der Werkzeugbreitenposition quadratisch variiert.

Gemäß einer achten Variante können mindestens vier Freiheitsgrade der relativen Position des Abrichters zum Werkzeug beim Abrichten in Linienkontakt unabhängig voneinander als Funktion der Werkzeugbreitenposition vorgebbar sein und / oder angesteuert werden. Bevorzugt wird eine Ansteuerung gemäß der sechsten Variante dazu eingesetzt, um eine Geometrie oder Zuordnung zu erzeugen, welche gemäß einer der ersten fünf Varianten vorgegeben wird. Weiterhin bevorzugt werden mindestens fünf Freiheitsgrade der relativen Position des Abrichters zum Werkzeug beim Abrichten in Linienkontakt unabhängig voneinander als Funktion der Werkzeugbreitenposition vorgegeben und / oder angesteuert.

Erfindungsgemäß können dabei auch eine oder mehrere der oben genannten Varianten miteinander kombiniert werden. Alternativ können mehrere oder alle dieser Varianten zur Verfügung stehen und von einem Bediener je nach Bearbeitungsauftrag ausgewählt werden.

Bevorzugte Ausgestaltungen sämtlicher Varianten der vorliegenden Erfindung werden im Folgenden näher dargestellt:
Erfindungsgemäß kann die durch die Veränderung der Position des Abrichters zum Werkzeug beim Abrichten in Abhängigkeit von der Werkzeugbreitenposition erzeugte gezielte Modifikation der Oberflächengeometrie des Werkzeuges im Wälzbild in einer ersten Richtung zumindest näherungsweise als eine lineare, quadratische oder kubische Funktion beschreibbar sein, deren Koeffizienten in Werkzeugbreitenrichtung durch Funktionen $C_{0FS}$, $C_{1FS}$, $C_{2FS}$ und / oder $C_{3FS}$ und/oder durch Koeffizienten-Funktionen $F_{FtC,1}$ für den konstanten Anteil, $F_{FtL,1}$ für den linearen Anteil und/oder $F_{FtQ,1}$ für den quadratischen Anteil gegeben sind. Bevorzugt ist dabei $F_{FtC,1}$ nicht-konstant und hängt weiter bevorzugt nicht-linear von der Position in der zweiten Richtung ab. Weiterhin ist $F_{FtL,1}$ bevorzugt nicht-konstant und hängt weiter bevorzugt linear oder nicht-linear von der Position in der zweiten Richtung ab. In einer ersten Ausführungsform der Erfindung kann $F_{FtQ,1}$ gleich Null oder konstant sein. In einer zweiten Ausführungsform kann $F_{FtQ,1}$ nicht-konstant sein und bevorzugt linear oder nicht-linear von der Position in der zweiten Richtung abhängen.

Bevorzugt ist die Modifikation des Werkzeuges im Wälzbild nicht nur lokal, sondern zumindest in einem Teilbereich der Verzahnung und ggf. auch über die gesamte Verzahnung auch global zumindest näherungsweise durch die oben ggf. näher spezifizierte konstante, lineare, quadratische und/oder kubische Funktion beschreibbar.

Wird in der vorliegenden Anmeldung davon gesprochen, dass eine Modifikation zumindest näherungsweise durch eine bestimmte Funktion beschreibbar ist, so bedeutet dies bevorzugt, dass die bestimmte Funktion die Modifikation im Rahmen einer vorgegebenen zulässigen Toleranz beschreibt und/oder dass die Differenz zwischen der bestimmten Funktion und der Modifikation innerhalb eines vorgegebenen zulässigen Toleranzbereiches liegt. Das erfindungsgemäße Verfahren kann dabei den Schritt der Vorgabe einer zulässigen Toleranz und/oder eines zulässigen Toleranzbereiches enthalten. Weiterhin kann die erfindungsgemäße Verzahnmaschine bzw. das Computersystem oder Computerprogramm eine Funktion zur Vorgabe einer zulässigen Toleranz und/oder eines zulässigen Toleranzbereiches umfassen.

Weiterhin kann die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens drei oder vier Wälzwinkeln als eine Funktion der Werkzeugbreitenposition vorgebbar sein.

Alternativ oder zusätzlich kann eine Zuordnung eines bestimmten Radius des Abrichters zu einem bestimmten Radius des Werkzeuges erfolgen, wobei die Zuordnung bevorzugt als eine Funktion der Werkzeugbreitenposition vorgebbar ist.

Weiterhin kann eine Zuordnung zweier bestimmter Radien des Abrichters zu zwei bestimmten Radien des Werkzeugs erfolgen. Bevorzugt ist die Zuordnung dabei als eine Funktion der Position in Werkzeugbreitenrichtung vorgebbar.

Weiterhin kann vorgesehen sein, dass mindestens einer der Wälzwinkel und weiter bevorzugt zwei oder drei Wälzwinkel, an welchem oder welchen die Modifikation vorgebbar ist, in Werkzeugbreitenrichtung unterschiedlich gewählt wird oder werden. Insbesondere können dabei auch der oder die Wälzwinkel als eine Funktion der Werkzeugbreitenposition vorgebbar sein.

Das erfindungsgemäße Abrichtverfahren kann dabei sowohl einflankig, als auch zweiflankig erfolgen.

Insbesondere kann das erfindungsgemäße Abrichtverfahren dabei einflankig erfolgen und die mindestens zwei oder drei Wälzwinkel, welche vorgegeben werden, auf einer Flanke angeordnet sein.

Alternativ kann das Abrichten zweiflankig erfolgen und die mindestens zwei oder drei Wälzwinkel, an welchen die Modifikation vorgegeben wird, auf die zwei Flanken verteilt seien. Beim zweiflankigen Abrichten sind die Modifikationen für jede einzelne Flanke dabei naturgemäß begrenzer, als dies beim einflankigen Abrichten der Fall ist.

In einer möglichen Weiterentwicklung der vorliegenden Erfindung kann das Abrichten jedoch zweiflankig erfolgen und ein Werkzeug mit einer konischen Grundform eingesetzt werden. Durch die konische Grundform ergibt sich eine Erweiterung der möglichen Modifikationen. Insbesondere kann dabei der Konuswinkel des Werkzeuges zum Einstellen der Modifikation eingesetzt werden.

Gemäß einem zweiten Aspekt umfasst die vorliegende Erfindung ein Verfahren zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird. Erfindungsgemäß ist dabei vorgesehen, dass die Position, in welcher die Modifikation des Abrichters beim Abrichten auf dem Werkzeug aufgebracht wird, in Abhängigkeit von der Werkzeugbreitenposition vorgebbar ist oder durch Ansteuerung der Bewegungsachsen der Abrichtmaschine beim Abrichten verändert wird. Erfindungsgemäß kann hierdurch die Position, in welcher die vom Abrichter erzeugte Modifikation auf das Werkzeug abgebildet wird, in Werkzeugbreitenrichtung variiert werden.

Bevorzugt wird das erfindungsgemäße Verfahren gemäß dem zweiten Aspekt dabei mit einem erfindungsgemäßen Verfahren gemäß dem ersten Aspekt, und insbesondere einer der dort dargestellten Varianten kombiniert.

Gemäß einem dritten Aspekt der vorliegenden Erfindung umfasst diese ein Verfahren zum modifizierten Abrichten eines Werkzeuges, welches zur Verzahnbearbeitung eines Werkstückes einsetzbar ist, auf einer Abrichtmaschine, wobei das Abrichten in mindestens einem ersten und einem zweiten Hub jeweils mit Linienkontakt erfolgt. Erfindungsgemäß ist dabei vorgesehen, dass die Position, an welcher die in einem ersten Hub erzeugte Modifikation an die mit einem zweiten Hub erzeugte Modifikation anschließt, in Abhängigkeit von der Werkzeugbreitenposition verändert wird. Erfindungsgemäß werden damit die Möglichkeiten, welche durch das mehrhubige Abrichten zur Verfügung gestellt werden, erheblich erweitert. Erfindungsgemäß können dabei auch mehr als zwei Hübe eingesetzt werden. Bevorzugt wird dabei die Position, an welcher die von den jeweiligen Hüben erzeugten Modifikationen an die jeweils benachbarten Modifikationen anschließen, in Abhängigkeit von der Werkzeugbreitenposition verändert.

Bevorzugt ist dabei vorgesehen, dass die Bewegungsachsen der Abrichtmaschine beim Abrichten in mindestens einem ersten und zweiten Hub zusätzlich zu der für die unterschiedliche Positionierung zwischen Abrichter und Werkzeug bei den beiden Hüben notwendigen Veränderungen unterschiedlich eingestellt werden, um die Steigung und / oder Balligkeit der Modifikation bei mindestens einem der Hübe zu beeinflussen. Zusätzlich zu der unterschiedlichen Positionierung der Hübe kann damit auch die durch mindestens einen der Hübe erzeugte Modifikation durch eine entsprechende Einstellung der Bewegungsachsen eingestellt werden. Bevorzugt sind dabei die Steigung oder Balligkeit als Funktion der Werkzeugbreitenposition vorgebbar und / oder werden als Funktion der Werkzeugbreitenposition variiert.

Weiterhin kann vorgesehen sein, dass die gezielte Modifikation bei mindestens einem der Hübe so eingestellt wird, dass die durch den ersten Hub erzeugte Oberflächengeometrie in einem gewünschten Winkel und insbesondere tangential an die durch den zweiten Hub erzeugte Oberflächengeometrie anschließt. Werden mehr als zwei Hübe eingesetzt, so werden die Modifikationen bevorzugt so eingestellt, dass die durch den jeweiligen Hub erzeugte Oberflächengeometrie in einem gewünschten Winkel und insbesondere tangential an die benachbarten Bereiche, welche durch andere Hübe erzeugt werden, anschließen.

Weiterhin kann vorgesehen sein, dass für mindestens einen und bevorzugt jeden Hub eine gewünschte Modifikation des Werkzeuges an mindestens zwei und bevorzugt drei Wälzwinkeln vorgegeben wird. Bevorzugt wird die Modifikation dabei als eine Funktion der Werkzeugbreitenposition vorgegeben.

Weiterhin kann für mindestens einen und bevorzugt jeden Hub eine Zuordnung eines bestimmten Radius des Abrichters zu einem bestimmten Radius des Werkzeuges erfolgen. Bevorzugt ist die Zuordnung dabei als Funktion der Werkzeugbreitenposition vorgebbar.

Erfindungsgemäß können für den ersten und den zweiten Hub unterschiedliche Bereiche des Abrichters eingesetzt werden oder für den ersten und den zweiten Hub unterschiedliche Abrichter eingesetzt werden. Dabei kann vorgesehen sein, dass einer der Hübe zum Erzeugen einer Modifikation des Zahnfußes oder des Zahnkopfes eingesetzt wird, beispielsweise zum Erzeugen einer Rücknahme des Zahnkopfes oder des Zahnfußes. Ein weiterer Hub kann zum Erzeugen der Zahnflanke eingesetzt werden.

Bevorzugte Ausgestaltungen der vorliegenden Erfindung, welche bei jedem der oben genannten Aspekte und bei jeder der genannten Varianten eingesetzt werden können, werden im Folgenden näher erläutert:
Erfindungsgemäß kann eine durch eine Modifikation des Abrichters erzeugte Modifikation mit einer durch die Veränderung der Position des Abrichters zum Werkzeug beim Abrichten erzeugten gezielten Modifikation der Oberflächengeometrie des Werkzeuges überlagert werden. Dies ermöglicht es beispielsweise für den Fall, dass die vom Abrichter erzeugte Modifikation nicht der gewünschten Modifikation entspricht, diese mit einer weiteren Modifikation zu überlagern, um die gewünschte Modifikation zumindest innerhalb der zulässigen Toleranz zu erreichen.

Bevorzugt kann dabei die Position der durch eine Modifikation des Abrichters erzeugten Modifikation auf dem Werkzeug vorgebbar sein, insbesondere als eine Funktion der Position in Werkzeugbreitenrichtung. Die Vorgabe der Position kann durch eine Zuordnung eines bestimmten Radius des Abrichters zu einem bestimmten Radius des Werkzeuges erfolgen.

Weiterhin bevorzugt kann eine gewünschte Streckung oder Stauchung der Modifikation des Abrichters auf dem Werkzeug vorgebbar seien. Der Erfinder der vorliegenden Erfindung hat erkannt, dass eine von einem modifizierten Abrichter erzeugte Modifikation durch eine Veränderung der Relativposition zwischen Abrichter und Werkzeug beim Abrichten gestaucht oder gestreckt werden kann. Dies kann zum einen zum Erzeugen einer gewünschten Streckung oder Stauchung der Modifikation eingesetzt werden. Alternativ kann diese Stauchung und / oder Streckung beispielsweise im Rahmen einer Ausgleichsrechnung berücksichtigt werden. Bevorzugt ist die Stauchung oder Streckung als eine Funktion der Position in Werkzeugbreitenrichtung vorgebbar, insbesondere durch eine Zuordnung zweier bestimmter Radien des Abrichters zu zwei bestimmten Radien des Werkzeuges.

In einer möglichen Ausführungsform der vorliegenden Erfindung kann der modifizierte Abrichter für sein komplettes aktives Profil eine gleichbleibende Modifikation aufweisen, beispielsweise eine gleichbleibende Balligkeit.

Alternativ kann der modifizierte Abrichter in einem ersten Teilbereich seines Profils eine Modifikation aufweisen, welche sich von der Profilform in einem zweiten Teilbereich unterscheidet. Vorteilhafterweise weist die Modifikation des Abrichters im ersten Teilbereich einen anderen Profilwinkel und / oder eine andere Balligkeit auf als im zweiten Teilbereich. Weiterhin kann die Modifikation eine Kante aufweisen. Beispielsweise können der erste und der zweite Teilbereich über eine Kante miteinander in Verbindung stehen.

Weist der Abrichter mindestens zwei Teilbereiche mit unterschiedlichen Modifikationen auf, so steht er beim Abrichten bevorzugt gleichzeitig mit dem ersten und zweiten Bereich in Kontakt mit der Werkzeugoberfläche, sodass die beiden Teilbereiche gleichzeitig zum Abrichten eingesetzt werden. Alternativ können die beiden Teilbereiche jedoch auch in unterschiedlichen Hüben zum Abrichten eingesetzt werden.

Weiterhin kann erfindungsgemäß ein Kombiabrichter zum gleichzeitigen Abrichten des Zahnkopfes und der Zahnflanke eingesetzt werden. Dabei kann die Höhe des Zahnkopfes vorgegeben und durch Einstellung der Bewegungsachsen der Abrichtmaschine beim Abrichten erzeugt werden. Bevorzugt wird die Höhe des Zahnkopfes als eine Funktion der Werkzeugbreitenposition vorgegeben. Die entsprechende Erzeugung des Zahnkopfes mit variabler Höhe kann durch eine erfindungsgemäße Zuordnung eines bestimmten Radius, insbesondere des Radius des Zahnkopfes, auf dem Abrichter zu einen gewünschten Radius des Werkzeuges erzeugt werden.

Weiterhin kann die Abrichtmaschine so ausgestaltet sein, dass mehrere unterschiedliche Einstellungen der Bewegungsachsen der Abrichtmaschine vorliegen, welche die gleiche relative Position zwischen Abrichter und Werkzeug erzeugen. Dies kann insbesondere dann der Fall sein, wenn mehr Bewegungsachsen zur Einstellung der Relativposition zwischen Abrichter und Werkzeug vorhanden sind, als Freiheitsgrade zur Verfügung stehen. Bevorzugt wird in diesem Fall aus einer solchen Mehrzahl an Einstellungen der Bewegungsachsen eine Einstellung gewählt, welche vorgegebene Bedingungen besser erfüllt.

Insbesondere kann die Einstellung gewählt werden, welche die gewünschte Relativposition mit höherer Genauigkeit und / oder geringeren Positionsfehlern bereitstellt. Insbesondere kann berücksichtigt werden, dass die physikalischen Bewegungsachsen je nach ihrer konkreten Stellung eine Position mit höherer oder geringerer Genauigkeit anfahren können.

Weiterhin kann eine Einstellung gewählt werden, welche geringere Verfahrbewegungen der Maschinenachsen erfordert. Insbesondere kann so vorgegangen werden, wenn die Modifikation in Breitenrichtung variiert wird, wofür die Maschinenachsen der Abrichtmaschine während des Abrichtprozesses verfahren werden müssen. Die erfindungsgemäß erreichbaren geringeren Verfahrbewegungen stellen dann geringere Anforderungen an die Kinematik der Abrichtmaschine.

Weiterhin kann eine Einstellung gewählt werden, welche Kollisionen des Abrichters, des Werkzeuges und / oder von Maschinenteilen untereinander vermeidet. Hierbei wird berücksichtigt, dass gemäß der vorliegenden Erfindung relativ große Verfahrbewegungen notwendig werden können, um die gewünschten Modifikationen zur Verfügung zu stellen. Erfindungsgemäß kann daher überprüft werden, ob Kollisionen des Abrichters, der Werkzeuges und / oder von Maschinenteilen untereinander vorliegen und diese entweder durch entsprechende Auswahl der Einstellungen und / oder Beschränkung der Modifikation vermieden werden.

Weiterhin kann die durch das Werkzeug auf dem Werkstück erzeugte Verzahnungsgeometrie oder die auf dem Werkzeug durch das Abrichten erzeugte Verzahnungsgeometrie vermessen wird und aus einer Abweichung von einer Sollgeometrie die beim Abrichten vorliegenden Abweichungen der Bewegungsachsen der Abrichtmaschine von ihren Solleinstellungen bestimmt werden. Bevorzugt werden diese Daten dann dazu eingesetzt, um die Abweichung der Bewegungsachsen der Abrichtmaschine von ihren Solleinstellungen auszugleichen.

Bevorzugt kann es sich bei den Freiheitsgraden, welche zur Erzeugung der gewünschten Modifikation gemäß dem ersten Aspekt genutzt werden, um mindestens drei, vier oder alle der folgenden fünf Freiheitsgrade handeln: Drehwinkel des Werkzeuges, axiale Position des Werkzeuges, y-Position des Abrichters, Achsabstand und / oder Achskreuzwinkel. Bei diesen Freiheitsgraden handelt es sich dabei um rein geometrische Definitionen der relativen Position zwischen Abrichter und Werkzeug. Dabei können unterschiedliche physikalische Achsen der Abrichtmaschine dazu eingesetzt werden, um diese geometrischen Freiheitsgrade einzustellen und / oder zu verändern.

Bevorzugt kann hierbei die axiale Position des Werkzeuges, d. h. die Werkzeugbreitenposition, dazu genutzt werden, um die Berührlinie des Abrichters zu verschieben, und von den verbleibenden vier Freiheitsgraden können zwei, drei oder vier Freiheitsgrade unabhängig voneinander als Funktion der axialen Position des Werkzeuges, d. h. der Werkzeugbreitenposition, zur Beeinflussung der Modifikation entlang der Berührlinie herangezogen werden.

Die erfindungsgemäß erzeugbaren Modifikationen können dabei in einer Vielzahl von Anwendungsfällen zum Einsatz kommen:

Beispielsweise kann ein Fehler in der Oberflächengeometrie eines Abrichters durch Vorgabe entsprechender Korrekturwerte beim Einstellen der Bewegungsachsen der Abrichtmaschine zumindest teilweise korrigiert werden. Der Abrichter muss daher nicht extra nachbearbeitet werden. Vielmehr kann der Fehler durch das erfindungsgemäße Abrichtverfahren ausgeglichen werden.

Weiterhin kann ein Abrichter, welcher auf ein Werkzeug mit einer ersten Makrogeometrie und / oder einer ersten gewünschten Oberflächengeometrie ausgelegt wurde, zum Abrichten eines Werkzeuges mit einer zweiten Makrogeometrie und / oder einer zweiten gewünschten Oberflächengeometrie eingesetzt werden. Dabei können die sich bei der Bearbeitung des zweiten Werkzeuges durch die Auslegung auf das Werkzeug mit der ersten Makrogeometrie und / oder ersten gewünschten Oberflächengeometrie ergebenden Fehler durch eine entsprechende Einstellung der Bewegungsachsen der Abrichtmaschine beim Abrichten des zweiten Werkzeuges zumindest teilweise ausgeglichen werden.

Weiterhin kann erfindungsgemäß die Einstellung der Bewegungsachsen der Abrichtmaschine beim Abrichten und / oder die Makrogeometrie oder Modifikation des Abrichters und / oder die Makrogeometrie des Werkzeuges mittels einer Ausgleichsrechnung bestimmt werden. Insbesondere können dabei die durch die Veränderung der Einstellung der Bewegungsachsen der Abrichtmaschine erzielbaren Modifikationen im Wälzbild in einer Richtung mit einem Winkel $\rho_{FS}$ zur Werkzeugbreitenrichtung an zwei, drei oder vier Wälzwinkeln variiert und bevorzugt zwischen diesen Wälzwinkeln interpoliert werden, und eine solche Funktion mit einer gewünschten Modifikation verglichen werden. Dabei kann die Modifikation als lineare, quadratische und / oder kubische Funktion interpoliert werden.

Erfindungsgemäß kann im Rahmen der Ausgleichsrechnung eine Abstandsfunktion zur Quantifizierung der Abweichung eingesetzt werden. In einer möglichen Ausführungsform der vorliegenden Erfindung kann die Abstandsfunktion eine von der Position im Wälzbild abhängige Gewichtung aufweisen. Hierdurch kann berücksichtigt werden, dass die zulässigen Toleranzen in unterschiedlichen Bereichen des Wälzbildes unterschiedlich groß sein können.

In einer möglichen Ausführungsform der vorliegenden Erfindung kann ein Werkzeug eingesetzt werden, bei welchem mindestens ein Gang inaktiv und / oder ausgespart ist. Erfindungsgemäß kann hierdurch berücksichtigt werden, dass die Veränderungen in der Position des Abrichters gegenüber dem Werkzeug gemäß der vorliegenden Erfindung teilweise relativ groß seien müssen, um die gewünschten Modifikationen zu erzeugen. In diesem Fall kann es vorkommen, dass der Abrichter beim Abrichten einer ersten Flanke zumindest teilweise in die Kontur der gegenüberliegenden Flanke eingreift. Ist dabei mindestens ein Gang inaktiv und / oder ausgespart, steht hierdurch mehr Platz für den Abrichter beim Abrichten zur Verfügung.

Erfindungsgemäß kann hierfür eine Zahnflanke so abgerichtet werden, dass sie beim Bearbeiten des Werkstückes nicht in Kontakt mit dem Werkstück kommt und daher inaktiv ist. Hierdurch ist es unerheblich, wenn dieser Gang beim Abrichten der gegenüberliegenden Flanke ungewollt mit dem Abrichter in Kontakt gerät und daher eine unerwünschte Kontur erhält. Bevorzugt wird dabei mindestens ein Gang so abgerichtet, dass er beim Bearbeiten des Werkstückes nicht in Kontakt mit dem Werkstück kommt und daher inaktiv ist.

In einer bevorzugten Ausführungsform wird zwischen zwei aktiven Gängen mindestens ein inaktiver und / oder ausgesparter Gang vorgesehen. Hierdurch ist für die Abrichtbearbeitung der Flanken der aktiven Gänge jeweils mehr Platz für den Abrichter, da zwischen den zwei aktiven Gängen mindestens ein inaktiver und / oder ausgesparter Gang vorgesehen ist.

Beim Bearbeiten eines Werkstückes mit einem solchen Werkzeug in Wälzkopplung kommt in einer möglichen Ausführungsform der vorliegenden Erfindung nacheinander maximal jeder zweite Zahn des Werkstückes in Eingriff mit dem Werkzeug. Dies ist dadurch bedingt, dass bevorzugt zwischen zwei aktiven Gängen mindestens ein inaktiver und / oder ausgesparter Gang vorgesehen ist, sodass der diesem inaktiven oder ausgesparten Gang zugeordnete Zahn des Werkstückes bei der Bearbeitung ausgespart bleibt.

Erfindungsgemäß kann in Abhängigkeit von der Anzahl der Zähne des Werkstückes und / oder der Anzahl der Gänge des Werkzeuges in mindestens einem ersten Durchgang mindestens ein erster Teil der Zähne des Werkstückes bearbeitet werden, woraufhin das Werkstück relativ zum Werkzeug gedreht wird, um mindestens einen zweiten Teil der Zähne in mindestens einem zweiten Durchgang zu bearbeiten. Hierdurch wird sichergestellt, dass sämtliche Zähne des Werkstückes auch tatsächlich bearbeitet werden. Gegebenenfalls können dabei auch mehr als zwei Durchgänge eingesetzt werden, um die Zähne des Werkstückes zu bearbeiten.

Neben dem erfindungsgemäßen Verfahren zum Abrichten eines Werkzeuges umfasst die vorliegende Erfindung weiterhin ein Verfahren zur Herstellung eines Werkstückes mit modifizierter Verzahnungsgeometrie durch ein Wälzverfahren mittels eines modifizierten Werkzeuges, wobei durch ein erfindungsgemäßes Abrichtverfahren eine gezielte Modifikation der Oberflächengeometrie des Werkzeuges erzeugt wird und die gezielte Modifikation des Werkzeuges durch das Wälzverfahren eine entsprechende Modifikation auf der Oberfläche des Werkstückes erzeugt. Insbesondere kann dabei ein Diagonalwälzverfahren zur Bearbeitung des Werkstückes eingesetzt werden. Durch ein solches Diagonalwälzverfahren ist es möglich, eine topologische Modifikation der Oberflächengeometrie des Werkzeuges auf das Werkstück abzubilden.

Insbesondere kann eine gemäß dem erfindungsgemäßen Abrichtverfahren in Breitenrichtung variierende Modifikation der Oberflächengeometrie des Werkzeuges eingesetzt werden, um durch ein Diagonalwälzverfahren eine entsprechende Variation der Modifikation des Werkstückes in Werkstückbreitenrichtung zu erzeugen. Das Diagonalwälzverfahren bildet dabei die Modifikation des Werkzeuges auf die Oberfläche des Werkstückes ab. Die vorliegende Erfindung kann jedoch auch zur Erzeugung einer reinen Profilmodifikation des Werkstückes eingesetzt werden.

Erfindungsgemäß kann eine gewünschte Modifikation der Oberflächengeometrie eines mit dem Werkzeug zu bearbeitenden Werkstückes vorgegeben und aus dieser die zu ihrer Herstellung notwendige gezielte Modifikation der Oberflächengeometrie des Werkzeuges bestimmt werden. Bevorzugt sind dabei die erfindungsgemäß möglichen Vorgaben der Oberflächengeometrie des Werkzeuges, welche oben im Hinblick auf das Abrichten des Werkzeuges beschrieben wurden, durch entsprechende Vorgaben der Oberflächengeometrie des Werkstückes ersetzbar bzw. werden durch diese vorgegeben.

Neben den erfindungsgemäßen Verfahren umfasst die vorliegende Erfindung weiterhin ein Softwareprogramm gemäß einem ersten Aspekt zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwendigen Einstellungen der Bewegungsachsen einer Abrichtmaschine. Die vorliegende Erfindung stellt das Softwareprogramm als solches unter Schutz. In einer möglichen Ausführungsform der vorliegenden Erfindung kann das Softwareprogramm auf einer erfindungsgemäßen Vorrichtung abgearbeitet werden. Das Softwareprogramm kann beispielsweise auf einem Datenträger oder in einem Speicher abgespeichert sein. Bei der Vorrichtung kann es sich insbesondere um einen Computer und/oder eine Maschinensteuerung handeln. Auf diesem bzw. dieser kann bevorzugt ein erfindungsgemäßes Softwareprogramm ablaufen.

Das erfindungsgemäße Softwareprogramm gemäß dem ersten Aspekt umfasst eine Eingabefunktion, durch welche die gewünschte Modifikation des Werkzeuges vorgebbar ist, und eine Berechnungsfunktion, welche aus der gewünschten Modifikation des Werkzeuges die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen der Abrichtmaschine als Funktion der Werkzeugbreitenposition bestimmt.

Die Vorrichtung bzw. des Softwareprogramm gemäß dem ersten Aspekt umfasst unterschiedliche Varianten, welche im Folgenden näher dargestellt werden:

In einer ersten Variante können die Eingabefunktion und die Berechnungsfunktion so ausgestaltet sein, dass die gezielte Modifikation der Oberflächengeometrie des Werkzeuges an einem Wälzwinkel als einer Funktion $C_{0FS}$ der Position in Werkzeugbreitenrichtung vorgebbar ist und zumindest die Steigung und / oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist. Dabei ist die Berechnungsfunktion so ausgestaltet, dass die Modifikation durch den berechneten Verlauf der Relativposition oder den berechneten Verlauf der Einstellung der Bewegungsachsen der Abrichtmaschine erzeugbar ist.

In einer zweiten Variante können die Eingabefunktion und die Berechnungsfunktion so ausgestaltet sein, dass die gezielte Modifikation der Oberflächengeometrie des Werkzeuges an mindestens zwei Wälzwinkeln als eine Funktion der Werkzeugbreitenposition vorgebbar ist. Die Berechnungsfunktion ist dabei so ausgestaltet, dass die Modifikation durch den berechneten Verlauf der Relativposition oder der Einstellung der Bewegungsachsen der Abrichtmaschine erzeugbar ist.

In einer dritten Variante können die Eingabefunktion und die Berechnungsfunktion so ausgestaltet sein, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt. Die Berechnungsfunktion ist dabei so ausgestaltet, dass die Modifikation durch den berechneten Verlauf der Relativposition oder der Einstellung der Bewegungsachsen der Abrichtmaschine erzeugbar ist. Bevorzugt ist die Zuordnung dabei als eine Funktion der Werkzeugbreitenposition vorgebbar.

Gemäß einer vierten Variante können die Eingabefunktion und die Berechnungsfunktion so ausgestaltet sein, dass die gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist. Bevorzugt kann dabei vorgesehen sein, dass die Koeffizienten-Funktion $F_{FtC,1}$ quadratisch von der Position in der zweiten Richtung abhängt und/oder die Koeffizienten-Funktion $F_{FtL,1}$ linear von der Position in der zweiten Richtung abhängt.

Gemäß einer fünften Variante können die Eingabefunktion und die Berechnungsfunktion so ausgestaltet sein, dass die gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert. Bevorzugt kann vorgesehen sein, dass die Modifikation des Werkzeuges eine Steigung aufweist, welche in Abhängigkeit von dem Werkzeugdrehwinkel und/oder der Werkzeugbreitenposition linear variiert und die Zahndicke in Abhängigkeit von dem Werkzeugdrehwinkel und/oder der Werkzeugbreitenposition quadratisch variiert.

Bevorzugt sind die Eingabefunktion und die Berechnungsfunktion so ausgestaltet, dass mehrere der soeben genannten Varianten verwirklicht sind. Bevorzugt kann dabei der Benutzer aus mehreren dieser durch die Eingabefunktion und die Berechnungsfunktion zur Verfügung gestellten Varianten auswählen. Bevorzugt stellen die Eingabefunktion und die Berechnungsfunktion dabei mindestens zwei, weiterhin bevorzugt mindestens drei der oben genannten Varianten zur Verfügung.

Bevorzugt sind die erfindungsgemäße Eingabefunktion und die Berechnungsfunktion jeweils so ausgestaltet, dass sie zur Durchführung eines erfindungsgemäßen Verfahrens, wie es oben beschrieben wurde, einsetzbar sind, insbesondere zur Durchführung eines Verfahrens gemäß dem ersten oben beschriebenen Aspekt. Insbesondere erfolgt die Vorgabe bzw. die Berechnung so, wie dies bereits oben im Hinblick auf die erfindungsgemäßen Verfahren näher dargestellt wurde.

Beispielsweise kann die Eingabefunktion dabei so ausgestaltet sein, dass eine gewünschte Modifikation der Oberflächengeometrie des Werkstückes, welches mit dem Werkzeug bearbeitet werden soll, vorgebbar ist, wobei die Eingabefunktion daraus die oben genannten Daten zur gezielten Modifikation der Oberflächengeometrie des Werkzeuges generiert.

Die vorliegende Erfindung umfasst weiterhin ein Softwareprogramm gemäß einem zweiten, unabhängigen Aspekt zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwendigen Einstellung der Bewegungsachsen einer Abrichtmaschine. Die vorliegende Erfindung das Softwareprogramm als solches unter Schutz. In einer möglichen Ausführungsform der vorliegenden Erfindung kann das Softwareprogramm auf einer erfindungsgemäßen Vorrichtung abgearbeitet werden. Das Softwareprogramm kann beispielsweise auf einem Datenträger oder in einem Speicher abgespeichert sein. Bei der Vorrichtung kann es sich insbesondere um einen Computer und / oder eine Maschinensteuerung handeln. Auf diesem bzw. dieser kann bevorzugt das erfindungsgemäße Softwareprogramm ablaufen.

Das Softwareprogramm gemäß dem zweiten Aspekt umfasst eine Eingabefunktion, durch welche eine vorgegebene Modifikation des Abrichters eingebbar und eine gewünschte Position der Modifikation des Abrichters auf dem Werkzeug vorgebbar sind. Bevorzugt ist die Vorgabe der gewünschten Position der Modifikation des Abrichters auf dem Werkzeug durch Zuordnung eines bestimmten Radius des Abrichters zu einem bestimmten Radius des Werkzeuges möglich. Die Vorrichtung bzw. das Softwareprogramm umfasst weiterhin eine Berechnungsfunktion, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen bestimmt.

Bevorzugt sind die Eingabefunktion und die Berechnungsfunktion so ausgestaltet, dass sie zur Durchführung eines Verfahrens gemäß der vorliegenden Erfindung, wie es oben näher beschrieben wurde, eingesetzt werden können. Insbesondere können die Eingabefunktion und die Berechnungsfunktion dabei so ausgestaltet sein, dass sie zur Durchführung des erfindungsgemäßen Verfahrens gemäß dem zweiten Aspekt einsetzbar sind.

Erfindungsgemäß sind die Eingabefunktion und die Berechnungsfunktion so ausgestaltet, dass über die Eingabefunktion die Position der Modifikation auf dem Werkzeug in Abhängigkeit von der Werkzeugbreitenposition vorgebbar ist und die Berechnungsfunktion die notwendige Relativposition zwischen Abrichter und Werkzeug oder die zu deren Bereitstellung notwendigen Einstellungen der Bewegungsachsen als Funktion der Werkzeugbreitenposition bestimmt.

Die vorliegende Erfindung umfasst weiterhin ein Softwareprogramm gemäß einem dritten, unabhängigen Aspekt, zum Berechnen der zur Erzeugung einer gewünschten Modifikation eines Werkzeuges beim Mehrhubabrichten in Linienkontakt mit einem Abrichter notwendigen Relativposition zwischen Abrichter und Werkzeug oder der zu deren Bereitstellung notwendigen Einstellung der Bewegungsachsen der Abrichtmaschine. Die Vorrichtung bzw. das Softwareprogramm gemäß dem dritten Aspekt umfasst eine Mehrhub-Berechnungsfunktion, welche die zum Mehrhubabrichten mit Linienkontakt zwischen Abrichter und Werkzeug not wendigen Einstellungen der Bewegungsachsen bestimmt.

In einer ersten Variante ist eine Eingabefunktion vorgesehen, durch welche die Position, in welcher die in einem ersten Hub erzeugte Modifikation an die mit einem zweiten Hub erzeugte Modifikation anschließt, als eine Funktion der Werkzeugbreitenposition vorgebbar ist.

In einer zweiten Variante ist eine Eingabefunktion und eine Bestimmungsfunktion vorgesehen, wobei durch die Eingabefunktion eine gewünschte Modifikation des Werkzeuges vorgebbar ist, und wobei die Bestimmungsfunktion die zu deren Herstellung notwendigen Hübe bestimmt, wobei die Bestimmungsfunktion die Position, an welcher die in einem ersten Hub erzeugte Modifikation an die mit einem zweiten Hub erzeugte Modifikation anschließt, als eine Funktion der Werkzeugbreitenposition variiert oder bestimmt.

Bei der ersten und der zweiten Variante ist vorgesehen, dass die Mehrhub-Berechnungsfunktion aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt.

Bevorzugt sind die Eingabefunktion, die Berechnungsfunktion und die Steuerungsfunktion so ausgestaltet, dass sie zur Durchführung eines der erfindungsgemäßen, oben beschriebenen Verfahren eingesetzt werden können. Insbesondere sind sie dabei zur Durchführung eines Verfahrens gemäß dem dritten Aspekt ausgestaltet.

Die vorliegende Erfindung stellt die Vorrichtungen bzw. Softwareprogramme gemäß dem ersten, dem zweiten und dem dritten Aspekt jeweils unabhängig voneinander unter Schutz. Weiterhin stellt die vorliegende Erfindung auch eine Kombination der Vorrichtungen bzw. Softwareprogramme gemäß dem ersten, zweiten und/oder dritten Aspekt unter Schutz. Insbesondere kann dabei eine erfindungsgemäße Vorrichtung und / oder ein erfindungsgemäßes Softwareprogramm die Funktionen, welche gemäß dem ersten Aspekt beschrieben wurden, und/oder die Funktionen, welche gemäß dem zweiten Aspekt beschrieben wurden, und/oder die Funktionen, welche gemäß dem dritten Aspekt beschrieben wurden, umfassen. Bevorzugt hat der Anwender dabei die Auswahl, welche der Funktionen eingesetzt werden sollen.

Die vorliegende Erfindung umfasst weiterhin eine Abrichtmaschine gemäß einem ersten, unabhängigen Aspekt, mit einer Werkzeugaufnahme zur Aufnahme des abzurichtenden Werkzeuges und eine Abrichteraufnahme zur Aufnahme des hierzu eingesetzten Abrichters. Die Abrichteraufnahme weist eine Drehachse auf, durch welche der Abrichter in Rotation versetzt werden kann. Weiterhin weist die Abrichtmaschine eine Bewegungsachse auf, durch welche die Werkzeugbreitenposition eines in der Werkzeugaufnahme aufgenommenen Werkzeuges relativ zu einem in der Abrichteraufnahme aufgenommenen Abrichter einstellbar ist. Die vorliegende Erfindung umfasst dabei mehrere Varianten einer Abrichtmaschine gemäß dem ersten Aspekt, welche im Folgenden näher dargestellt werden:

Gemäß einer ersten Variante umfasst die Abrichtmaschine weitere Bewegungsachsen, durch welche mindestens weitere drei oder vier Freiheitsgrade der Relativposition zwischen Werkzeug und Abrichter unabhängig voneinander einstellbar sind, wobei die Abrichtmaschine eine Steuerung aufweist, welche so ausgestaltet ist, dass die Einstellung der weiteren drei oder vier Freiheitsgrade in Linienkontakt mit dem Abrichter unabhängig voneinander als Funktion der Werkzeugbreitenposition angesteuert werden.

Gemäß einer zweiten Variante umfasst die Abrichtmaschine eine Steuerung mit einer Eingabefunktion, durch welche die gewünschte Modifikation des Werkzeuges als Funktion der Werkzeugbreitenposition vorgebbar ist, wobei die Steuerung eine Berechnungsfunktion aufweist, welche aus der gewünschten Modifikation die zu ihrer Erzeugung notwendigen Einstellungen der Bewegungsachsen als Funktion der Werkzeugbreitenposition beim Abrichten mit Linienkontakt zwischen Abrichter und Werkzeug bestimmt, und wobei die Steuerung weiterhin eine Steuerungsfunktion aufweist, welche die entsprechende Einstellung der Bewegungsachsen als Funktion der Werkzeugbreitenposition beim Abrichten mit Linienkontakt zwischen Abrichter und Werkzeug vornimmt.

Gemäß einer ersten Untervariante der zweiten Variante sind die Eingabefunktion, die Berechnungsfunktion und die Steuerungsfunktion so ausgestaltet, dass sie zur Durchführung eines der erfindungsgemäßen Verfahren, wie sie oben beschrieben wurden, einsetzbar sind. insbesondere können die Eingabefunktion, die Berechnungsfunktion und die Steuerungsfunktion zur Durchführung eines Verfahrens gemäß dem ersten Aspekt der vorliegenden Erfindung einsetzbar sein.

In einer zweiten Untervariante der zweiten Variante sind die Eingabefunktion, die Berechnungsfunktion und die Steuerungsfunktion so ausgestaltet, dass die gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung und / oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, wobei die Modifikation durch die von der Steuerungsfunktion vorgenommene Einstellung der Bewegungsachsen der Abrichtmaschine erzeugbar ist.

In einer dritten Untervariante der zweiten Variante können die Eingabefunktion, die Berechnungsfunktion und die Steuerungsfunktion so ausgestaltet sein, dass die gezielte Modifikation der Oberflächengeometrie des Werkzeuges an mindestens zwei Wälzwinkeln als eine Funktion der Werkzeugbreitenposition vorgebbar ist, wobei die Modifikation durch die von der Steuerungsfunktion vorgenommene Einstellung der Bewegungsachsen der Abrichtmaschine erzeugbar ist.

In einer vierten Untervariante der zweiten Variante können die Eingabefunktion, die Berechnungsfunktion und die Steuerungsfunktion so ausgestaltet sein, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Modifikation durch die von der Steuerungsfunktion vorgenommene Einstellung der Bewegungsachsen der Abrichtmaschine erzeugbar ist. Bevorzugt ist die Zuordnung dabei als eine Funktion der Werkzeugbreitenposition vorgebbar.

Gemäß einer fünften Untervariante der zweiten Variante können die Eingabefunktion, die Berechnungsfunktion und die Steuerungsfunktion so ausgestaltet sein, dass die gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist. Bevorzugt kann dabei vorgesehen sein, dass die Koeffizienten-Funktion $F_{FtC,1}$ quadratisch von der Position in der zweiten Richtung abhängt und/oder die Koeffizienten-Funktion $F_{FtL,1}$ linear von der Position in der zweiten Richtung abhängt.

Gemäß einer sechsten Untervariante der zweiten Variante können die Eingabefunktion, die Berechnungsfunktion und die Steuerungsfunktion so ausgestaltet sein, dass die gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert. Bevorzugt kann vorgesehen sein, dass die Modifikation des Werkzeuges eine Steigung aufweist, welche in Abhängigkeit von dem Werkzeugdrehwinkel und/oder der Werkzeugbreitenposition linear variiert und die Zahndicke in Abhängigkeit von dem Werkzeugdrehwinkel und/oder der Werkzeugbreitenposition quadratisch variiert.

Bevorzugt sind die Eingabefunktion, die Berechnungsfunktion und die Steuerungsfunktion der Abrichtmaschine so ausgestaltet, dass sie eine oder mehrere Varianten des oben näher beschriebenen Verfahrens gemäß dem ersten Aspekt zur Verfügung stellen bzw. durchführen.

Bevorzugt umfasst die Abrichtmaschine gemäß dem ersten Aspekt eine Steuerung, welche mehrere und bevorzugt alle der oben genannten Untervarianten zur Verfügung stellt. Insbesondere können dabei die Untervarianten einem Benutzer als separate Funktionen zur Auswahl stehen.

Die vorliegende Erfindung umfasst in einem zweiten, unabhängigen Aspekt eine Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter einstellbar sind, sowie mit einer Steuerung. Insbesondere kann die Steuerung dabei die Bewegungsachsen der Abrichtmaschine ansteuern.

Die Steuerung der Abrichtmaschine gemäß dem zweiten Aspekt umfasst eine Eingabefunktion, durch welche eine vorgegebene Modifikation des Abrichters eingebbar und eine gewünschte Position der Modifikation des Abrichters auf dem Werkzeug vorgebbar sind. Bevorzugt erfolgt die Vorgabe der gewünschten Position der Modifikation des Abrichters auf dem Werkzeug durch Zuordnung eines bestimmten Radius des Abrichters zu einem bestimmten Radius des Werkzeuges. Die Steuerung weist weiterhin eine Berechnungsfunktion auf, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendigen Einstellungen der Bewegungsachsen bestimmt. Weiterhin weist die Steuerung eine Steuerungsfunktion auf, welche die entsprechende Einstellung der Bewegungsachsen beim Abrichten mit Linienkontakt zwischen Abrichter und Werkzeug vornimmt.

Bevorzugt sind die Eingabefunktion, die Berechnungsfunktion und die Steuerungsfunktion so ausgestaltet, dass sie zur Durchführung eines der oben beschriebenen erfindungsgemäßen Verfahren einsetzbar sind. Insbesondere können die Eingabefunktion, die Berechnungsfunktion und die Steuerungsfunktion zur Durchführung eines Verfahrens gemäß dem oben beschriebenen zweiten Aspekt einsetzbar sein.

Erfindungsgemäß sind die Eingabefunktion, die Berechnungsfunktion und die Steuerungsfunktion bevorzugt so ausgestaltet sein, dass über die Eingabefunktion die Position der Modifikation auf dem Werkzeug in Abhängigkeit von der Werkzeugbreitenposition vorgebbar ist und die Berechnungs- und die Steuerungsfunktion die Einstellung der Bewegungsachsen als eine Funktion der Werkzeugbreitenposition vornimmt.

Die vorliegende Erfindung umfasst weiterhin eine Abrichtmaschine gemäß einem dritten, ebenfalls unabhängigen Aspekt, mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter einstellbar sind. Die Abrichtmaschine weist weiterhin eine Steuerung auf, insbesondere eine Steuerung zur Ansteuerung der Bewegungsachsen der Abrichtmaschine. Die Steuerung weist eine Mehrhub-Abrichtfunktion auf, welche einen Abrichtvorgang mit mindestens einem ersten und einem zweiten Hub durchführt, in welchen der Abrichter jeweils in Linienkontakt mit dem Werkzeug steht. Die Mehrhub-Abrichtfunktion kann bevorzugt auch Abrichtvorgänge mit mehr als zwei Hüben durchführen.

Die Steuerung weist in einer ersten Variante eine Eingabefunktion auf, durch welche die Position, an welcher die in einem ersten Hub erzeugte Modifikation an die mit einem zweiten Hub erzeugte Modifikation anschließt, als eine Funktion der Werkzeugbreitenposition vorgebbar ist.

In einer zweiten Variante umfasst die Steuerung eine Eingabefunktion, durch welche eine gewünschte Modifikation des Werkzeuges vorgebbar ist, wobei die Steuerung eine Bestimmungsfunktion zur Bestimmung der zu deren Herstellung notwendigen Hübe aufweist, welche die Position, an welcher die in einem ersten Hub erzeugte Modifikation an die mit einem zweiten Hub erzeugte Modifikation anschließt, als eine Funktion der Werkzeugbreitenposition bestimmt.

Die Steuerung gemäß beiden Varianten kann eine Berechnungsfunktion aufweisen, welche aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt, sowie eine Steuerungsfunktion, welche die entsprechende Einstellung der Bewegungsachsen beim Abrichten mit Linienkontakt zwischen Abrichter und Werkzeug vornimmt.

Bevorzugt sind die Eingabefunktion, die Berechnungsfunktion und die Steuerungsfunktion dabei so ausgestaltet, dass sie zur Durchführung eines der oben beschriebenen erfindungsgemäßen Verfahren einsetzbar sind, insbesondere zur Durchführung eines erfindungsgemäßen Verfahrens gemäß dem dritten Aspekt.

Die vorliegende Erfindung stellt die Abrichtmaschine gemäß dem ersten bis dritten Aspekt dabei unabhängig voneinander unter Schutz. Bevorzugt kombiniert eine erfindungsgemäße Abrichtmaschine jedoch die gemäß dem ersten, zweiten und / oder dritten Aspekt vorhandenen Bedienungsmöglichkeiten und / oder Funktionen.

Weiterhin kann die Abrichtmaschine eine Vorrichtung und/oder einem Softwareprogramm, wie sie oben beschrieben wurden, umfassen.

Die vorliegende Erfindung umfasst weiterhin eine Verzahnmaschine mit einer Abrichtmaschine und/oder einer Vorrichtung und/oder einem Softwareprogramm, wie sie oben beschrieben wurden.

Dabei kann die Verzahnmaschine eine Werkstückaufnahme und eine ggf. zusätzlich zu der Werkzeugaufnahme der Abrichtmaschine vorgesehene Werkzeugaufnahme aufweisen. Weiterhin bevorzugt weist die Verzahnmaschine eine Verzahnbearbeitungssteuerung zur Ansteuerung von Werkstückaufnahme und Werkzeugaufnahme zur Durchführung einer Verzahnbearbeitung auf, insbesondere zur Durchführung eines Verfahrens, wie es oben beschrieben wurde.

Bei der Abrichtmaschine kann es sich um eine Maschine handeln, welche ausschließlich zum Abrichten von Werkzeugen eingesetzt wird und keine zusätzliche Funktionalität zum Bearbeiten von Werkstücken mit solchen Werkzeugen aufweist. Bevorzugt handelt es sich jedoch bei der Abrichtmaschine um eine Kombi-Maschine, welche sowohl eine Bearbeitung von Werkstücken, als auch das Abrichten erlaubt. Insbesondere kann es sich um eine Verzahnmaschine mit einer erfindungsgemäßen Abrichtmaschine handeln, wobei die Verzahnmaschine neben der Abrichtmaschine eine Bearbeitungsmaschine umfasst, über welche eine Verzahnbearbeitung mit dem erfindungsgemäß abgerichteten Werkzeug möglich ist. Gegebenenfalls können dabei die Bearbeitungsmaschine und die Abrichtmaschine einzelne oder mehrere Aufnahmen oder Bewegungsachsen teilen.

Bei der erfindungsgemäßen Verzahnbearbeitung handelt es sich bevorzugt um ein Wälzbearbeitungsverfahren, insbesondere um ein Wälzschleifverfahren. Besonders bevorzugt kommt dabei ein Diagonalwälzverfahren zum Einsatz.

Bei dem Werkzeug, welches erfindungsgemäß abgerichtet bzw. eingesetzt wird, handelt es sich bevorzugt um eine Schleifschnecke. Als Abrichter wird erfindungsgemäß bevorzugt eine Profil- oder Formrolle eingesetzt. Das Abrichten kann dabei einflankig oder zweiflankig erfolgen.

Bevorzugt sind das erfindungsgemäße Verfahren und die erfindungsgemäßen Vorrichtungen bzw. Werkzeuge so ausgestaltet, dass eine evolventische Verzahnung auf dem Werkstück erzeugt wird.

Wie bereits oben beschrieben kann im Rahmen der vorliegenden Erfindung das Abrichten dabei mit einem Linienkontakt zwischen Abrichter und Werkzeug erfolgen, welcher die gesamte Zahnflanke abdeckt. Alternativ kann das Abrichten jedoch auch in mehreren Hüben erfolgen, durch welche unterschiedliche Bereiche der Zahnflanke abgerichtet werden. Hierfür können unterschiedliche Bereiche der Abrichter und / oder unterschiedliche Abrichter für die einzelnen Hübe eingesetzt werden.

Erfindungsgemäß kann die Relativposition des Abrichters zum Werkzeug beim Abrichten mit Linienkontakt gezielt so eingestellt werden, dass sich die Berührlinie zwischen Abrichter und Werkzeug auf dem Abrichter verschiebt, um hierdurch das entlang der Berührlinie aktive, auf das Werkzeug übertragene Profil zu beeinflussen. Bevorzugt wird hierdurch die gewünschte Modifikation auf dem Werkzeug erzeugt. Insbesondere kann dabei die Steigung und/oder Balligkeit entlang der Berührlinie eingestellt bzw. verändert werden. Diese Berührlinie auf dem Werkzeug definiert dabei bevorzugt die erste Richtung der Modifikation auf dem Werkzeug.

Allgemein wird als Steigung der gezielten Modifikation im Sinne der vorliegenden Erfindung die Steigung in einer ersten Richtung des Werkzeuges bezeichnet, welche einen Winkel $\rho_{FS}$ bzw. $\rho_{F1}$ ungleich null zur Werkzeugbreitenrichtung einschließt, und insbesondere einen Anteil in Profilrichtung aufweist, d. h. die Steigung der Modifikation entspricht dem Profilwinkel bzw. eine Profilwinkelabweichung.

Weiterhin wird als Balligkeit der Modifikation im Sinne der vorliegenden Erfindung eine Balligkeit in einer ersten Richtung, welche einen Winkel $\rho_{FS}$ bzw. $\rho_{F1}$ ungleich null zur Werkzeugbreitenrichtung einschließt, bezeichnet, und insbesondere einen Anteil in Profilrichtung aufweist, d. h. die Balligkeit der Modifikation entspricht einer Profilballigkeit.

Die vorliegende Erfindung wird nun anhand von Ausführungsbeispielen und Zeichnungen näher beschrieben.

Kurzbeschreibung der Figuren:

Die Figuren zeigen beispielhaft nur $w$-$z$-Diagramme zylindrischer Verzahnungen. Die $w$-$z$-Diagramme konischer Verzahnungen sind im Allgemeinen nicht rechteckig, meist trapezförmig, da sich der Auswertebereich des Wälzwegs über die Verzahnbreite ändert.

| | |
|---|---|
| Figur 1 | zeigt schematisch einen Abschnitt der Flanke eines Schneckengangs mit Vektoren in Normalenrichtung für eine nicht über die ganze Breite abgerichtete Schnecke. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke der nicht modifizierten Schnecke, auf die die Vektoren gestellt werden. Die Vektoren 1 und 1' wurden bereits von der Berührlinie überstrichen und sind somit vollständig gekürzt. Die Vektoren 2 und 2' wurden bereits mindestens einmal gekürzt, jedoch noch nicht von der Berührlinie überstrichen. Die Vektoren 3 und 3' wurden noch nicht gekürzt und haben somit noch die Länge dem gewählten Aufmaß entsprechend. |
| Figur 2 | zeigt eine topologische Modifikation $f_{nFs}(w_{FS},b_{FS})$ einer Schnecke, mit der Berührline 10 zwischen Abrichter und Schnecke und mit den vier frei vorgebaren Linien $w_{FSi}(b_{FS})$ 11, 12, 13 und 14, entlang derer die Sollmodifikation beim Abrichten exakt erreicht werden soll. |
| Figur 3 | zeigt eine topologische Modifikation $f_{nFS}(w_{FS}, b_{FS})$ einer Schnecke, die mit einem Abrichter abgerichtet wurde, der zum Abrichten von Schnecken ausgelegt wurde, welche beim Wälzschleifen eine lineare Fußrücknahme an der Verzahnung erzeugen. Solche Abrichter weisen auf einen bestimmten Radius einen Knick auf, welcher den Übergang von Hauptprofil zur Fußrücknahme markiert. In der Figur wurde dieser Radius auf dem Abrichter über die Schneckenbreite verschiedenen Radien auf der Schnecke zugeordnet, sodass dieser Knick 15 auf der Schnecke in einem Bogen verläuft. |
| Figur 4 | zeigt am Beispiel einer evolventischen Schnecke beispielhaft eine topologische Modifikation, welche mit der Erfindung beim Abrichten sehr genau angenähert werden kann. Die Modifikation ist definiert als Produkt einer Breiten- und einer Profilballigkeit. |
| Figur 5 | zeigt am Beispiel einer evolventischen Schnecke beispielhaft eine topologische Modifikation, welche mit |

der Erfindung abgerichtet werden kann. Die Modifikation ist definiert als sinusförmige Welle mit von $w_{FS}$ und $b_{FS}$ abhängiger Amplitude, wobei die Amplitude zu den Rändern hin zunimmt.

Figur 6    zeigt am Beispiel einer evolventischen Schnecke und einer damit geschliffenen evolventischen Verzahnung, welche Achskorrekturen $\Delta K$ und welche axiale Position der Schnecke $v_{zS}$ in Abhängigkeit der auf der Verzahnung zu erzeugenden Profilballigkeit $c_{\alpha V}$ einzustellen sind. Die Diagramme zeigen nahezu den ganzen Bereich der mit der gewählten Schnecke und dem gewählten Abrichter auf dieser Verzahnung erzeugbaren Profilballigkeiten.

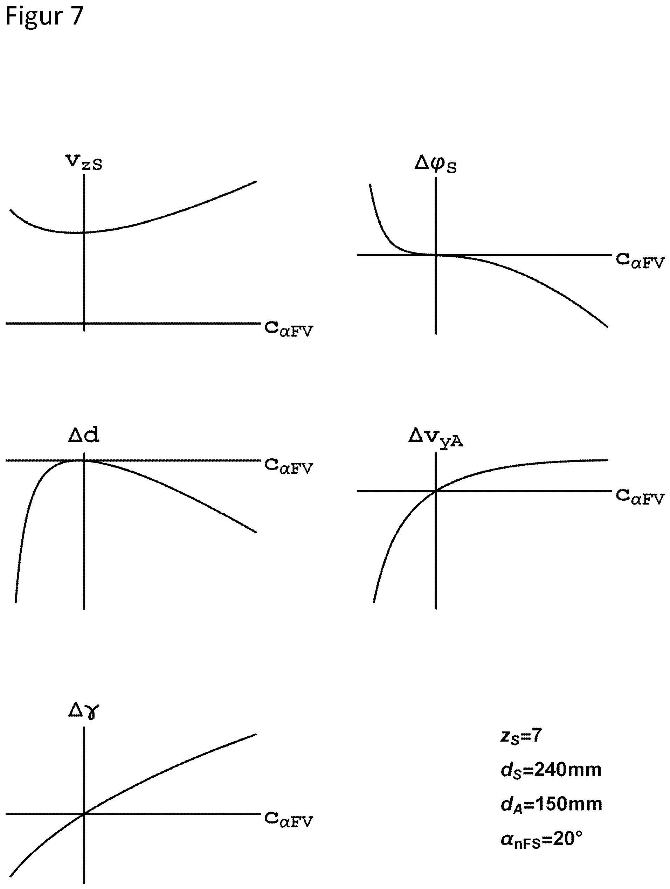

Figur 7    zeigt die gleichen Diagramme wie Figur 6, jedoch auf einen kleineren Bereich der Profilballigkeit $c_{\alpha FV}$ reduziert, um die Verläufe für kleine Profilballigkeiten besser darzustellen.

Figur 8    zeigt Diagramme wie in Figur 7 mit dem selben Bereich der Profilballigkeit $c_{\alpha FV}$, jedoch für verschiedene Schneckendurchmesser $d_s$

Figur 9    zeigt Diagramme wie in Figur 7 mit dem selben Bereich der Profilballigkeit $c_{\alpha FV}$, jedoch für einen anderen Schneckendurchmesser $d_s$ und verschiedene Gangzahlen $z_s$.

Figur 10    zeigt Diagramme wie in Figur 7 mit dem selben Bereich der Profilballigkeit $c_{\alpha FV}$, jedoch für einen anderen Schneckendurchmesser $d_s$ und verschiedene Durchmesser des Abrichters $d_A$.

Figur 11    zeigt Diagramme wie in Figur 7 mit dem selben Bereich der Profilballigkeit $c_{\alpha FV}$ jedoch für einen anderen Schneckendurchmesser $d_s$ und verschiedene Profilwinkel der Schnecke $\alpha_{nFS}$.

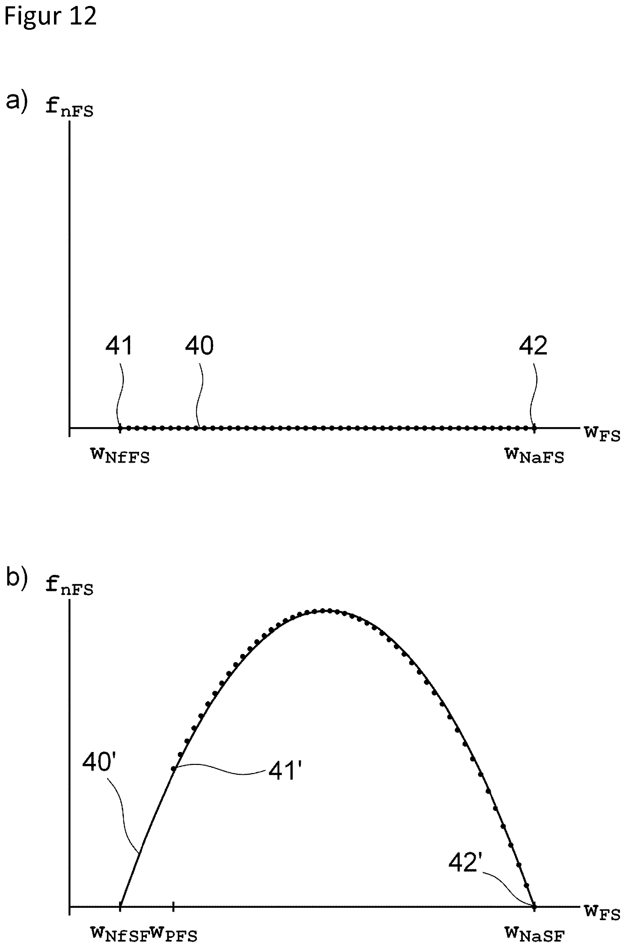

Figur 12    a) zeigt die Profilmodifikation 40 auf einer nicht modifizierten Schnecke, welche mit nicht korrigierter Kinematik mit einem Abrichter abgerichtet wurde, der für ein gerades Profil ohne Profilkorrektur ausgelegt wurde. Die Punkte zeigen die tatsächlich gefertigte Profilmodifikation $f_{nS}$, welche über dem ganzen Profil 0 ist. Jeder dieser Punkte entspricht einem Radius auf dem Abrichter. Die Figur zeigt so, welcher Radius auf dem Abrichter welchen Wälzweg auf der Schnecke abrichtet. Der Abrichter wurde so ausgelegt, dass beim Abrichten mit nicht korrigierter Kinematik, der Punkt 42 am Kopfformkreis $w_{NaFS}$ und der Punkt 41 am Fußformkreis $w_{NfFS}$ liegt.

b) zeigt eine Profilballigkeit (Sollmodifikation) 40' auf einer Schnecke, welche mit dem Abrichter aus a), jedoch mit einer Abrichtkinematik gemäß der 3-Punkt-Methode abgerichtet wurde. Auch hier zeigen die Punkte die tatsächlich gefertigte Profilmodifikation $f_{nFS}$. Die Figur zeigt, dass bei Verwendung der 3-Punkt-Methode und fixieren des Punkts 42' am Kopfformkreis, der zu Punkt 41' passende Radius auf dem Abrichter nicht mehr den Fußformkreis abrichtet, sondern $w_{PS}$. Des Weiteren zeigt die Figur die geringe Abweichung der Punkte von der Sollmodifikation.

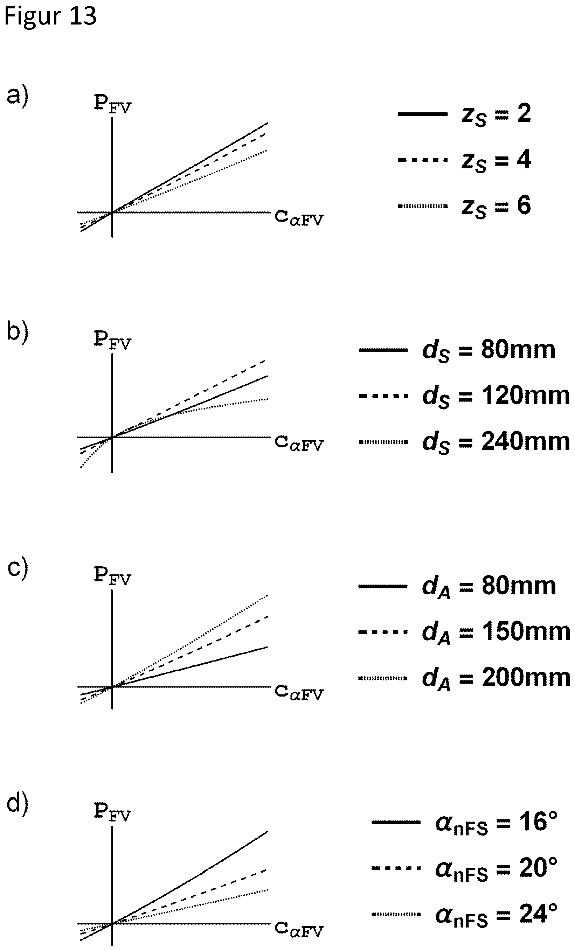

Figur 13    zeigt die Abhängigkeit der relativen Profilstreckung $P_{FV}$ von der mit der 3-Punkt-Methode erzeugten Balligkeit auf der Verzahnung $c_{\alpha FV}$ für

a) verschiedene Gangzahlen der Schnecke $z_S$,
b) verschiedene Durchmesser der Schnecke $d_S$,
c) verschiedene Durchmesser des Abrichters $d_A$ und
d) verschiedene Profilwinkel der Schnecke $\alpha_{nFS}$.

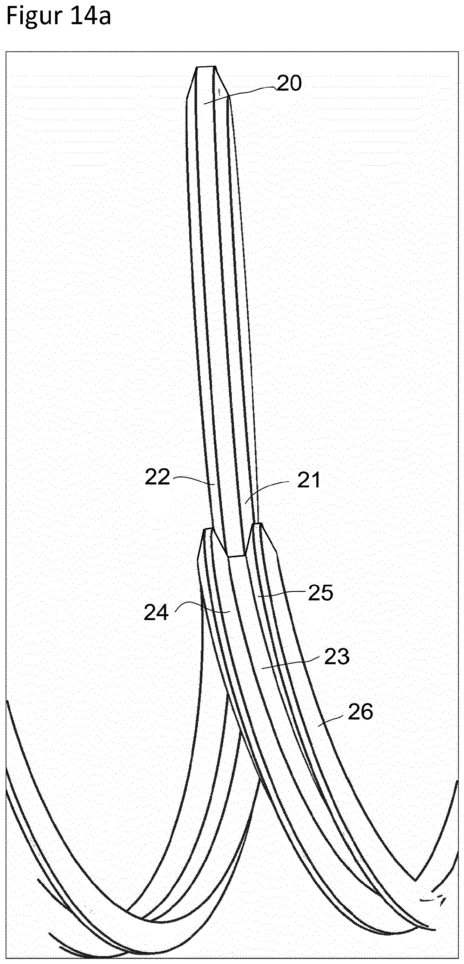

Figur 14a    zeigt zwei benachbarte Schneckengänge einer mehrgängigen Schnecke und einen Abrichter, mit einer relativen Lage, wie sie dem einflankigen Abrichten nach dem Stand der Technik entspricht. Die linke Flanke 24 des ersten Schneckengangs wird mit der linken Flanke 22 des Abrichters abgerichtet. Die äußere Mantelfläche 20 des Abrichters richtet den Zahngrund 23 zwischen den beiden Gängen zu einem großen Teil ab. Die rechte Flanke 25 des zweiten Schneckengangs und die rechte Flanke 21 des Abrichters berühren und durchdringen sich nicht.

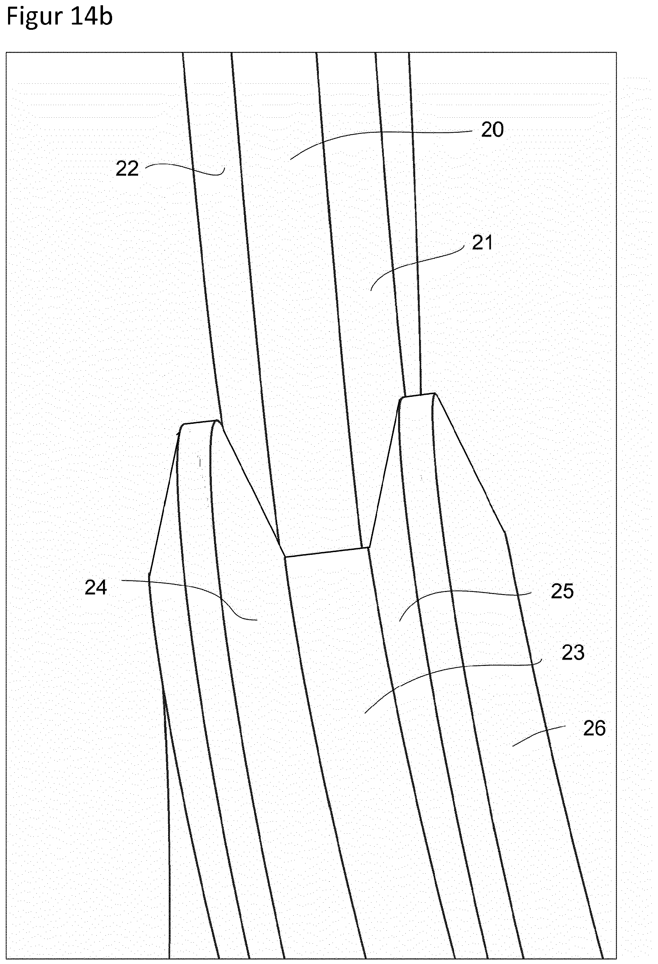

Figur 14b    zeigt einen vergrößerten Ausschnitt aus Figur 14a.

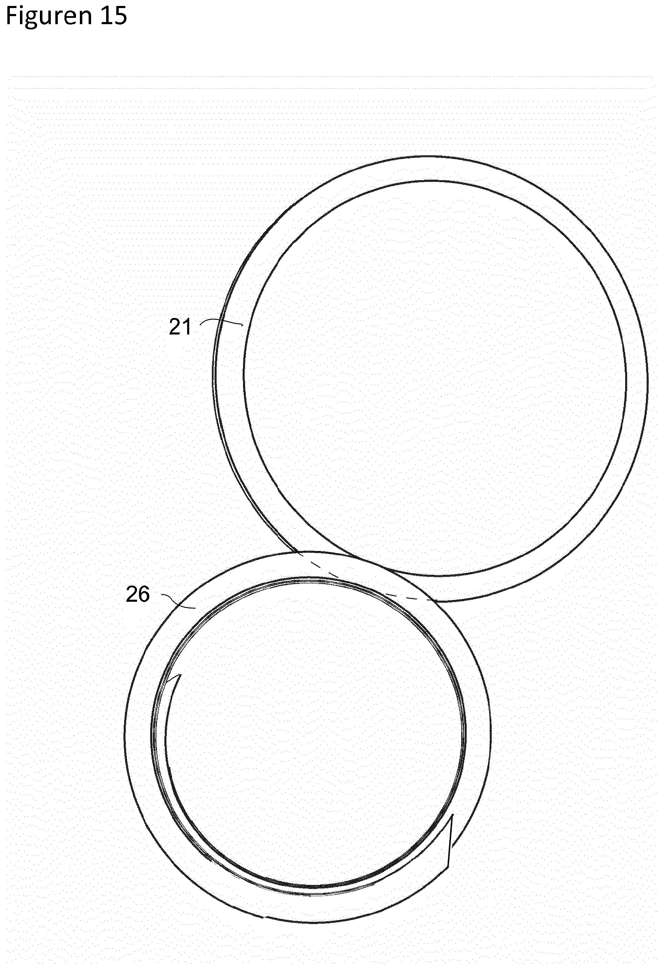

Figur 15    zeigt dieselbe Situation wie Figur 14a, jedoch aus einem anderen Blickwinkel.

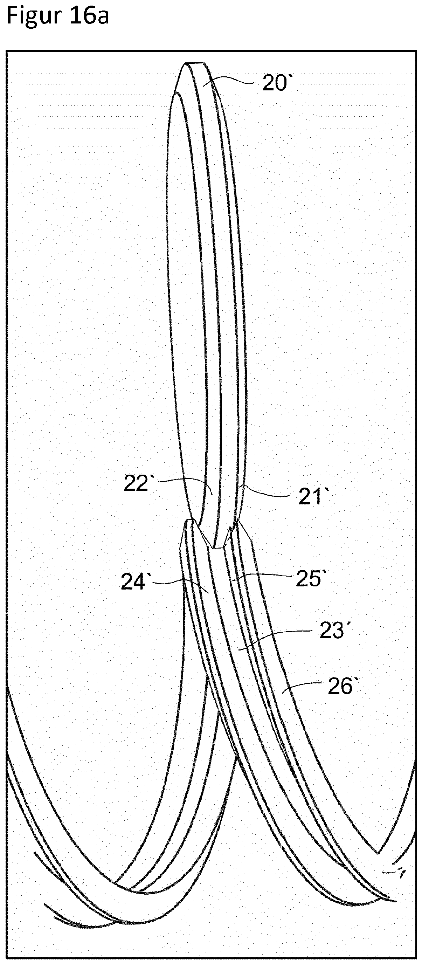

Figur 16a    zeigt dieselben zwei benachbarten Schneckengänge und denselben Abrichter aus Figur 14a. Die relative Lage entspricht der der 3-Punkt-Methode zur Erzeugung einer Profilballigkeit auf der Schnecke. Die linke Flanke 24' des ersten Schneckengangs wird mit der linken Flanke 22' des Abrichters abgerichtet. Die äußere Mantelfläche 20' des Abrichters durchdringt den Zahngrund 23' zwischen den beiden Gängen. Die rechte Flanke 21' des Abrichters durchdringt die rechte Flanke.

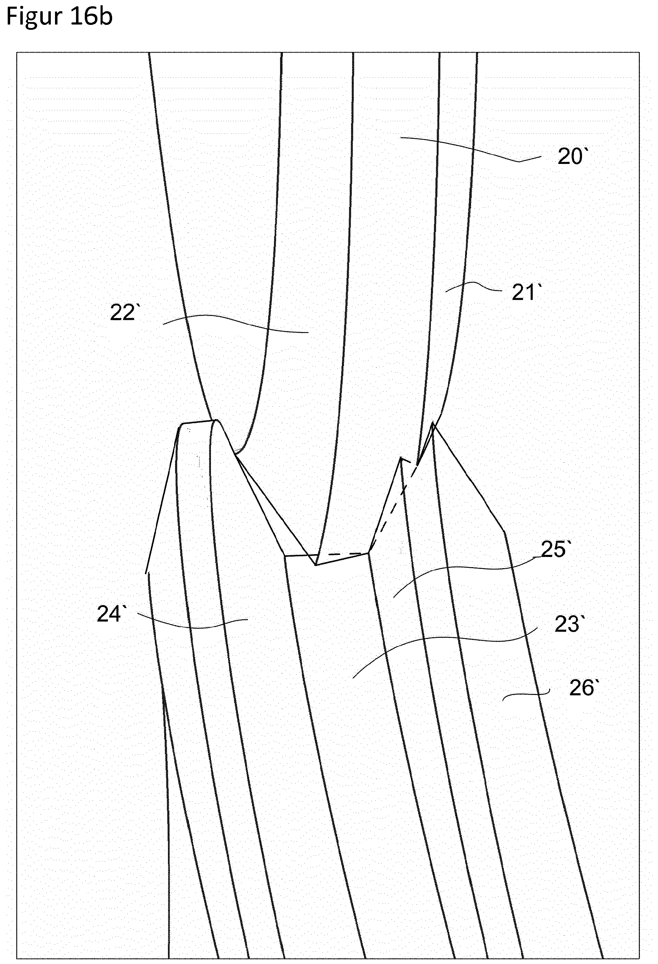

Figur 16b    zeigt einen vergrößerten Ausschnitt aus Figur 16a.

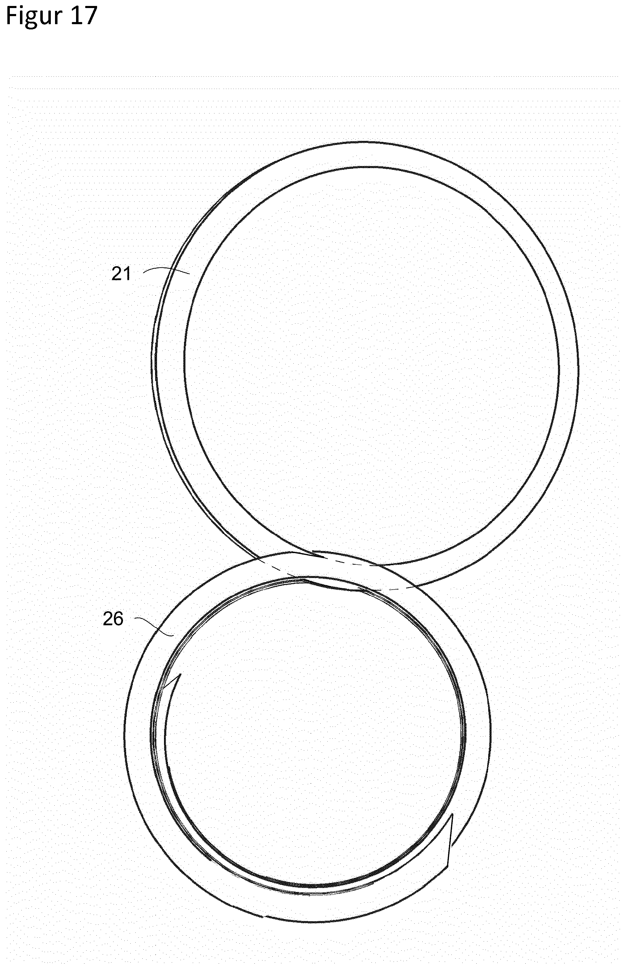

Figur 17    zeigt dieselbe Situation wie Figur 16a, jedoch aus einem anderen Blickwinkel. Aus diesem Blickwinkel ist das Eindringen der äußeren Mantelfläche 20' in die Schnecke unterhalb des Zahngrunds 23' zu erkennen.

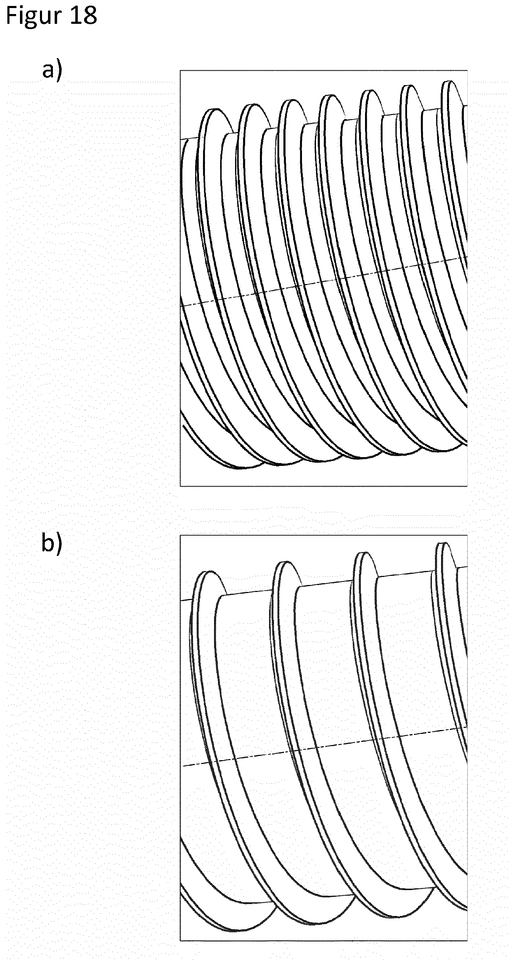

Figur 18a    zeigt beispielhaft eine zweigängige Schnecke, wie diese gemäß dem Stand der Technik eingesetzt wird.

Figur 18b    zeigt eine Schnecke, die analog zu der aus Figur 18a ausgelegt wurde, in der jedoch ein Gang ausgespart wurde.

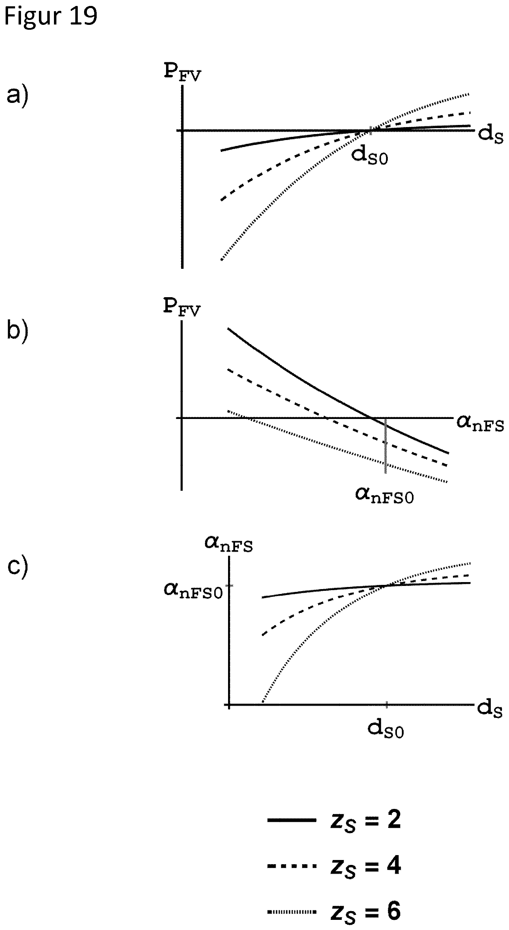

Figur 19    zeigt am Beispiel evolventischer Schnecken mit kleinen Durchmessern, welche mit der 3-Punkt-Methode mit einem Abrichter, welcher für den Durchmesser der Schnecke $d_{S0}$ und den Profilwinkel der Schnecke $\alpha_{nFS0}$ ausgelegt wurde, für verschiedene Gangzahlen $z_S$

       a) den Verlauf der relativen Profilstreckung auf der Verzahnung $P_{FV}$ abhängig vom aktuellen Schneckendurchmesser $d_S$,
       b) den Verlauf der relativen Profilstreckung auf der Verzahnung $P_{FV}$ abhängig vom Profilwinkel der Schne-cke $\alpha_{nFS}$ für einen Schneckendurchmesser, welcher unterhalb $d_{S0}$ liegt,
       c) den Verlauf des Profilwinkels der Schnecke $\alpha_{nFS}$, für den die relative Profilstreckung 0 ist.

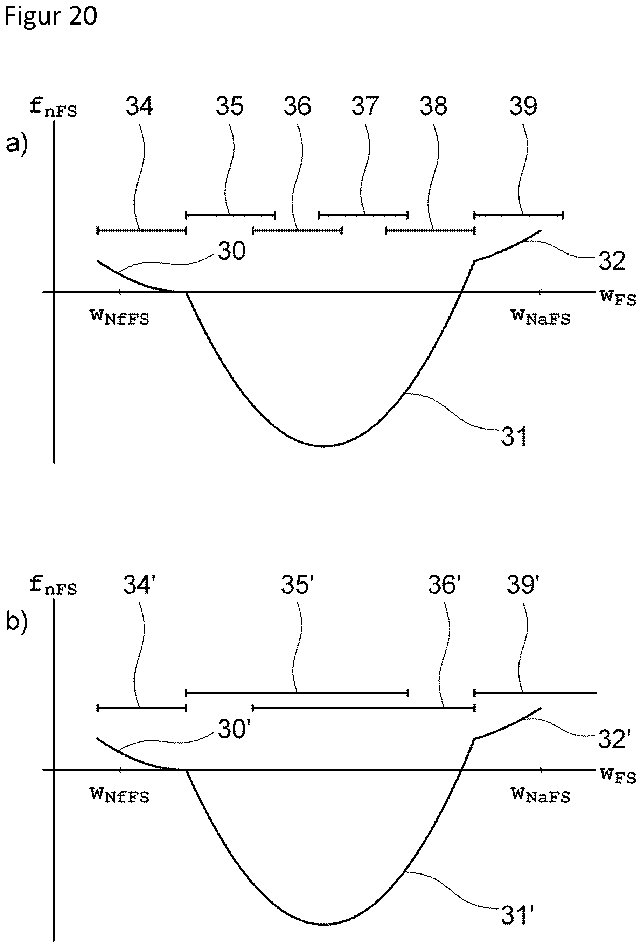

Figur 20a    zeigt eine Profilmodifikation $f_{nFS}$, welche durch mehrere Hübe unter Verwendung eines Abrichters mit einem kleinen aktiven Bereich auf der Schnecke aufgebracht wurde. Die Profilmodifikation hat einen Bereich 30, welcher eine Kopfrücknahme auf der Verzahnung erzeugt, einen Bereich 32, welcher eine Fußrücknahme auf der Verzahnung erzeugt und ein Hauptprofil 31. Alle diese Bereiche haben eine Winkelkorrektur und eine Balligkeit. 34, 35, 36, 37, 38, 39 kennzeichnen die Bereiche, welche während der einzelnen Hübe abgerichtet wurden.

Figur 20b    zeigt dieselbe Profilmodifikation $f_{nFS}$ wie Figur 20a, welche hier durch mehrere Hübe unter Verwendung eines Abrichters mit mehreren aktiven Bereichen auf der Schnecke aufgebracht wurde. Die Profilmodifikation hat einen Bereich 30', welcher eine Kopfrücknahme auf der Verzahnung erzeugt, einen Bereich 32', welcher eine Fußrücknahme auf der Verzahnung erzeugt und ein Hauptprofil 31'. Alle diese Bereiche haben eine Winkelkorrektur und eine Balligkeit. 34', 35', 36',39' kennzeichnen die Bereiche, welche während der einzelnen Hübe abgerichtet wurden.

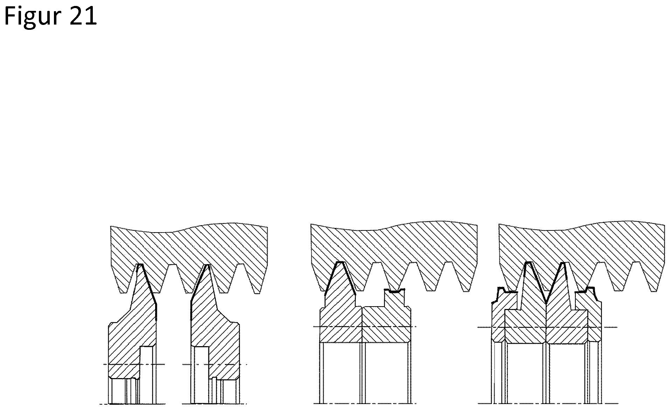

Figur 21    zeigt beispielhaft 3 mögliche Abrichtervarianten, welche beim Einsatz des hier beschriebenen Verfahrens eingesetzt werden können. Die Figur zeigt die Abrichter beim einflankigen Abrichten. Ein zweiflankiges Abrichten ist mit diesen bei Anwendung des hier beschriebenen Verfahrens ebenso möglich. Die Abrichter können optional als Kombiabrichter, welche neben der Flanke auch den Kopf der Schnecke abrichten können, ausgeführt sein.

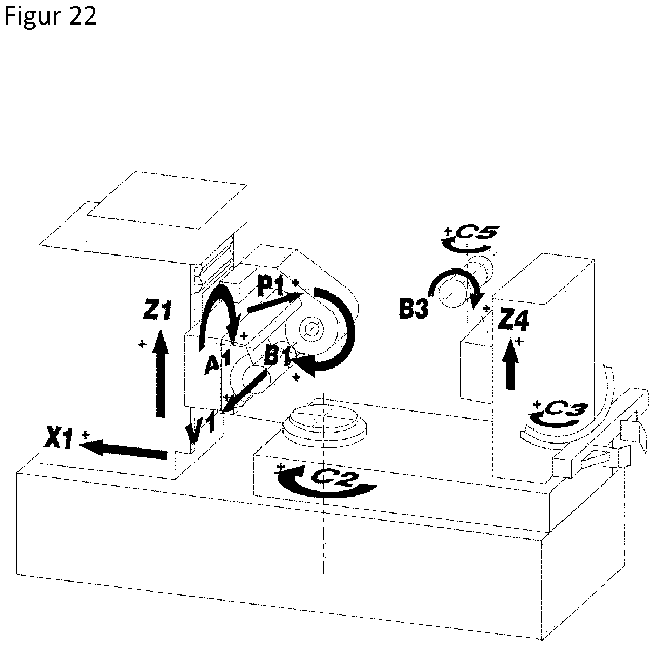

Figur 22    zeigt beispielhaft eine Verzahnmaschine auf der die Erfindung angewendet werden kann.

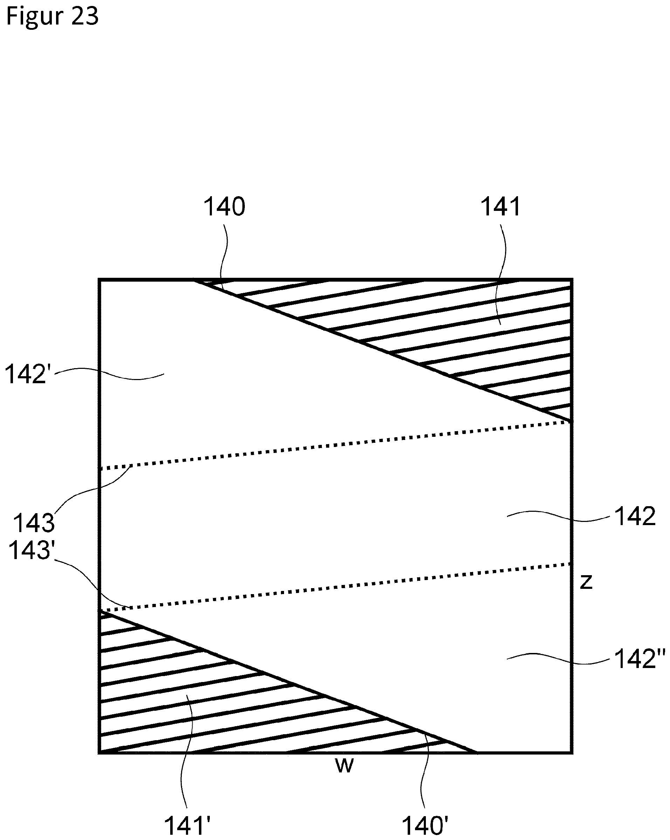

Figur 23    zeigt ein w-z-Diagramm einer Modifikation, bestehend aus gemäß Gleichung (25) modifizierten Bereichen 141 und 141', sowie aus nicht modifizierten Bereichen 142, 142' und 142". Die Geraden 140 und 140' verlaufen in der durch $\rho_{F2}$ gegebenen Richtung. Die Geraden 143 und 143' entsprechen dem Verlauf des Kontaktpunkts.

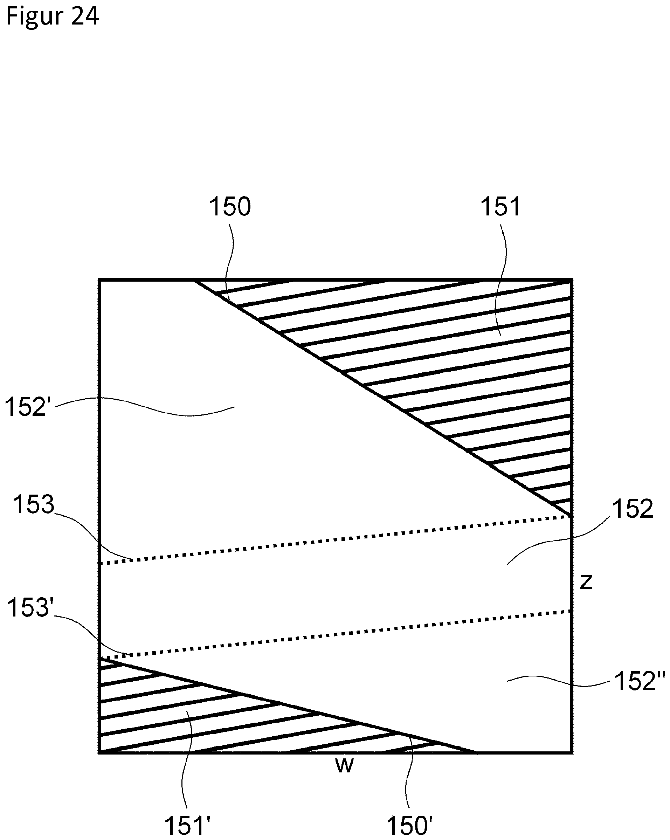

Figur 24    zeigt ein *w-z*-Diagramm einer Modifikation, bestehend aus gemäß Gleichung (25) modifizierten Bereichen 151 und 151', sowie aus nicht modifizierten Bereichen 152, 152' und 152". Die Bereiche 151 und 151' haben Modifikationen mit unterschiedlichen Richtungen $\rho_{F2}$. Die Geraden 150 und 150' verlaufen in der durch die jeweiligen $\rho_{F2}$ gegebene Richtung. Die Geraden 153 und 153' entsprechen dem Verlauf des Kontaktpunkts.

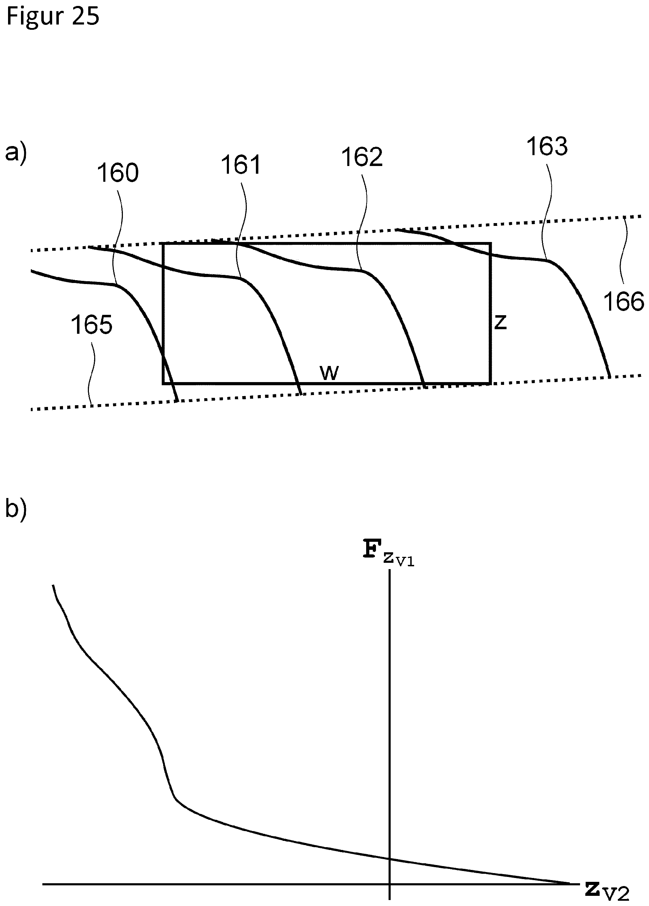

Figur 25    Figur 25a zeigt am Beispiel einer rechten Flanke eines rechtsschrägen zylindrischen Werkstücks vier Kurven 160-163, welche jeweils den Verlauf der Punkte im *w-z*-Diagramm auf dem Werkstück beschreiben, welche auf eine Gerade auf der Schnecke abgebildet werden. Die vier Kurven entsprechen vier verschie-denen Werten $X_{F1}$ und somit vier verschiedenen Geraden auf der Schnecke. Die Kurven sind gegeneinander entlang der parallelen Geraden 165 bzw. 166 verschoben. Figur 25b zeigt, passend zu Figur 25a, die Funktion $F_{ZV1}(z_{V2})$, welche die Abhängigkeit von $z_{V1}$ von $z_{V2}$ beschreibt.

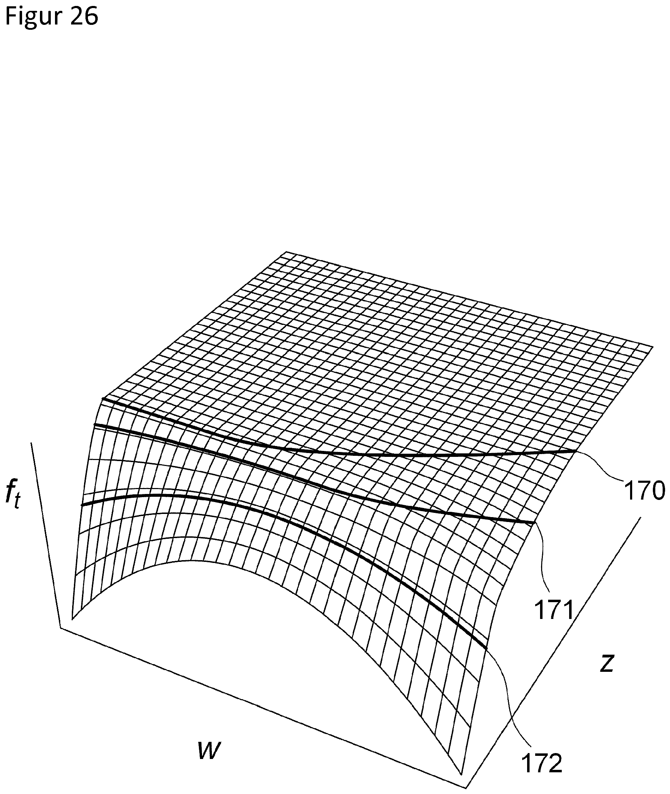

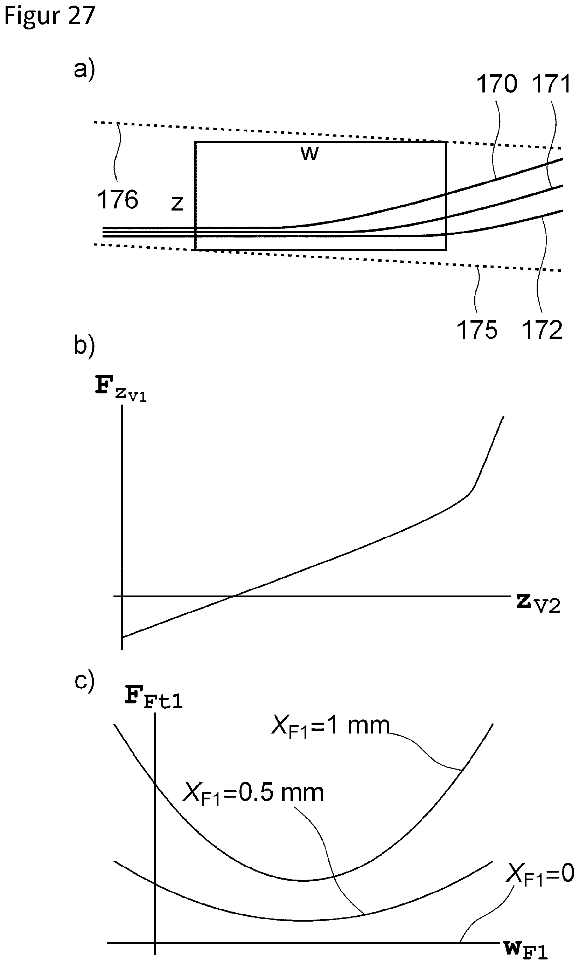

Figur 26    zeigt ein w-z-Diagramm einer rechten Flanke eines linkschrägen zylindrischen Werkstücks, auf welches eine Modifikation mittels variablen Diagonalverhältnisses aufgebracht wurde. Linie 170 markiert den Verlauf der Punkte, welche auf die durch $X_{F1} = 0$ definierte Gerade auf der Schnecke abgebildet werden. Line 171 markiert den Verlauf der Punkte, welche auf die durch $X_{F1} = 0.5$ *mm* definierten Gerade auf der Schnecke abgebildet werden. Line 172 markiert den Verlauf der Punkte, welche auf die durch $X_{F1} = 1.0$ *mm* definierten Gerade auf der Schnecke abgebildet werden. Die Modifikationen entlang der jeweiligen Verläufe sind in Figur 27c dargestellt.

Figur 27    Figur 27a zeigt, in einem Schema wie in Figur 25, die Verläufe 170-172 der Punkte auf dem Werkstück, welche in dem Beispiel aus Figur 26 auf die durch $X_{F1} = 0$, $X_{F1} = 0.5$ *mm* bzw. $X_{F1} = 1.0$ *mm* definierten Geraden auf der Schnecke abgebildet werden. Die Geraden 175 bzw. 176 definieren die Richtung, entlang der die Verläufe für verschiedene $X_{F1}$ gegeneinander verschoben werden.

       Figur 27b zeigt die im Beispiel in Figur 26 verwendete Funktion $F_{ZV1}(z_{V2})$, welche die Abhängigkeit von $z_{V1}$ von $z_{V2}$ beschreibt.
       Figur 27c zeigt die Modifikationen entlang der 3 Verläufe aus dem Beispiel in Figur 26.

| Figur 28 | zeigt die im Beispiel in Figur 26 verwendeten Funktionen $F_{Ft10}(X_{F1})$, $F_{Ft11}(X_{F1})$ und $F_{Ft12}(X_{F1})$, welche die Modifikation auf der Schnecke gemäß Gleichung (25) definieren. |
|---|---|
| Figur 29 | zeigt in einem $w$-$z$-Diagramm die additive Überlagerung einer Profil- und einer Flankenlinienballigkeit und einer linearen dreiecksförmigen Endrücknahme ohne Übergangsbereich, wie diese mit dem hier beschriebenen Verfahren gefertigt werden kann. Line 120 markiert einen Kontaktpfad. Line 121 markiert eine Gerade auf dem Werkstück, welche auf eine Gerade auf der Schnecke abgebildet wird. Im Bereich 128 sind nur die beiden Balligkeiten überlagert, im Bereich 127 zusätzlich die dreiecksförmige Endrücknahme. |
| Figur 30 | zeigt in einem $w$-$z$-Diagramm den Anteil der Modifikation aus Figur 29, der über die Modifikation auf der Schnecke durch das Diagonalschleifen auf das Werkstück übertragen wird. Bereich 28' markiert den Bereich, der zur Erzeugung der Balligkeiten beiträgt, 127 den Bereich, welcher zusätzlich zur Erzeugung der dreiecksförmigen Endrücknahme beiträgt. 123', 124 und 125 markieren Geraden in w und z, welche auf Geraden in $w$ und $z$ auf der Schnecke abgebildet werden. Die Modifikationen entlang der jeweiligen Geraden sind linear in $w$. |
| Figur 31 | zeigt in einem $w$-$z$-Diagramm den Anteil ($F_{KFt}$) der Modifikation aus Figur 29 der über die Schleifkinematik erzeugt wird. Der Bereich 128", welcher der einzige Bereich ist, trägt nur zur Erzeugung der Balligkeiten bei. Die Linien 120", 121 und 122 markieren den Kontakpfad für verschiedene Vorschubpositionen. Entlang dieser Linien ist die Modifikation jeweils konstant. |
| Figur 32 | zeigt in einem $w$-$z$-Diagramm die obere und untere einhüllende Fläche der Welligkeit aus Figur 33. |
| Figur 33 | zeigt in zwei $w$-$z$-Diagramm aus verschiedenen Blickrichtungen eine Welligkeit, deren Amplitude zum Rand der Flanke hin zunimmt. |
| Figur 34 | zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983) |
| Figur 35 | zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig) |
| Figur 36a | zeigt beispielhaft eine zylindrische Schnecke. |
| Figur 36b | zeigt beispielhaft eine konische Schnecke. |
| Figur 37 | zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht. |
| Figur 38 | zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 104 entspricht der im Allgemeinen gekrümmten Flanke des nicht modifizierten Werkstücks, auf die die Vektoren gestellt werden. Die Vektoren 101 und 101' wurden bereits vom Kontaktpfad überstrichen und sind somit vollständig gekürzt. Die Vektoren 102 und 102' wurden bereits mindestens einmal gekürzt, jedoch noch nicht vom Kontaktpfad überstrichen. Die Vektoren 103 und 103' wurden noch nicht gekürzt und haben somit noch die Länge dem gewählten Aufmaß entsprechend. |

## 1. Beschreibung Abrichten der Schnecke

Der erste Teil der Erfindung betrifft ein Verfahren zum Abrichten von Werkzeugen zur Verzahnbearbeitung, und wird im Folgenden anhand von Schnecken zum Wälzschleifen näher beschrieben Die Schnecken können symmetrisch oder asymmetrisch sein und sie können zylindrisch oder konisch sein. Sie können alle Profile aufweisen, die zum Wälzschleifen wälzbarer Verzahnungen geeignet sind, insbesondere können die Schnecken evolventische Profile haben.

Zum Abrichten von Schnecken sind im Wesentlichen zwei Verfahren bekannt. Zum einen das Abrichten mit einer Profilrolle, die das Abrichten des ganzen Profils, von Kopf bis Fuß in einem Hub erlaubt. Dieses Verfahren führt, insbesondere dann, wenn es zweiflankig eingesetzt wird, zu kurzen Abrichtzeiten. Ein Nachteil dieses Verfahrens ist jedoch, dass bei einem gegebenen Abrichter die Profilform nur noch eingeschränkt während des Abrichtprozesses beeinflusst werden kann. So können gemäß dem Stand der Technik nur die Profilwinkel über die Abrichtkinematik beeinflusst werden. Insbesondere ist eine Beeinflussung der Profilballigkeit (Höhenballigkeit) über die Abrichtkinematik bisher nicht möglich.

Eine weitere Methode zum Abrichten ist das Zeilenabrichten. Im Gegensatz zum Abrichten mit einer Profilrolle wird hier pro Hub nur ein kleiner Teil des Profils abgerichtet, was eine Vielzahl von Hüben erfordert, um das Profil von Kopf bis Fuß abzurichten, wodurch dieses Verfahren sehr unwirtschaftlich wird. Es bietet jedoch die Möglichkeit, über die Kinematik beim Abrichten die Profilform in gewissen Grenzen frei vorzugeben. Wird ein Abrichter mit einem kreis- oder ellipsenförmigen Profil verwendet, kann das Profil sehr flexibel gestaltet werden, aufgrund der kleinen Kontaktfläche sind jedoch sehr viele Hübe nötig und das Profil weist eine hohe Rauhigkeit auf. Werden Abrichter mit kurzer, gerader Profilform genutzt, so lässt sich die Zahl der Hübe zwar reduzieren, Profilmodifikationen wie beispielsweise Profilballigkeiten lassen sich jedoch nur grob annähern, wodurch Formabweichungen entstehen.

Um die Zusammenhänge mathematisch zu formulieren werden folgende Definitionen gemacht:
Größen zur Beschreibung eines Abrichters werden mit dem Index $A$, Größen zur Beschreibung einer Schnecke mit dem Index $S$ und Größen zur Beschreibung einer Verzahnung mit dem Index $V$ versehen. In den Bespielen, in denen evolventische Schnecken und Verzahnungen betrachtet werden, werden die aus der DIN3960 bekannten Größen Grundkreisradius $r_b$, Grundmodul $m_b$, Grundschrägungswinkel $\beta_b$ verwendet. Da die hier beschriebenen Zusammenhänge allgemein für asymmetrische Verzahnungen gelten, werden Größen, die auf linker und rechter Flanke unterschiedlich sein können, mit dem Index $F$ versehen. Profilballigkeiten können sowohl negativ als auch positiv sein.

Für Transformationen werden folgende Bezeichnungen verwendet:

- $R_x(\varphi)$ Rotation um den Winkel $\varphi$ um die $x$-Achse. Analog für $y$ und $z$
- $T_x(v)$ Translation um die Strecke $v$ in $x$-Richtung. Analog für $y$ und $z$
- $H(A_1, ..., A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse der Schnecke bzw. des Abrichters fällt in den jeweiligen Ruhesystemen immer mit der $z$-Achse zusammen.

Weiterhin wichtig für die Formulierung der Zusammenhänge ist es, die kinematische Kette, welche die Relativstellungen zwischen Schnecke und Abrichter beschreibt, zu definieren.

Die relative Lage zwischen Schnecke und Abrichter wird durch die folgende kinematische Kette $K_R$ beschrieben:

$$K_R = R_z(-\varphi_S) \cdot T_z(-v_{zS}) \cdot R_x(-\gamma) \cdot T_x(-d) \cdot T_y(v_{yA}) \cdot R_z(\varphi_A) \tag{1}$$

- $\varphi_S$: Drehwinkel Schnecke
- $\varphi_A$: Drehwinkel Abrichter
- $v_{yA}$: $y$-Position des Abrichters
- $v_{zS}$: Axiale Position der Schnecke
- $d$: Achsabstand
- $\gamma$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1, ..., B_{N_s}) \text{ mit } N_s \geq 1 \tag{2}$$

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1, ..., B_{NS}$ existieren, mit

$$H(B_1, ..., B_{N_s}) = K_R \tag{3}$$

Die Berechnung der Koordinaten $B_1, ..., B_{NS}$ kann mittels einer Koordinatentransformation durchgeführt werden.
Typische Bewegungsapparate, die alle geforderten Relativstellungen ermöglichen, sind beispielsweise durch folgende kinematischen Ketten beschrieben:

$$H_{Bsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \qquad (4)$$

$$H_{Bsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \qquad (5)$$

Eine Verzahnmaschine, welche einen Bewegungsapparat wie in diesen beiden Beispielen aufweist, ist in Figur 22 gezeigt. Der Index B1, V1, A1, X1, Z1, C5, B3 in Formeln (4) und (5) bezieht sich jeweils auf die dort dargestellten Maschinenachsen.

Figur 22 zeigt eine perspektivische Ansicht einer Verzahnmaschine mit einer Abrichtmaschine, welche zur Durchführung der erfindungsgemäßen Verfahren einsetzbar ist. Die Verzahnmaschine weist einen links dargestellten Bearbeitungskopf mit einer Werkzeugaufnahme, eine mittig dargestellte Werkstückaufnahme und eine rechts schematisch dargestellte Abrichteraufnahme auf. Zur Durchführung einer Verzahnbearbeitung kann ein in der Werkstückaufnahme eingespanntes Werkstück durch ein in der Werkzeugaufnahme eingespanntes Werkzeug bearbeitet werden. Zur Durchführung eines Abrichtverfahrens kann das in der Werkzeugaufnahme eingespannte Werkzeug durch einen in der Abrichteraufnahme eingespannten Abrichter bearbeitet werden. Dies hat den Vorteil, dass das Werkzeug zum Abrichten in der Werkzeugaufnahme verbleiben kann. Weiterhin können die Bewegungsachsen des Bearbeitungskopfes zur Einstellung der Relativposition von Werkzeug und Abrichter beim Abrichter eingesetzt werden.

Die Verzahnmaschine weist dabei die Bewegungsachsen A1, B1, V1, X1, Z1 zum Bewegen der Werkzeugaufnahme, C2 zum Bewegen der Werkstückaufnahme und B3, C5 zum Bewegen des Abrichters auf.

Im Einzelnen ermöglicht B1 eine Rotation des Werkzeugs um seine Drehachse, X1 eine translatorische Bewegung des Werkzeugs senkrecht zur Drehachse des Werkzeugs bzw. Werkstücks, Z1 eine translatorische Bewegung des Werkzeugs in vertikaler Richtung bzw. parallel zur Drehachse des Werkstücks, A1 eine Schwenkbewegung des Werkzeugs, V1 eine Tangentialbewegung bzw. Shiftbewegung des Werkzeugs in Richtung seiner Drehachse, C2 eine Drehbewegung des Werkstücks, B3 eine Rotationsbewegung des Abrichtwerkzeugs um seine Drehachse, sowie C5 eine Schwenkbewegung des Abrichtwerkzeugs zur Änderung des Eingriffswinkels $\alpha$ am Werkzeug.

Es können jedoch auch andere Verzahn- und/oder Abrichtmaschinen zur Durchführung der erfindungsgemäßen Verfahren eingesetzt werden.

Die Idee der Erfindung liegt darin, während des Abrichtprozesses die 5 Freiheitsgrade $\varphi_S$, $v_{zS}$, $y$, $d$ und $v_{yA}$ aus Gleichung (28) zu betrachten, um die Profilform der Schnecke zu beeinflussen. Aufgrund der Rotationssymmetrie des Abrichters, spielt der Freiheitsgrad $\varphi_A$ bei der hier vorgenommenen Betrachtung keine Rolle.

Bei den bisher bekannten Verfahren werden nur bis zu 4 der vorhandenen Freiheitsgrade während des Abrichtens genutzt. So ist aus der EP1995010A1 ein Verfahren bekannt, bei dem durch Änderung des Achsabstands $d$ eine Schnecke über ihre Breite ballig abgerichtet wird (Flankenlinienballigkeit). Aus der DE 19706867A1 ist ein Verfahren bekannt, bei dem mit einer kinematischen Kette ähnlich dem Beispiel aus Gleichung (4) mit $\varphi_{A1} = 0$ durch stetige Änderung von $\varphi_{C5}$, $v_{V1}$ und $v_{X1}$ eine Schnecke mit über die Breite verändertem Profilwinkel hergestellt werden kann. Gleiches wird in DE102006061759A1 mit einer kinematischen Kette wie in Gleichung (5) mit $\varphi_{B1}$, $v_{V1}$, $\varphi_{A1}$, $v_{X1}$ und $v_{Z1}$ beschrieben. Auch wenn hier 5 Achsen bewegt bzw. korrigiert werden, so sind es nur die 3 Freiheitsgrade $\varphi_{C5}$, $v_{V1}$ und $v_{X1}$ aus Gleichung (4), die variiert werden. Die Positionen der 5 bewegten Achsen folgen bei gegebenen $\varphi_{C5}$, $v_{V1}$ und $v_{X1}$ aus einer Koordinatentransformation. Aufgrund der Ähnlichkeit zu dem Verfahren aus der DE19706867A1, lässt sich mit der DE102006061759A1 ebenfalls nur der Profilwinkel über die Schneckenbreite modifizieren.

In der DE102005030846A1 wird bereits, analog zur DE102006061759A1, aufgezeigt, wie mit den Achsen $\varphi_{B1}$, $v_{V1}$, $\varphi_{A1}$, $v_{X1}$ und $v_{Z1}$ aus Gleichung (5) der Profilwinkel einer Schnecke über die ganze Breite konstant modifiziert werden kann. Auch hier werden wieder nur 3 Freiheitsgrade variiert und die Positionen der bewegten Achsen ergeben sich aus einer Koordinatentransformation.

Beim Abrichten einer Schnecke wird typischerweise deren axiale Position $v_{zS}$ über die Steigungshöhe an den Drehwinkel der Schnecke $\varphi_S$ gekoppelt. Dadurch überstreicht die Berührlinie zwischen Schnecke und Abrichter den abzurichtenden Teil der Schnecke. Wird eine Schnecke über ihre Breite nicht modifiziert abgerichtet, werden die übrigen Koordinaten $d$, $v_{yA}$ und $\gamma$ auf feste Werte eingestellt und während des Abrichtens nicht verfahren. Typischerweise werden diese Koordinaten auf jene Werte eingestellt, die bei der Auslegung des Abrichters angenommen wurden. Wählt man Werte für diese Koordinaten, welche nicht denen der Abrichterauslegung entsprechen, so ist es möglich, die Schnecke modifiziert abzurichten. Die erzielbaren Formen der Modifikationen hängen von der Anzahl der genutzten Freiheitsgrade ab. Modifikationen auf den Flanken des Schneckengangs, definiert in Normalenrichtung auf der Flanke, werden hier mit

$$f_{nFS}(w_{FS}, b_{FS}) \qquad (6)$$

bezeichnet, wobei $b_{FS}$ die Position in Breitenlinienrichtung ist. $w_{FS}$ ist bei evolventischen Profilen der Wälzweg (auch als Wälzlänge bezeichnet), bei nicht evolventischen Profilen ein Parameter zur Parametrisierung des Profils. Im Folgenden wird jedoch auch für nicht evolventische Verzahnungen der Begriff Wälzweg verwendet.

Da die axiale Position $v_{ZS}$ der Schnecke nur dafür verantwortlich ist, die Berührlinie über die Schneckenbreite zu verschieben, kann diese Koordinate für eine Beeinflussung der Modifikation entlang der Berührlinie nicht genutzt werden. Somit stehen zur Erzeugung von Modifikationen die folgenden 4 Freiheitsgrade zur Verfügung: $\varphi_S$, $y$,$d$ und $v_{yA}$. Betrachtet werden hier jedoch nur die Korrekturen dieser Freiheitsgrade gegenüber den Werten beim Abrichten von nicht über die Kinematik modifizierten Schnecken. Diese Korrekturen werden wie folgt bezeichnet:

$$\Delta\varphi_S, \Delta\gamma, \Delta d, \Delta v_{yA} \tag{7}$$

und in der Größe $\Delta K := (\Delta\varphi_S, \Delta\gamma, \Delta d, \Delta v_{yA})$ zusammengefasst.

Ist der Einfluss dieser 4 Koordinatenkorrekturen auf die erzeugte Profilmodifikation der Schnecke unterschiedlich, das heißt, führt eine Änderung einer dieser Koordinaten zu jeweils unterschiedlichen Profilmodifikationen, so kann dies genutzt werden, um 4 Punkte der Modifikation in gewissen Grenzen frei vorzugeben. Entscheidend für die Anwendbarkeit des hier vorgeschlagenen Verfahrens ist, in welchem Bereich die Modifikationen vorgegeben werden können und welche Forme diese Modifikation über das gesamte Profil hat. Dies wird im weiteren Verlauf detailliert diskutiert.

Wird eine Verzahnung mit einer Profilmodifikation, das heißt einer Modifikation, die nur vom Wälzweg $w_{FV}$ und nichtvon $b_{FV}$ abhängt, wälzgeschliffen, so muss dazu eine entsprechende Profilmodifikation in die Schnecke eingebracht werden. Dazu wird jedem Radius innerhalb des zu schleifenden Bereichs auf der Verzahnung $r_V$ ein Radius auf der Schnecke $r_S$ zugeordnet. Diese Zuordnung muss für jeden Schneckendurchmesser prinzipiell neu durchgeführt werden. Um eine, auf diese Weise modifizierte Schnecke, mit einer solchen Modifikation mit Hilfe einer Profilrolle abrichten zu können, muss jedem Radius auf der Schnecke $r_S$ ein Radius auf dem Abrichter $r_A$ zugeordnet werden und an diesen zugeordneten Radien eine entsprechende Modifikation auf dem Abrichter eingebracht werden. Wird mit einer nicht korrigierten Kinematik abgerichtet, so kann der Abrichter, abhängig von der Abrichter- und Schneckengeometrie, über einen großen Bereich von Schneckendurchmessern genutzt werden und die so hergestellten Schnecken erzeugen die richtige Profilmodifikation auf der geschliffenen Verzahnung. Wird beim Abrichten jedoch die oben erwähnte Abrichtkinematik genutzt, um die Modifikation auf der Schnecke an 4 Punkten in gewissen Grenzen frei vorzugeben, so führt dies im Allgemeinen dazu, dass die richtige Zuordnung zwischen Radien auf der Schnecke und Radien auf dem Abrichter nicht mehr gewährleistet ist. Tritt dies ein, führt dies zu einer Verschiebung der Profilmodifikation auf der Schnecke zu einem kleineren oder größeren Radius hin. Diese falsche Platzierung der Profilmodifikation auf der Schnecke führt dann zu einer falschen Platzierung der Profilmodifikation auf der Verzahnung. Dient die in den Abrichter eingebrachte Modifikation beispielsweise rein zur Erzeugung einer Profilballigkeit, so fällt diese falsche Zuordnung nicht weiter ins Gewicht, solange sie nicht zu stark ausfällt und kann durch eine korrigierte Abrichtkinematik kompensiert werden. Fällt die falsche Zuordnung jedoch so stark aus, dass der Außenradius des Abrichters nicht mehr den kleinsten abzurichtenden Radius auf der Schnecke erreicht oder der Abrichter so weit in die Schnecke eintaucht, dass es zu einem Kontakt mit der Gegenflanke kommt, so ist in diesen Fällen die falsche Zuordnung auch schädlich.

Enthält die Profilmodifikation hingegen markante Punkte, wie beispielsweise einen Knick am Beginn einer Kopfrücknahme, so würde die falsche Zuordnung zu einer falschen Positionierung dieses Knickes auf der Verzahnung führen.

Um dieses Problem zu lösen, kann die Abrichtkinematik so gewählt werden, dass der Abrichter an einem vorgegebenen Radius die Schnecke an einem vorgegebenen Radius berührt. Wählt man in dem gerade aufgeführten Beispiel der Kopfrücknahme am Abrichter den Radius, an dem der Knick platziert ist und an der Schnecke den Radius, der den Radius auf der Verzahnung fertigt, an dem der Knick dort platziert sein soll, so kann dieses Problem umgangen werden. Dies führt jedoch dazu, dass man die Profilmodifikation auf dem Profil nur noch an 3 anstatt an 4 Stellen vorgeben kann. Diese Vorgabe an nur 3 Stellen ist jedoch ausreichend, um beispielsweise Profilballigkeiten auf einer evolventischen Schnecke aufzubringen, welche dann wiederum zu Profilballigkeiten auf einer geschliffenen evolventischen Verzahnung führen.

Um die folgenden Berechnungen durchführen zu können, ist es notwendig, bestimmen zu können, welches Profil, insbesondere welche Profilmodifikation bei einem gegebenen Abrichter und gegebenen Achskorrekturen $\Delta K$ auf den Flanken der Schnecke erzeugt wird. Hier wird zunächst der Fall betrachtet, bei dem Achskorrekturen während des Abrichtprozesses fest eingestellt werden und nur $v_{ZS}$ und $\varphi_S$ gemäß der Steigungshöhe der Schnecke gekoppelt gefahren werden. Die Modifikation, definiert als Abweichung in Normalenrichtung zur Zahnflanke, abhängig von den Achskorrekturen, wir hier mit $f_{nFS}(w_{FS};\Delta K)$ bezeichnet. Die Berechnung von $f_{nFS}(w_{FS};\Delta K)$ kann beispielsweise mit Hilfe einer Abrichtsimulation durchgeführt werden. Eingaben in solche Abrichtsimulationen sind neben der Abrichtergeometrie und der Abrichtkinematik in der Regel auch die Geometrie der Schnecke vor dem Abrichten. Die Schnecke vor dem Abrichten wird bei der folgenden Betrachtung so gewählt, dass sie gegenüber der Schnecke nach dem Abrichten überall auf dem Gang ein positives Aufmaß besitzt. Bei solchen Abrichtsimulationen wird typischerweise der Abrichtprozess in endlich viele Zeitschritte unterteilt und dann für jeden Zeitpunkt ermittelt, wo durch den Abrichter Material an der Schnecke abgetragen wird.

Ein möglicher Algorithmus, der in der Lage ist, alle später nötigen Informationen zu liefern, wird hier detailliert vorgestellt. Hierzu wird zunächst eine, in der Regel nicht modifizierte Schnecke betrachtet. Auf einzelnen Punkten mit den Koordinaten ($w_{FS}$,$b_{FS}$) auf den Gänge dieser Schnecke werden Vektoren in Normalenrichtung mit einer zuvor festgelegten Länge platziert. Die Länge der Vektoren entspricht dem Aufmaß der Schnecke vor dem Abrichten, bezogen auf die nicht modifizierte Schnecke. Das Aufmaß wird typischerweise so groß gewählt, dass jeder Vektor während der nachfolgend beschriebenen Simulation mindestens einmal gekürzt wird. Die Anzahl der Punkte auf den Gängen bestimmt die Genauigkeit des Ergebnisses. Bevorzugt werden diese Punkte äquidistant gewählt. Die relative Lage der Schnecke zum Abrichter wird zu jedem Zeitpunkt vorgegeben, beispielsweise durch die Koordinaten der nicht korrigierten Kinematik $\varphi_S, \gamma, d, v_{yA}$ und deren Korrekturen $\Delta K$. Zu jedem der diskreten Zeitpunkte wird der Schnitt aller Vektoren mit dem Abrichter berechnet. Schneidet ein Vektor den Abrichter nicht, bleibt dieser unverändert. Schneidet er jedoch den Abrichter, so wird der Schnittpunkt berechnet und der Vektor soweit gekürzt, dass er gerade an dem Schnittpunkt endet. Weiterhin wird der Abstand des Schnittpunkts von der Abrichterachse, das heißt, der Radius auf dem Abrichter $r_A$ des Schnittpunkts berechnet und als zusätzliche Information zum gerade gekürzten Vektor abgespeichert. Da die Korrekturen der Koordinaten hier während des Abrichtens nicht verändert werden, haben, nachdem die Simulation über die ganze Breite der Schnecke durchgeführt wurde, alle Vektoren auf einem gegebenen Radius der Schnecke $r_S$ bzw. einem gegebenen Wälzweg $w_{FS}$ annährend dieselbe Länge. Diese Länge entspricht der von den Korrekturen $\Delta K$ abhängigen Modifikation $f_{nFS}$ der Schnecke.

Die geringfügen Unterschiede in den Längen rühren daher, dass der hier beschriebene Algorithmus aufgrund der Diskretisierung der Zeit Vorschubmarkierungen verursacht. Diese Vorschubmarkierungen und somit auch die Unterschiede in den Längen der Vektoren auf einem gegebenen Radius der Schnecke können durch eine feinere Diskretisierung der Zeit, gleichbedeutend mit einer Verkürzung der Zeitschritte reduziert werden. Wird die Simulation nicht über die gesamte Breite der Schnecke durchgeführt, sondern bei einer gegebenen axialen Shiftposition $v_{zS}$ der Schnecke abgebrochen, so haben, für einen gegebenen Radius auf der Schnecke nur die Vektoren annährend dieselbe Länge, die von der Berührlinie des Abrichters mit der Schnecke bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden. Diese Tatsache kann genutzt werden, um die Berührlinie für den gegebenen Abrichter und die gegebene relative Lage der Schnecke zum Abrichter, beschrieben durch $\Delta K$, sehr genau zu bestimmen. Dazu werden alle Vektoren auf einen gegebenen Radius auf der Schnecke $r_{FS}$ bzw. Wälzweg $w_{FS}$ betrachtet und bestimmt, an welcher Breitenlinienposition der Übergang von Vektoren mit annährend gleicher Länge zu solchen mit davon abweichender Länger ist. Die Berührlinie kann so durch eine Funktion $b_{BRFS}$ bzw. $b_{BwFS}$, abhängig von den Korrekturen $\Delta K$ und $v_{zS}$ beschrieben werden.

$$b_{FS} = b_{BRFS}(r_{FS}; v_{zS}, \Delta K) \text{ bzw. } b_{FS} = b_{BwFS}(w_{FS}; v_{zS}, \Delta K) \tag{8}$$

Für evolventische Schnecken kann die Berührlinie mit sehr guter Näherung durch eine Gerade in den Koordinaten ($w_{FS}$, $b_{FS}$) beschreiben werden

$$w_{FS} \sin \rho_{FS}(\Delta K) + b_{FS} \cos \rho_{FS}(\Delta K) = X_{FS}(v_{zS}, \Delta K) \tag{9}$$

wobei $\rho_{FS}(\Delta K)$ die Richtung und $X_{FS}(v_{zS},\Delta K)$ die Lage der Geraden beschreibt. Die Abhängigkeit der Richtung $\rho_{FS}(\Delta K)$ von den Korrekturen $\Delta K$ ist nur gering, sodass in immer noch guter Näherung die Richtung als nur durch die Schnecken und Abrichtergeometrie gegeben angenommen werden kann.

Sind so die Vektoren bestimmt, entlang derer die Berührline verläuft, können die zu diesen zuvor gespeicherten Radien auf dem Abrichter $r_{FA}$ ausgelesen werden und so zu jedem Radius auf der Schnecke $r_{FS}$ ermittelt werden, von welchem Radius auf dem Abrichter $r_{FA}$ dieser abgerichtet wurde. Diese Zuordnung ist abhängig von den Korrekturen $\Delta K$.

$$r_{FA} = r_{FA}(r_{FS}; \Delta K) \tag{10}$$

Die Genauigkeit, mit der die Berührlinie und die Zuordnung der Radien auf diese Weise bestimmt werden können, hängt sowohl vom gewählten Abstand der Punkte als auch von der Länge der diskreten Zeitschritte ab. Beide können theoretisch beliebig klein gewählt werden, in der Praxis sind sie jedoch durch den verfügbaren Arbeitsspeicher und die maximal akzeptable Rechenzeit begrenzt. Mit den heute erhältlichen PCs mit mehreren Gigabyte Arbeitsspeicher und sehr schnellen Mehrkernprozessoren ist diese Berechnung in der Praxis mit hinreichender Genauigkeit möglich.

Eine Alternative zur gerade vorgestellten Abrichtsimulationen zur Berechnung von $f_{nSF}$, $b_{BRFS}$ bzw. $b_{BwFS}$ und $r_{FA}$ ist eine analytische Berechnung. Diese mathematisch komplexere Methode bietet den Vorteil, dass die Berechnung im Allgemeinen schneller durchgeführt werden kann.

Die der Erfindung zugrunde liegenden mathematischen Zusammenhänge werden im Folgenden an einigen Anwendungsfällen genauer beschrieben.

### 4-Punkt-Methode

Zunächst wird der Fall einer über die ganze Schneckenbreite konstanten Profilmodifikation betrachtet, welche an 4 Wälzwegen $w_{FSi}$ exakt erreicht werden soll (4-Punkt-Methode). Die Werte der Profilmodifikation $f_{FSi}$ an den 4 Wälzwegen $w_{FSi}$ sind Funktionen der Koordinatenkorrekturen $\Delta K$.

$$f_{FSi} = f_{nFS}(w_{Fi}; \Delta K) \ , \ i = 1,\dots,4 \tag{11}$$

Daraus lässt sich die Funktion $F_4$

$$F_{F4}(\Delta K) = \begin{pmatrix} f_{nFS}(w_{F1}; \Delta K) - f_{FS1} \\ f_{nFS}(w_{F2}; \Delta K) - f_{FS2} \\ f_{nFS}(w_{F3}; \Delta K) - f_{FS3} \\ f_{nFS}(w_{F4}; \Delta K) - f_{FS4} \end{pmatrix} \tag{12}$$

konstruieren. Für gewisse Profilmodifikation $(f_{FS1}, f_{FS2}, f_{FS3}, f_{FS4})$ lassen sich die Nullstellen von $F_{FS4}$ berechnen, welche den Korrekturen $\Delta K$ entsprechen, die eingestellt werden müssen, um die gewünschte Profilmodifikation auf der Schnecke an den Wälzwinkeln $(w_{FS1}, w_{FS2}, w_{FS3}, w_{FS4})$ zu erzeugen. Hat die Funktion $F_{FS4}$ keine Nullstelle, so kann die Profilmodifikation nicht exakt erzeugt werden.

Bei dieser Berechnung wird die Profilmodifikation an nur 4 Wälzwegen betrachtet. Die Profilmodifikation entlang des ganzen Profils, also für alle Wälzwege, kann mit $f_{nFS}(w_{FS}; \Delta k)$ aus den berechneten Korrekturen $\Delta K$ bestimmt werden.

Die Nullstellenberechnung kann mit den aus der numerischen Mathematik bekannten Verfahren, beispielsweise dem mehrdimensionalen Newtonverfahren durchgeführt werden. Die hierzu nötigen partiellen Ableitungen von $F_{FS4}$ können numerisch berechnet werden. Dazu ist es nötig, die Funktion $F_{FS4}$ und somit auch die Funktion $f_{nFS}(w_{FS}; \Delta K)$ mit hoher Genauigkeit berechnen zu können, was, wie oben beschrieben, mit dem hier vorgestellten Algorithmus möglich ist. Ebenso kann mit einem solchen numerischen Verfahren geprüft werden, ob $F_{FS4}$ überhaupt eine Nullstelle hat. Beim Newtonverfahren beispielsweise zeigt sich dies an der sich einstellenden Konvergenz. Diese Überlegungen zur numerischen Berechnung der Nullstellen gelten ebenfalls für die weiteren vorgestellten Varianten.

Dies ermöglicht es, für eine gegebene Schnecke und einen gegebenen Abrichter die Menge aller erzeugbaren Profilmodifikation zu berechnen. In der Praxis besonders relevant ist jedoch auch die Umkehrrechnung, das heißt, eine Berechnung, mit der bestimmt werden kann, mit welchen Schnecken- und Abrichtergeometrien die gewünschten Modifikationen erzeugt werden können.

Die hier beschriebenen Achskorrekturen verursachen im Allgemeinen eine Verschiebung und Deformation der Berührlinie zwischen Abrichter und Schnecke, welche durch Gleichung (8) beschrieben werden. Gleichung (8) erlaubt es jedoch, die Lage der Berührlinie zu einem Zeitpunkt dahingehend vorzugeben, dass ein auf der Schnecke vorgegebener Punkt $(w_{FS0}, b_{FS0})$ auf der Berührlinie liegt. Dies führt zur folgenden Relation

$$b_{FS0} = b_{BwFS}(w_{FS0}; v_{zS}, \Delta K) \tag{13}$$

welche zusammen mit der Funktion $F_{FS4}$ aus Gleichung (12) zur Definition der Funktion $\hat{F}_{F4}$

$$\hat{F}_{F4}(\Delta K, v_{zS}) := \begin{pmatrix} f_{nFS}(w_{FS1}; \Delta K) - f_{FS1} \\ f_{nFS}(w_{FS2}; \Delta K) - f_{FS2} \\ f_{nFS}(w_{FS3}; \Delta K) - f_{FS3} \\ f_{nFS}(w_{FS4}; \Delta K) - f_{FS4} \\ b_{BwFS}(w_{FS0}; v_{zS}, \Delta K) - b_{FS0} \end{pmatrix} \tag{14}$$

genutzt werden kann. Die Nullstellen dieser Funktion liefern neben den Achkorrekturen $\Delta K$ auch eine axiale Position der Schnecke $v_{zS}$, sodass die gewünschte Modifikation erzeugt wird und die Berührlinie durch den Punkte $(w_{FS0}, b_{FS0})$ geht. Dies erlaubt es, gezielt nur bestimmte Bereiche auf der Schnecke abzurichten und es ermöglicht, den beim Abrichten nötigen Überlauf so gering wie möglich zu halten.

Das gerade diskutierte Beispiel kann dahingehend erweitert werden, dass die Modifikation auf der Schnecke nicht über die ganze Breite gleich ist. Solche Modifikationen werden als topologische Modifikationen bezeichnet. Dazu erhalten die Modifikationen $f_{FSi}$ eine Abhängigkeit von der Position in Breitenlinienrichtung $b_{FS}$.

$$f_{FSi} = f_{FSi}(b_{FS}) \ , \ i = 1, \dots, 4 \tag{15}$$

Ebenso können die Wälzwinkel $w_{FSi}$, an denen die Modifikationen vorgegeben werden, von der Position in Breitenlinienrichtung abhängig sein.

$$w_{FSi} = w_{FSi}(b_{FS}) \ , \ i = 1, \dots, 4 \tag{16}$$

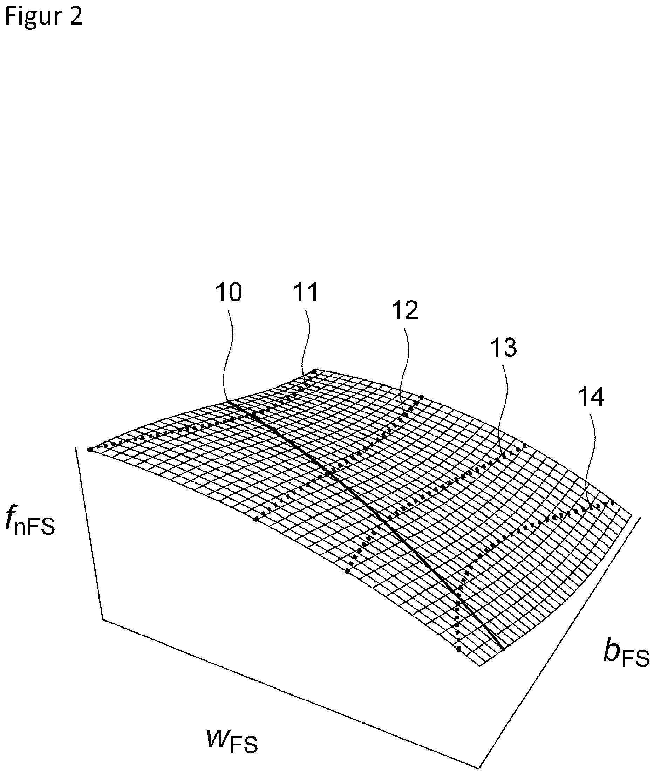

Diese Erweiterung ist insbesondere dann von Interesse, wenn die abgerichtete Schnecke für das Wälzschleifen im Diagonalwälzverfahren eingesetzt werden soll. Bei dieser Sonderform des Wälzschleifens ist es möglich, gezielt topologische Modifikationen auf der Verzahnung aufzubringen. Die ebenfalls topologische Modifikation $f_{nFS}(w_{FS}, b_{FS})$ auf der Schnecke hat in diesem Fall eine Abhängigkeit von $w_{FS}$ und $b_{FS}$. Die $w_{FSi}(b_{FS})$ definieren, auf welchen Wälzwegen, abhängig von der Position in Breitenlinienrichtung, an welchen Punkten auf der Schnecke die Sollmodifikation beim Abrichten exakt erreicht werden soll (siehe Figur 2). Ist beispielsweise die Toleranz der Modifikation auf der Schnecke nicht für alle $w_{FS}$ und $b_{FS}$ gleich, so kann die freie Wahl der $w_{FSi}(b_{FS})$ dafür genutzt werden, an den enger tolerierten Bereichen die Modifikation exakt zu erreichen. Die $F_{FSi}(b_{FS})$ sind gegeben durch:

$$f_i(b_{FS}) = f_{nFS}(w_{FS_i}(b_{FS}), b_{FS}) \ , \ i = 1, \dots, 4 \tag{17}$$

Analog zu Gleichung (14) lässt sich damit eine Funktion definieren, deren Nullstellen, für vorgegebenes $b_{FS0}$ die einstellenden Korrekturen $\Delta K$ und die einzustellende axiale Position $v_{zS}$ liefern. Es ist jedoch zu beachten, dass bei dieser Berechnung die Berührline die 4 Linien $w_{FSi}(b_{FS})$ schneiden muss, woraus sich die Positionen ergeben, an denen die Sollmodifikation $f_{nFS}(w_{FS}, b_{FS})$ auszuwerten ist. Diese Zusatzbedingungen führen dazu, dass die hier zu betrachtende Funktion 9 statt bisher 5 Dimensionen hat.

### 3-Punkt-Methode

Wie eingangs erwähnt, hat die 4-Punkt-Methode, den Nachteil, dass sie keine Kontrolle über das Platzieren der in den Abrichter eingebrachten Modifikation auf der Schnecke ermöglicht. Um dieses Problem zu lösen, werden bei der folgenden Methode (3-Punkt-Methode) lediglich 3 Modifikationen $f_{FSi}$ an 3 zunächst wieder konstsnten Wälzwinkeln $w_{FSi}$ betrachtet. Als zusätzliche Bedingung wird dafür aufgenommen, dass der Radius $r_{FA}$ auf dem Abrichter den Radius $r_{FS}$ auf der Schnecke fertigen soll. Daraus lässt sich analog zu $F_{F4}$ die Funktion $F_{F3}$ mit

$$F_{F3}(\Delta K) := \begin{pmatrix} f_{nFS}(w_{FS1}; \Delta K) - f_{FS1} \\ f_{nFS}(w_{FS2}; \Delta K) - f_{FS2} \\ f_{nFS}(w_{FS3}; \Delta K) - f_{FS3} \\ r_{FA}(r_{FS}; \Delta K) - r_{FA} \end{pmatrix} \tag{18}$$

konstruieren. Für gewisse Tupel $(f_{FS1}, f_{FS2}, f_{FS3}, r_{FS}, r_{FA})$ lassen sich die Nullstellen von $F_{F3}$ berechnen, welche den Korrekturen $\Delta K$ entsprechen, die eingestellt werden müssen, um die gewünschten Modifikationen $(f_{FS1}, f_{FS2}, f_{FS3})$ zu erzeugen und den gewünschten Radius auf dem Abrichter auf den gewünschten Radius auf der Schnecke abzubilden. Diese Methode lässt sich ebenfalls um die Option der Vorgabe eines Punkts $(w_{FS0}, b_{FS0})$, der auf der aktuellen Berührlinie liegen soll, erweitert werden. Die Funktion $F_{F3}$ muss dazu analog zu Gleichung (14) zur Funktion $\hat{F}_{F3}$ erweitert werden. Zur Beurteilung der Anwendbarkeit des Verfahrens ist es auch bei der 3-Punkt-Methode wichtig, ermitteln zu können, welche Modifikationen bei gegebener Schnecken- und Abrichtergeometrie erreicht werden können, bzw. auch die Umkehrung, das heißt, aus einer gewünschten Modifikation Schnecken- und Abrichtergeometrien zu berechnen, welche die gewünschten Modifikationen erlauben. Hierzu wird beispielhaft eine evolventische Schnecke betrachtet, bei der $f_{FS1}$

= 0 und $f_{FS3}$ = 0 und $w_{FS2}$ = ($W_{FS1}$ + $W_{FS3}$)/2 ist. $f_{FS2}$/ cos $\beta_{bFV}$ wird hier mit $c_{\alpha FS}$ bezeichnet, da diese Wahl der Modifikationen $F_{FSi}$ und der Wälzwinkel $w_{FSi}$ zu einer Profilballigkeit zwischen den Wälzwinken $w_{FS1}$ und $w_{FS3}$ mit dem Wert $f_{FS2}$/cos$\beta_{bFV}$ führt. Dieser Spezialfall wurde hier gewählt, da die Profilballigkeit im Wesentlichen bestimmt, ob die gewünschte Modifikation mit einer gegebenen Schnecken- und Abrichtergeometrie erreicht werden kann. Modifikationen mit freigewählten Werten für $f_{FS1}$, $f_{FS2}$ und $f_{FS3}$ erhält man durch eine Überlagerung einer der hier betrachteten Modifikationen mit $f_{FS1}$ = 0 und $f_{FS3}$ = 0, einer Zahndickenänderung des Schneckengangs und einer Profilwinkelkorrektur. Zahndicke und Profilwinkel lassen sich beim Abrichten jedoch im Wesentlichen unabhängig von Schnecken-und Abrichtergeometrie korrigieren, es ist lediglich zu beachten, dass der Abrichter beim Abrichten einer Flanke die andere Flanke derselben Lücke nicht verschneidet. In der Praxis relevant ist jedoch nicht die Profilballigkeit auf der Schnecke, sondern die beim Wälzschleifen auf dem Werkstück erzeugte Profilballigkeit. Diese, hier mit $c_{\alpha FV}$ bezeichnete Profilballigkeit, errechnet sich durch

$$c_{\alpha FV} = -c_{\alpha FS} \cdot \frac{\cos \beta_{bFS}}{\cos \beta_{bFV}} \qquad (19)$$

Hierbei werden die Auswertebereiche für die Profilballigkeiten so gewählt, dass der Beginn des Auswertebereichs auf der Schnecke das Ende des Auswertebereichs auf der Verzahnung fertig und das Ende des Auswertebereichs auf der Schnecke den Beginn des Auswertebereichs auf der Verzahnung. Es ist aus dem Stand der Technik bekannt, dass zu einer gegebenen zu schleifenden Verzahnung Schnecken mit verschiedensten Geometrien eingesetzt werden können. Bei evolventischen Verzahnungen und Schnecken ist das wesentliche Kriterium zum Entscheiden, ob eine Schnecke eingesetzt werden kann, ob die beiden Evolventenverzahnungen (Schnecke und Verzahnung) miteinander kämmen. Dies ist gleichbedeutend mit:

$$m_{bFV} \cdot \cos \beta_{bFV} = m_{bFS} \cdot \cos \beta_{bFS} \qquad (20)$$

An einer Beispielverzahnung werden im Folgenden typische Verläufe der Achskorrekturen $\Delta K$, abhängig von der auf der Verzahnung zu erzielenden Profilballigkeit $c_{\alpha FV}$ diskutiert. Neben den Achskorrekturen wird auch die axiale Position $v_{zS}$ mit betrachtet. Hierbei werden Abrichter betrachtet, die so ausgelegt sind, dass sie Schnecken ohne Profilballigkeit abrichten und diese Schnecken dann auch keine Profilballigkeiten auf der Verzahnung erzeugen.

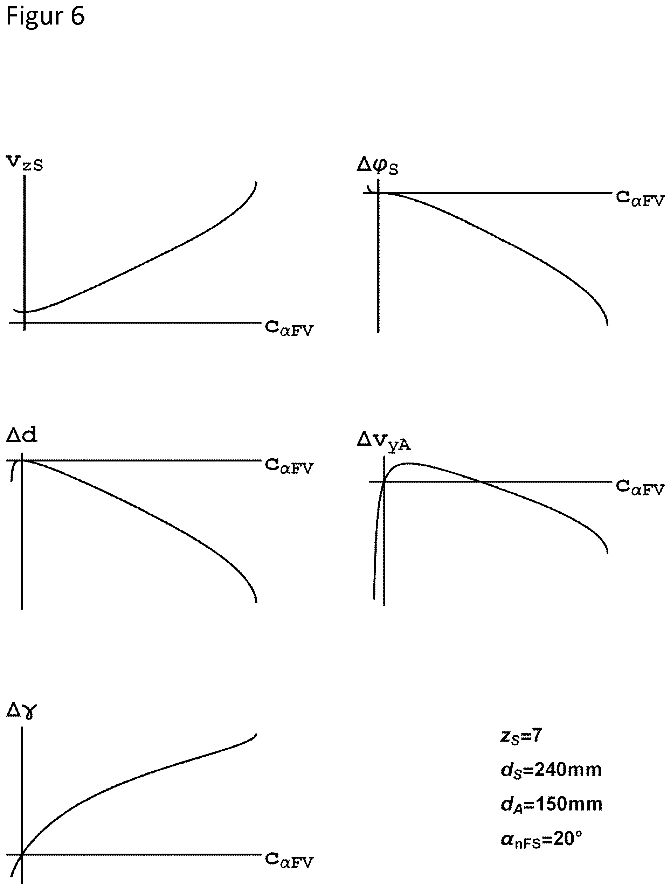

Die Verläufe der Achskorrekturen weisen über den ganzen Bereich der auf der Verzahnung erzielbaren Profilballigkeit komplexe Formen auf, welche nicht durch einfache Funktionen beschreiben werden können (siehe Figur 6). Insbesondere ist es nicht möglich, zuverlässig von den Verläufen bei betragsmäßig kleinen Profilballigkeiten auf den gesamten Verlauf zu schließen. Es ist somit in jedem Fall empfehlenswert, die Berechnung für die gewünschte Profilballigkeit durchzuführen. Am rechten Rand der dargestellten Verläufe zeigen sich bei den Achskorrekturen $\Delta K$ und der axialen Position der Schnecke $v_{zS}$ steile Anstiege. Am linken Rand zeigt sich dieser steile Anstieg insbesondere bei $\Delta d$, $\Delta\varphi_S$ und $\Delta v_{yA}$. Diese Ränder markieren die maximale und minimale erzeugbare Profilballigkeit. Jenseits der linken und rechten Ränder hat die Funktion $\hat{F}_{F3}$ keine Nullstellen mehr.

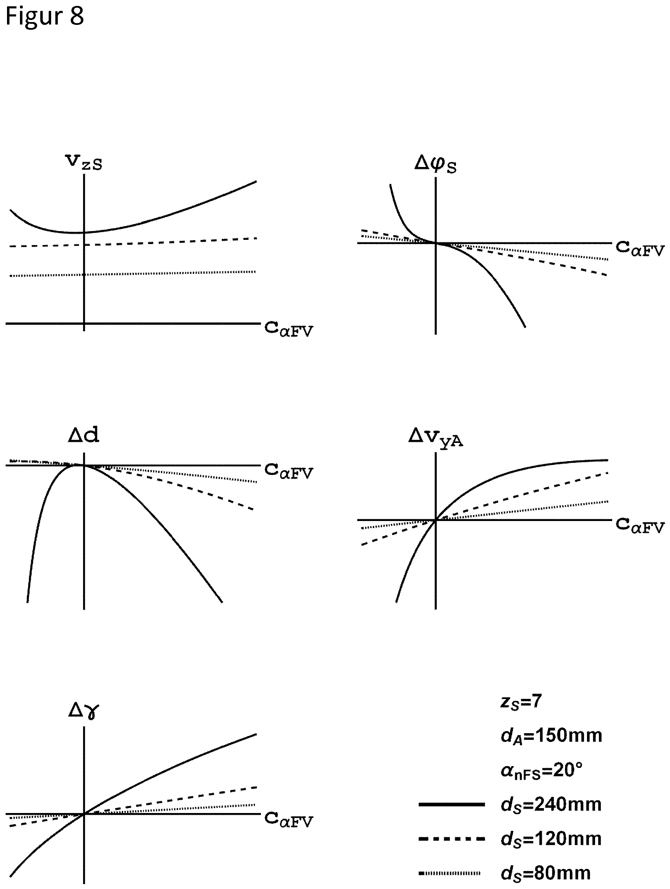

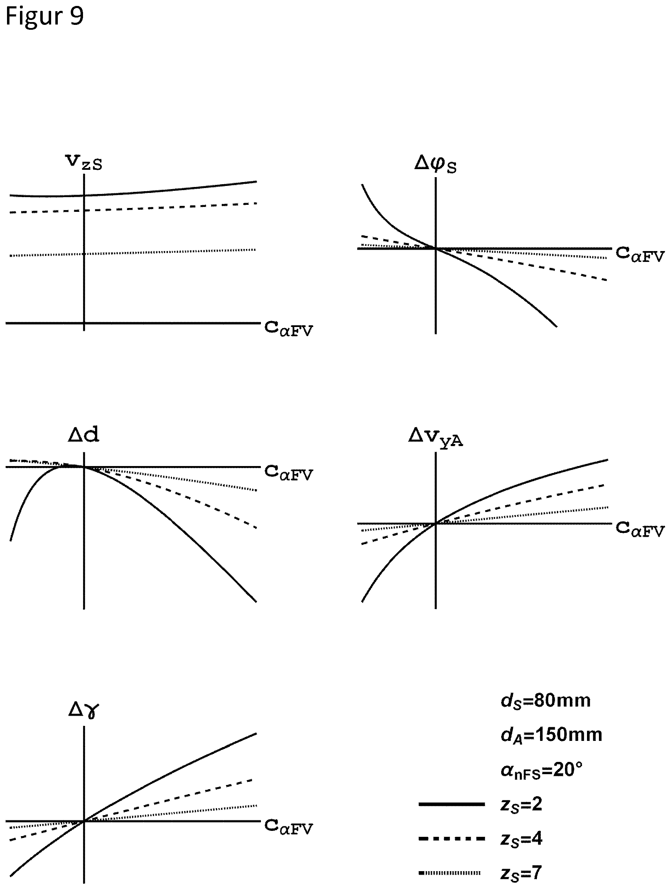

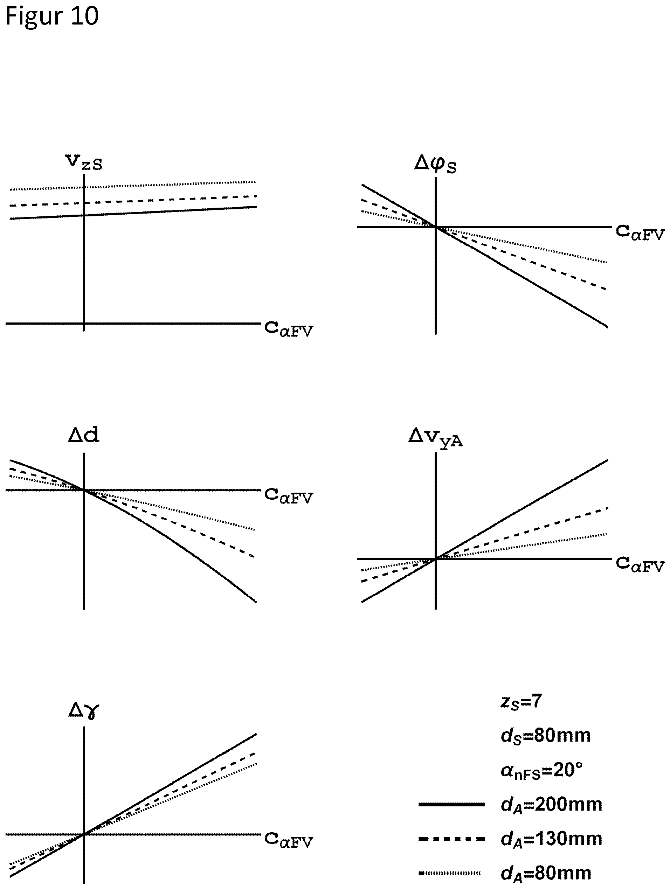

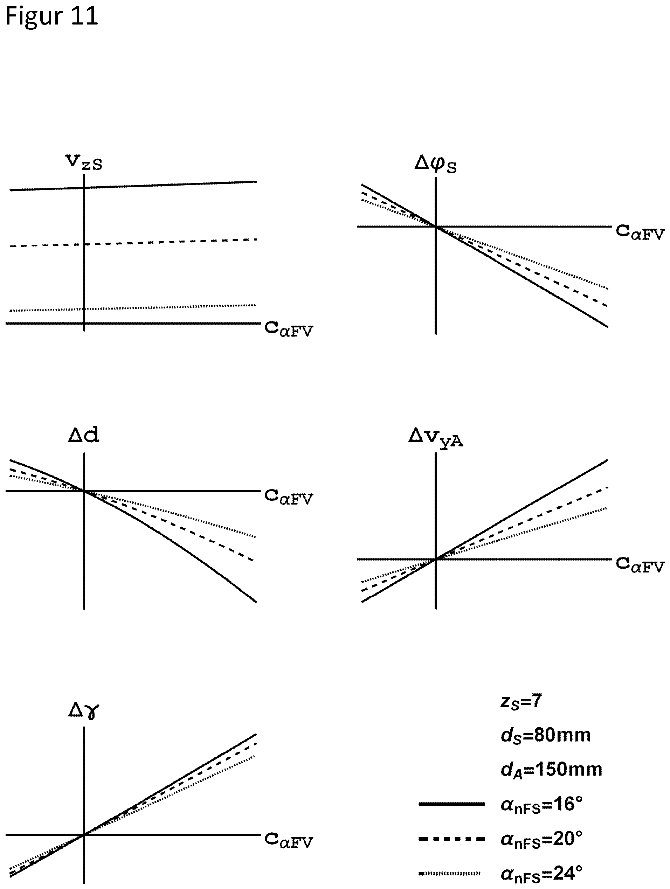

Die Verläufe werden stark durch die geometrischen Kenngrößen der verwendeten Schnecke und des Abrichters beeinflusst. So zeigt Figur 8, dass bei größer werdendem Durchmesser der Schnecke $d_S$, die Korrekturen $\Delta K$ und die axiale Position $v_{zS}$ größer, insbesondere $\Delta\varphi_S$, $\Delta d$ und $\Delta\gamma$ deutlich größer werden. Figur 9 zeigt, dass bei abnehmender Gangzahl der Schnecke $z_S$, die Korrekturen $\Delta K$ und die axiale Position $v_{zS}$ größer, insbesondere $\Delta\varphi_S$, $\Delta d$ und $\Delta\gamma$ deutlich größer werden. Figur 10 zeigt, dass bei größer werdendem Durchmesser des Abrichters $d_A$, die Korrekturen $\Delta K$ größer werden. Figur 11 zeigt, dass bei kleiner werdendem Normalprofilwinkel der Schnecke $\alpha_{nFS}$ die Korrekturen $\Delta K$ und die axiale Position $v_{zS}$ größer werden. Diese starken Abhängigkeiten zeigen auf, dass für die erfolgreiche Anwendung der hier beschriebenen Erfindung die Wahl geeigneter Schnecken- und Abrichtergeometrien von großer Bedeutung ist, da es im Allgemeinen von Vorteil ist, die Verfahrwege der Maschinenachsen möglichst klein zu halten.

Gemäß dem Stand der Technik ist es üblich, Abrichter so auszulegen, dass diese eine Profilballigkeit auf der Schnecke und diese Schnecken dann wiederum eine Profilballigkeit auf der Verzahnung erzeugen. Werden solche Abrichter verwendet, so addieren sich die durch den Abrichter erzeugten Profilballigkeiten zu den mit dem hier vorgestellten Verfahren erzeugten hinzu.

Zur Berechnung der Achskorrekturen wurden in diesem Beispiel nur 3 Punkte auf dem Profil betrachtet. Das gesamte Profil über dem ganzen Prüfbereich lässt sich mit $f_{nFS}(w_{FS}; \Delta K)$ bestimmen. Für das gerade betrachtete Beispiel zeigt sich, dass die Form der Modifikation sehr gut der einer Parabel entspricht (siehe Figur 12b), welche die typische Form einer Profilballigkeit ist. Auch kreisförmige Profilballigkeiten lassen sich mir sehr guter Genauigkeit auf diese Weise fertigen, da die Abweichung zwischen parabelförmigen und kreisförmigen Profilballigkeiten extrem gering ist.

Bei Anwendung der 3-Punkt-Methode zeigt sich, dass die Zuordnung von Radien auf dem Abrichter auf Radien auf der Schnecke nicht mehr über das ganze Profil gewährleistet werden kann. Wird ein Punktfestgehalten, so verschiebt sich die Zuordnung für alle anderen Punkte (siehe Figur 12b). Um diesen Effekt quantitativ zu erfassen, wird der Begriff der relativen Profilstreckung

$$P_{FS} := \frac{w_{PFS} - w_{NfFS}}{w_{NfFS} - w_{NaFS}} \qquad (21)$$

eingeführt. Hier entspricht $w_{NfFS}$ dem Radius auf der Schnecke, der beim Wälzschleifen der Verzahnung den Kopfkreis $w_{NaFV}$ fertigt und $w_{NaFS}$ entspricht dem Radius auf der Schnecke, der den Fußkreis $w_{NfFV}$ fertigt. Auf der mit einer solchen Schnecke geschliffenen Verzahnung ergibt sich dieselbe relative Profilstreckung $P_{FV}$. Da jedoch beim Wälzschleifen typischerweise jeder Punkt am Fußnutzkreis auf der Verzahnung von einem Punkt am Kopfnutzkreis der Schnecke gefertigt wird und umgekehrt, wird beim hier betrachteten Beispiel, auf der Verzahnung am Fußformkreis die richtige Profilmodifikation erzeugt, am Kopfnutzkreis wird jedoch eine falsche Profilmodifikation zugeordnet. Die Profilballigkeit auf der Verzahnung berechnet sich nach Gleichung (19). Figur 13 zeigt am Beispiel der 3-Punkt-Methode, wie die beim Wälzschleifen auf der Verzahnung entstehende relative Profilstreckung von der auf der Verzahnung erzeugen Profilballigkeit $c_{\alpha FV}$ abhängt. Des Weiteren zeigen die vier Figuren den Einfluss der Gangzahl der Schnecke $z_S$, des Durchmessers der Schnecke $d_S$, des Durchmessers des Abrichters $d_A$ und des Profilwinkels der Schnecke $\alpha_{nFS}$ auf die Abhängigkeit der relativen Profilstreckung $P_{FS}$ von der Profilballigkeit auf der Verzahnung $c_{\alpha FV}$.

Der Effekt der relativen Profilstreckung beeinflusst den auf dem Abrichter zur Verfügung stehenden aktiven Bereich.

Eine Limitierung der maximal mit einem gegebenen Abrichter mit der 3-Punkt-Methode herstellbaren Profilballigkeit ergibt sich direkt aus der dafür einzustellenden relativen Lage zwischen Schnecke und Abrichter. Die Figuren 14a, 14b und 15 zeigen in 3D-Ansichten aus verschiedenen Perspektiven und Abständen die relative Lage für eine nicht korrigierte Abrichtkinematik, am Beispiel einer evolventischen Schnecke. Hier finden keine Berührung und keine Durchdringung zwischen der rechten Flanke 21 des Abrichters und der rechten Flanke 25 des Schneckengangs statt. Ein einflankiges Abrichten ist so problemlos möglich. Des Weiteren wird der Grund 23 des Schneckengangs wie gewünscht von der äußeren Mantelfläche 20 des Abrichters abgerichtet. Anders gestaltet sich jedoch die Situation beim Abrichten mit der 3-Punkt-Methode. Die Figuren 16a, 16b und 17 zeigen für dieselbe Schnecke und denselben Abrichter in 3D-Ansichten aus verschiedenen Perspektiven und Abständen die relative Lage für eine Abrichtkinematik gemäß der 3-Punkt-Methode. Es zeigt, dass die rechte Flanke 21' des Abrichters und die äußere Mantelfläche 20' die rechte Flanke 25' des einen Schneckengangs durchdringen. Gib es eine solche Durchdringung, kann das Verfahren nicht angewendet werden, da es zu einem ungewollten Abtrag auf der rechten Flanke 25' kommt. Um dies zu vermeiden, kann der Abrichter schmaler gestaltet werden. Dadurch verschmälert sich auch die äußere Mantelfläche 20' und die rechte Flanke 21' rückt dichter an die linke Flanke 22'. Die Verschmälerung kann theoretisch soweit durchgeführt werden, bis die äußere Mantelfläche 20' Breite 0 hat. In der Praxis kann jedoch eine Mindestbreite fertigungsbedingt nicht unterschritten werden. Ob eine solche ungewollte Durchdringung stattfindet, kann durch Berechnung von $f_{nFS}(w_{FS}; \Delta K)$ für die rechte Flanke 25' mit den für die linke Flanke 24' gemäß der 3-Punkt-Methode berechneten Korrekturen $\Delta K$ bestimmt werden. Liegt die so berechnete Profilmodifikation auf der rechten Flanke 25' an mindestens einem Wälzweg $w_{FS}$ unterhalb des aktuellen Aufmaßes, so kommt es zu einer im Allgemeinen ungewollten Durchdringung. Insbesondere wenn die berechnete Profilmodifikation unterhalb der Sollmodifikation liegt, ist eine solche Durchdringung zu vermeiden. Ein weiterer problematischer Effekt ergibt sich aus der Änderung des Achsabstands $\Delta d$ durch die 3-Punkt-Methode. Diese häufig negative Änderung führt, wie in Figur 17 zu sehen, zu einem Eindringen der äußeren Mantelfläche 20' in die Schnecke unterhalb des Grunds 23'. Ein solches Eindringen ist im gewissen Maße jedoch unkritisch, da der Grund während des Wälzschleifprozesses im Allgemeinen keinen Kontakt mit der Verzahnung hat. Ein zu tiefes Eindringen kann jedoch zu einem Unterhöhlen des Schneckengangs führen. Dieses Unterhöhlen kann zu einem Materialabtrag an Stellen auf der Schnecke führen, an denen zu einem späteren Abrichtzyklus, das heißt, wenn die Schnecke für einen kleineren Durchmesser $d_{Sk}$ abgerichtet wird, der Schneckengang platziert werden soll. Ist dieses Material jedoch nicht mehr vorhanden, ist dieser Schneckengang nicht mehr vollständig ausgebildet und kann nicht genutzt werden. Um zu prüfen, ob es einen solchen ungewünschten Abtrag gibt, kann $f_{nFS}(w_{FS}; \Delta K)$ für kleinere Durchmesser der Schnecke $d_{Sk}$ mit den Korrekturen $\Delta K$ für den aktuellen Schneckendurchmesser für eine oder beide Flanken berechnet werden. Liegt die so berechnete Profilmodifikation auf mindestens einer Flanke an mindestens einem Wälzweg $w_{FS}$ unterhalb der Sollmodifikation, so kommt es zu einem ungewollten Abtrag.

Ebenso wie die 4-Punkt-Methode kann auch die 3-Punkt-Methode dahingehend erweitert werden, dass die Modifikation über die Schneckenbreite nicht gleich ist. Die Vorgehensweise ist hierbei analog und die Gleichungen (15), (16) und (17) gelten dann für 3 Punkte.

Darüber hinaus kann auch die Zuordnung der Radien auf dem Abrichter zu den Radien auf der Schnecke über die Breite der Schnecke variabel gestaltet werden. Dazu ist die vierte Komponente aus $F_{F3}$ in Gleichung (18) durch

$$r_{FA}(r_{FS}(b_{FS}); \Delta K) - r_{FA}(b_{FS}) \tag{22}$$

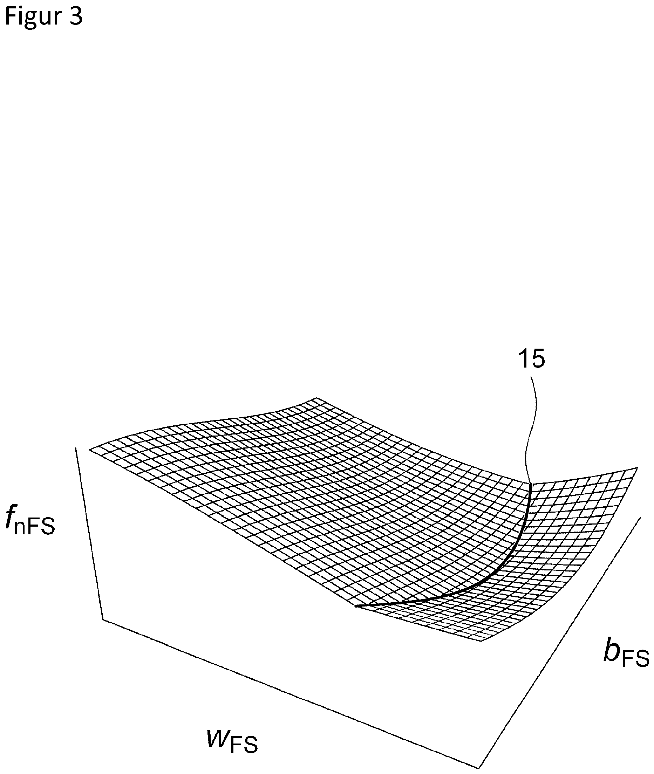

zu ersetzten. $r_{FA}(b_{FS})$ und $r_{FS}(b_{FS})$ beschreiben hierbei die Zuordnung von Radien auf dem Abrichter zu Radien auf der Schnecke, abhängig von der Schneckenbreitposition. Figur 3 zeigt die Modifikation einer Schnecke, welche mit variabler Zuordnung der Radien abgerichtet wurde.

Die Zuordnung der Radien als Zusatzbedingung zu den Modifikationen an 3 verschiedenen Wälzwegen aufzunehmen ist jedoch nur eine Variante der Erfindung. Es können prinzipiell beliebige Zusatzbedingungen betrachtet werden, von denen einige im Folgenden beispielhaft diskutiert werden.

Ein Abrichter, beispielsweise für evolventische Schnecken, kann nicht nur genutzt werden, um die Flanken einer Schnecke abzurichten sondern auch um gleichzeitig den Kopf der Schnecke abzurichten. Dadurch kann zum einen die Abrichtzeit verkürzt werden, weil das zusätzliche Abrichten an einer Fliese entfällt, es ist aber auch möglich, dem Schneckenkopf einen bestimmte Form zu geben, um beim Wälzschleifen den Fuß der Verzahnung mit zu bearbeiten. Ein solches Abrichten des Kopfs kann am selben Schneckengang und an etwa derselben Breitenposition durchgeführt werden, es kann jedoch auch an einem anderen Gang bzw. am selben Gang an einer anderen Breitenposition durchgeführt werden (siehe Figur 21). Ein für ein gleichzeitiges Abrichten des Kopfs und der Flanke ausgelegter Abrichter wird in der Regel so ausgelegt, dass er für eine bestimmte Abrichtkinematik den Kopf der Schnecke auf der richtigen Höhe abrichtet. Wird die Abrichtkinematik jedoch korrigiert, kann dies zu einer falschen Positionierung des Kopfabrichters zum Schneckenkopf führen und der Schneckenkopf wird auf einer falschen Höhe abgerichtet bzw. erhält eine falsche Form. Um dieses Problem zu lösen, kann als Zusatzbedingung gefordert werden, dass der Kopfabrichter den Schneckenkopf auf einer vorgegebenen Höhe abrichtet. Diese Variante erlaubt es somit, das Profil zu modifizieren und gleichzeitig den Kopf auf der richtigen Höhe abzurichten. Es ist dabei auch möglich, die Höhe des Schneckenkopfs über die Schneckenbreite zu variieren, dazu ist die Zusatzbedingung von $b_{FS}$ abhängig zu formulieren. Soll jedoch nicht nur die Höhe des Schneckenkopfes kontrolliert werden, sondern sollen zwei Punkte vorgegeben werden, so ist dies ebenso möglich. Dazu können zwei Zusatzbedingungen formuliert werden, wobei dann nur noch zwei Wälzwege auf der Flanke vorgegeben werden können. Alternativ kann eine Variation der 4-Punkt-Methode genutzt werden, wobei zwei Wälzwege auf der Flanke und zwei auf dem Kopf gewählt sind.

Eine weitere Alternative ergibt sich, wenn nicht 5 Freiheitsgrade genutzt werden können, beispielsweise weil diese auf der Maschine nicht zur Verfügung stehen oder, wenn topologisch abgerichtet werden soll, nicht 5 Freiheitsgrade als aktive Freiheitsgrade zur Verfügung stehen und somit nicht während der Bearbeitung verändert werden können. Das Fehlen eines Freiheitsgrads kann als Zwangsbedingung formuliert werden und liefert so die gewünschte Zusatzbedingung. Möglich ist auch, dass bis zu zwei Freiheitgrade fehlen.

Je nach Anzahl der Zusatzbedingungen muss die Anzahl der Wälzwinkel, an denen die Modifikationen erreicht werden sollen, reduziert werden, sodass die Summe aus Anzahl der Wälzwinkel und Zusatzbedingungen immer 4 ergibt. Von besonderem Interesse sind jedoch die Varianten, bei denen die Anzahl der Wälzwinkel mindestens 2 beträgt.

Nachdem die mathematischen Zusammenhänge ausführlich beschrieben wurden, werden im Folgenden die sich daraus ergebenden Anwendungen aufgeführt.

Wie eingangs beschrieben, ist kein Verfahren bekannt, mit dem die Profilform beim Abrichten einer Schnecke zum Wälzschleifen von Verzahnungen durch den Abrichtprozess beeinflusst werden kann, abgesehen von Profilwinkelmodifikationen bei evolventischen Schnecken. Eine flexiblere Vorgabe solcher Profilmodifikationen kann in der Praxis jedoch große Vorteile bringen. So wird beispielsweise die Möglichkeit eröffnet, einen Abrichter, der speziell für Schnecken für eine bestimmte Verzahnung mit bestimmten Profilmodifikationen ausgelegt wurde, auch zum Abrichten von Schnecken für eine andere Verzahnung und/oder andere Profilmodifikationen zu nutzen. Eine solche Anwendung ist insbesondere in der Kleinserien- und Lohnfertigung von großem Interesse, da durch die Wiederverwendbarkeit teurer Abrichter Kosten gesenkt werden können und Beschaffungszeiten entfallen. Ein weiterer Anwendungsfall ist die Korrektur von Herstellungsfehlern in Abrichtern. Auch wenn diese inzwischen sehr präzise gefertigt werden können, kommt es immer noch zu Abweichungen von der Sollgeometrie. Werden solche Fehler in den Abrichtern beim Wälzschleifen festgestellt, so müssen gemäß dem Stand der Technik die Abrichter vom Verzahner zum Hersteller zum Nachläppen zurück geschickt werden, wodurch teure Wartezeiten entstehen. Mit dem hier vorgestellten Verfahren können solche Abweichen über die Abrichtkinematik korrigiert werden, ohne dass eine Rücksendung des Abrichters nötig ist. Durch eine solche Korrekturmöglichkeit wird es auch möglich, die Fertigungstoleranzen von Profilmodifikationen insbesondere auch in einer Serienfertigung zu reduzieren. Eine solche Korrektur kann beispielsweise durch händische Eingabe in die Steuerung einer Verzahnmaschine vorgenommen werden oder durch Messen der geschliffenen Profilmodifikation in der Maschine und aus diesem Messergebnis automatisch vorgenommen werden. Im Fall einer evolventischen Verzahnung ist insbesondere die Korrektur einer Profilballigkeit von großem Interesse.

Wird das hier beschriebene Verfahren zur Erzeugung variabler Profilmodifikationen über die Schnecken genutzt, eröffnet es neue Möglichkeiten beim topologischen Wälzschleifen mittels Diagonalwälzverfahren. Beim Diagonalwälzverfahren wird während des Wälzschleifprozesses die Schleifschnecke nicht nur axial zur Verzahnung sondern auch axial zu ihrer eigenen Drehachse verschoben. Dadurch kommen unterschiedliche Bereiche der Schleifschnecke, welche typischerweise unterschiedliche Modifikationen aufweisen, in Kontakt, wodurch über die Breite unterschiedliche Modifikationen auf der geschliffenen Verzahnung aufgebracht werden können. Die benötigte topologische Modifikation auf der Schnecke ergibt sich aus der zu erzeugenden topologischen Modifikation auf der Verzahnung und einer Zuordnung von Punkten auf der Verzahnung zu Punkten auf der Schnecke während des Wälzschleifprozesses. Je größer das Spektrum an möglichen topologischen Modifikationen auf der Schnecke ist, desto größer ist somit auch das Spektrum an möglichen topologischen Modifikationen auf der Verzahnung. Bisher war es nur möglich, die Zahndicke und den Profilwinkel über die Schneckenbreite beim Abrichten zu verändern. Insbesondere für evolventische Schnecken ist es mit dem hier beschriebenen Verfahren nun möglich, zusätzlich auch die Profilballigkeit über die Schneckenbreite variabel zu gestalten. Die mit der 3-Punkt-Methode auf einer evolventischen Schnecke erzeugbare Profilmodifikation, kann, wie in Figur 12b zu sehen, in sehr guter Näherung durch eine Parabel, das heißt ein Polynom zweiten Grades in $w_{FS}$ beschrieben werden. In ebenfalls sehr guter Näherung gilt Gleichung (9), welche die Berührlinie beschreibt entlang welcher sich die Profilmodifikation beeinflussen lässt. Kombiniert man diese beiden sehr guten Näherungen, so kann die mit der 3-Punkt-Methode erzeugbare variable topologische Modifikation $f_{nFStop3}$ auf der Schnecke durch

$$f_{nFStop3}(w_{FS}, b_{FS}) = C_{0FS}(X_{FS}) + C_{1FS}(X_{FS}) \cdot w_{FS} + C_{2FS}(X_{FS}) \cdot w_{FS}^2 \qquad (23)$$

beschrieben werden, wobei $C_{0FS}(X_{FS})$, $C_{1FS}(X_{FS})$ und $C_{2FS}(X_{FS})$ stetige Funktionen sind und $X_{FS} = w_{FS} \sin \rho_{FS} + b_{FS} \cos \rho_{FS}$. Zusätzlich zu dieser Modifikation kann noch eine in den Abrichter gelegte Profilmodifikation additiv überlagert werden. Diese Modifikation $f_{nFSA}$ kann von der Lage der Berührlinie $X_{FS}$ abhängig auf dem Profil platziert werden und vereinfacht durch

$$f_{nFSA}(w_{FS}, b_{FS}) = A(w_{FS} - \Delta w_{0FS}(X_{FS})) \qquad (24)$$

wobei $A(w)$ die Profilmodifikation auf der Schnecke beschreibt, die der Abrichter bei nicht korrigierter Kinematik erzeugen würde und $\Delta w_{0FS}(X_{FS})$ die Verschiebung dieser Profilmodifikation durch eine veränderte Zuordnung der Radien auf dem Abrichter zu Radien auf der Schnecke, abhängig von der Lage der Berührlinie. Eine exakte Berechnung erfordert zusätzlich noch eine Berücksichtigung der relativen Profilstreckung für alle Wälzwege, abhängig von den Korrekturen $\Delta K$, um die tatsächliche Zuordnung von Radien auf dem Abrichter auf Radien auf der Schnecke zu berücksichtigen. Dies gilt analog für die 4-Punkt-Methode, wobei mit dieser die Profilmodifikation in sehr guter Näherung durch ein Polynom dritten Grades beschrieben werden kann.

**Zweiflankiges Abrichten**

Das in dieser Erfindung beschriebene Verfahren kann auf das zweiflankige Abrichten übertragen werden. Dazu können beispielsweise die 3 bzw. 4 Wälzwinkel aus der 3- bzw. 4-Punkt-Methode beliebig auf den beiden Flanken verteilt werden. Die Zuordnung der Radien auf dem Abrichter zu Radien auf der Schecke bei der 3-Punkt-Methode kann auf einer der beiden Flanken realisiert werden. Die im zweiflankigen Abrichten erzeugbaren Modifikationen sind gegenüber den einflankig erzeugbaren aufgrund der reduzierten Anzahl betrachteter Punkte pro Flanke eingeschränkt, das zweiflankige Abrichten erlaubt jedoch kürzere Abrichtzeiten. Im Fall einer evolventischen Schnecke lassen sich mit der 4-Punkt-Variante beispielsweise auf diese Weise in gewissen Grenzen Aufmaß und Profilwinkel auf beiden Flanken vorgeben. Die 3-Punkt-Variante erlaubt nur die Vorgabe 3 dieser 4 Werte, der vierte ergibt sich automatisch, kann jedoch über die Geometrie der Schnecke beeinflusst werden. Das zweiflankige Abrichten kann sowohl zur Erzeugung reiner Profilmodifikationen als auch topologischer Modifikationen auf der Schnecke genutzt werden.

Die Anwendung dieser Erfindung muss nicht immer über die ganze Schneckenbreite erfolgen. So können auch nur Teile der Schnecke mit dem der Erfindung zugrunde liegenden Verfahren abgerichtet werden. Es ist auch möglich, mehrere identisch oder unterschiedlich modifizierte Bereiche auf der Schnecke aufzubringen. Solche Bereiche können zum Schruppen und/oder Schlichten genutzt werden. Häufig ist es so, dass zwei benachbarte modifizierte Bereiche nicht direkt aneinander platziert werden können. Dieser dadurch entstehende Abstand zwischen modifizierten Bereichen kann optional als Schruppbereich genutzt werden. So lässt sich eine in mehrere zum Teil modifizierte Bereiche unterteilte Schnecke nahezu vollständig nutzen.

**Ausgleichsrechnung**

Wird beim Wälzschleifen einer topologischen Modifikation mittels Diagonalwälzschleifens über die Zuordnung von Punkten auf der Verzahnung zu Punkten auf der Schnecke die benötigte topologische Modifikation ermittelt, so hat diese nicht immer eine Form gemäß Gleichung (23) kombiniert mit einer variabel platzierten Modifikation aus dem Abrichter. Es ist jedoch in bestimmten Fällen möglich, die auf der Schnecke benötigte Modifikation durch eine mit dem hier beschriebenen Verfahren herstellbaren Modifikation hinreichend genau anzunähern. Eine solche Annäherung kann beispielsweise mittels einer Ausgleichsrechnung durchgeführt werden. Bei einer solchen Ausgleichrechnung gehen im Gegensatz zur 3-Punkt-Methode nicht nur 3 Punkte auf dem Profil in die Berechnung der Achskorrekturen $\Delta K$ ein, sondern mindestens 4, sodass man ein überbestimmtes Gleichungssystem erhält. Dieses Gleichungssystem wird dann mittels Optimierens einer Abstandsfunktion gelöst. In einer solchen Abstandsfunktion können die verschiedenen betrachteten Punkte optional unterschiedlich gewichtet werden, bzw. es können verschiedene Abstandsfunktion genutzt werden. Eine solche unterschiedliche Wahl der Abstandsfunktion bzw. der Gewichtung kann dann von Vorteil sein, wenn die Toleranzen der berücksichtigten Punkte nicht alle gleich sind. So können beispielsweise enger tolerierte Punkte stärker gewichtet werden. Eine typische Variante der Ausgleichsrechnung, welche alle Punkte gleich gewichtet, ist die Methode der kleinsten Quadrate, welche als Abstandsfunktion die 2-Norm verwendet. Die Bedingung für die Zuordnung von Radien auf dem Abrichter zu Radien auf der Schnecke kann bei einer Ausgleichsrechnung weiterhin bestehen bleiben, so dass man ein Optimierungsproblem mit Nebenbedingung erhält. Es ist jedoch auch möglich diese Bedingung mit in die Abstandsfunktion aufzunehmen, da eine solche Zuordnung im Allgemeinen ebenfalls toleriert ist. Es ist ebenfalls möglich, mehrere solcher Zuordnungen für verschiedene Radien auf der Schnecke und des Abrichters mit in die Abstandsfunktion aufzunehmen, falls nicht nur eine solche Zuordnung eingehalten werden soll. Dies ist insbesondere dann von Interesse, wenn zweiflankig abgerichtet wird. Eine solche Ausgleichsrechnung ist analog als Erweiterung der anderen hier beschriebenen Methoden möglich, insbesondere der 4-Punkt-Methode oder der Variante mit ein oder zwei beliebigen Zusatzbedingen. Generell können auch immer die Zusatzbedingungen Bestandteil der Abstandsfunktion sein oder als strickt einzuhaltende Nebenbedingung fungieren.

Die Anwendung einer Ausgleichsrechnung ist nicht nur für den allgemeinen Fall der topologischen Modifikation möglich, sondern ebenso für den Spezialfall der reinen Profilmodifikation.

## Konische Schnecken

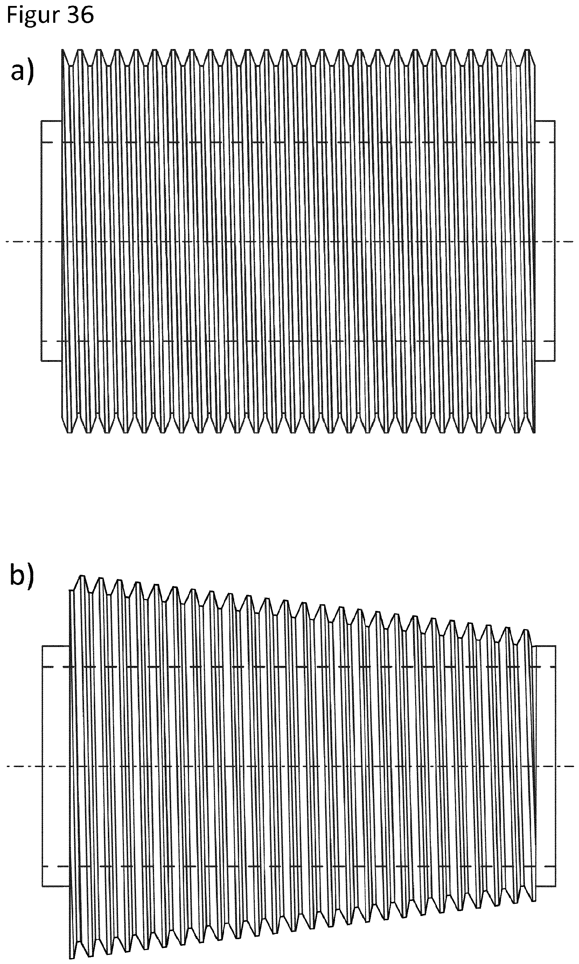

Das hier beschriebene Verfahren ist nicht nur auf zylindrische Schnecken beschränkt, sondern kann direkt auf konische Schnecken übertragen werden. Mit konischen Schnecken sind hier Schnecken mit unterschiedlichen Steigungshöhen auf linker und rechter Flanke gemeint. Eine solche konische Schnecke ist in Figur 36b dargestellt. Im Falle evolventischer Schnecken werden diese als Beveloids bezeichnet. Beim Abrichten konischer Schnecken ist eine über die Schneckenbreite variable Zuordnung von Radien auf dem Abrichter auf Radien auf der Schnecke von besonderer Bedeutung, da auf Grund der Konizität, an jeder Breitenlinienposition die Schnecke über einen anderen Durchmesserbereich abgerichtet wird. Somit befinden sich beispielsweise die Punkte auf der Schnecke, welche den Beginn einer Kopfrücknahme der Verzahnung schleifen, an jeder Breitenposition auf einen anderen Radius.

## Schnecken mit kleinen Durchmessern und/oder großen Gangzahlen

Wie eingangs erwähnt wurde, können in den meisten Fällen Abrichter, die für einen bestimmten Schneckendurchmesser ausgelegt wurden, für einen großen Bereich an Schneckendurchmessern genutzt werden und erzeugen beim Abrichten die gewünschte Profilmodifikation auf der Schnecke, welche dann die richtige Profilmodifikation auf der Verzahnung erzeugt. Dies funktioniert jedoch nicht mehr, wenn das Verhältnis Schneckendurchmesser zu Modul der zu schleifenden Verzahnung, zu klein wird und/oder die Gangzahl groß ist. Schnecken mit kleinen Durchmessern kommen beispielsweise dann zum Einsatz, wenn ein Wälzschleifen mit einer größeren Schnecke aufgrund einer Störkontur nicht mehr möglich ist. Ein weiterer Anwendungsfall ist das Schleifen großmoduliger Verzahnungen. Da die einsetzbaren Schneckendurchmesser nach oben begrenzt sind, verringert sich das Verhältnis von Schneckendurchmesser zum Modul bei steigendem Modul. Mit der Möglichkeit moderner Verzahnmaschinen hohe Tischdrehzahlen zu realisieren, ist es auch möglich, Schnecken mit größeren Ganzahlen einzusetzen.

Werden solche Schnecken eingesetzt, erzeugt ein Abrichter, der für die Schnecke im Neuzustand ausgelegt wurde, für kleinere Radien einen ungewünschten Profilfehler, im Falle evolventischer Schnecken eine unerwünschte Profilballigkeit, wenn nach einem Verfahren gemäß dem Stand der Technik abgerichtet wird. Liegt dieser Profilfehler bzw. diese Profilballigkeit unterhalb eines Schneckendurchmessers außerhalb der Toleranz, so kann die Schnecke mit dem gegebenen Abrichter nicht weiter abgerichtet werden, wodurch die maximal nutzbare Belagdicke eingeschränkt ist. Dieses Problem kann bisher nur durch Verwendung verschiedener Abrichter für verschiedene Durchmesserbereiche gelöst werden. Mit dem hier beschriebenen Verfahren ist es jedoch möglich, mit nur einem Abrichter die Profilform über einen großen Durchmesserbereich konstant zu halten. Dazu wird der Abrichter als ein nicht zur Schnecke passender Abrichter betrachtet und die Abrichtkinematik so bestimmt, dass die gewünschte Profilform auf der Schnecke erzeugt wird. Vorzugsweise kommt hier bei evolventischen Schnecken die 3-Punkt-Methode zum Einsatz, sodass ein Radius auf dem Abrichter einem Radius auf der Schnecke zugeordnet werden kann. Dieses Verfahren führt jedoch zu einer im Allgemeinen unerwünschten relativen Profilstreckung auf der Verzahnung (siehe Figur 19a). Eine solche relative Profilstreckung ist unkritisch, wenn die im Abrichter eingebrachte Profilmodifikation an maximal einem Durchmesser auf der Verzahnung exakt zugeordnet werden muss. Das ist beispielsweise dann der Fall, wenn nur eine Rücknahme auf dem Profil eingebracht werden soll. Verfügt die Profilmodifikation jedoch über mindestens zwei solcher Durchmesser, beispielsweise eine Kopf- und eine Fußrücknahme, so würden diese beiden Punkte aufgrund der relativen Profilstreckung mit kleiner werdendem Schneckendurchmesser immer dichter zusammen rücken. Liegt für einen Schneckendurchmesser der Abstand dieser beiden Punkte außerhalb der Toleranz, so kann die Schnecke nicht weiter abgerichtet und genutzt werden. Eine Lösung dieses Problems bietet die Möglichkeit, eine Verzahnung mit Schnecken verschiedener Profilwinkel $\alpha_{nFS}$ zu schleifen. Wird ein Abrichter für eine Schnecke mit Durchmesser $d_{S0}$ und einem Profilwinkel $\alpha_{nFS0}$ ausgelegt, so kann mit diesem eine Schnecke mit kleinerem Durchmesser und anderem Profilwinkel mit der 3-Punkt-Methode so abgerichtet werden, dass die Profilballigkeit auf der Verzahnung der Sollvorgabe entspricht. Wie die dabei für einen festen Schneckendurchmesser entstehende relative Profilstreckung vom gewählten Profilwinkel abweicht, zeigt Figur 19b. Für alle 3 gezeigten Gangzahlen gibt es einen Nulldurchgang dieser Verläufe, das heiß, der Profilwinkel kann so gewählt werden, dass die relative Profilstreckung 0 ist. Figur 19c zeigt den auf diese Weise für verschiedene Schneckenradien ermittelten Profilwinkel. Die Kombination der 3-Punkt-Methode mit der Wahl geeigneter Profilwinkel erlaubt es so, bei kleinen Schneckendurchmessern und/oder großen Gangzahlen, die Profilform auf der Verzahnung über einen sehr großen Bereich des Schneckendurchmessers nahezu konstant zu halten.

Bei asymmetrischen Verzahnungen kann der Profilfehler bzw. die Profilballigkeit analog korrigiert werden. Soll bei evolventischen Schnecken die relative Profilstreckung ebenfalls korrigiert werden, so ist eine Korrektur über den Profilwinkel der Schnecke beim Schleifen mit zylindrischen Schnecken nur eingeschränkt möglich. Die Berechnung des Profilwinkels, welcher die relative Profilstreckung verschwinden lässt, muss auf linker und rechter Flanke separat durchgeführt werden und führt im Allgemeinen zu einer Schnecke, die nicht mehr zum Wälzschleifen der Verzahnung geeignet ist, da Gleichung (20) nicht mehr für beide Seiten erfüllt ist. Es kann jedoch eine zylindrische Schnecke genutzt werden, deren Profilwinkel auf rechter und linker Flanke so gewählt sind, dass die Verzahnung geschliffen werden kann und die relative Profilstreckung auf linker und rechter Flanke minimiert ist. Alternativ ist die Verwendung einer konischen (Beveloid) Schnecke möglich. Der Konuswinkel dieser Schnecke kann dann so gewählt werden, dass mit der Schnecke die Verzahnung geschliffen werden kann und die relative Profilstreckung auf beiden Flanken 0 ist.

**Mehrhubabrichten**

Um möglichst wirtschaftlich abrichten zu können, ist es von Vorteil, Abrichter zu verwenden, die während des Abrichtens Kontakt vom Schneckenkopf bis zum Schneckenfuß haben. Auch wenn es die Erfindung ermöglicht, die Profilform mit solchen Abrichtern zu beeinflussen, so gibt es Profilmodifikationen, die mit einem universell einsetzbaren Abrichter nicht möglich sind. In der Lohn- und Kleinserienproduktion ist jedoch hohe Flexibilität gefragt. Werden daher Abrichter mit kleineren aktiven Bereichen eingesetzt, so können mit diesen pro Hub nur Teile des Profils abgerichtet werden und in jedem dieser Bereiche kann, das hier beschriebenes Verfahren angewendet werden, insbesondere kann die Modifikation an 3 bzw. 4 Wälzwegen vorgegeben werden. Dies erlaubt eine sehr flexible Gestaltung der Profilmodifikation, erfordert jedoch deutlich weniger Hübe im Vergleich zu einem aus dem Stand der Technik bekannten Zeilenabrichten mit Punktkontakt. Vorzugsweise kann hier die 3-Punkt-Methode eingesetzt werden, um in jedem Hub den aktiven Bereich des Abrichters dem im aktuellen Hub abzurichtenden Bereich zuzuordnen. Figur 20a zeigt beispielhaft eine Profilmodifikation $f_{nFS}$, welche sich aus den 3 Bereichen 30, 31, 32 zusammensetzt. In jedem dieser Bereiche können Profilwinkelabweichung und Profilballigkeit separat vorgegeben werden. Die Bereiche 30 und 32 werden jeweils in einem Hub abgerichtet, das Hauptprofil 31 in 4 Hüben. Die Größe des aktiven Bereiches auf dem Abrichter ist hier so gewählt, dass der Bereich 34 unterhalb des Fußnutzkreises $w_{NfFS}$ der Schecke beginnt. Ein solches Unterschreiten des Fußnutzkreises ist in gewissen Grenzen unkritisch, da dieser Bereich der Schnecke im Allgemeinen beim Wälzschleifen keinen Kontakt mit der Verzahnung hat. Ein entsprechend große Wahl des Abrichters bringt jedoch den Vorteil, dass für das Hauptprofil weniger Hübe benötigt werden, im Vergleich zu einem aktiven Bereich, mit dem der Fußnutzkreis nicht unterschritten würde. Um die Zahl der Hübe noch weiter zu reduzieren ohne dabei an Flexibilität zu verlieren, ist die Möglichkeit einen Abrichter mit mehreren vorzugsweise verschieden großen aktiven Bereichen zu nutzen. Es können dann mit verschiedenen aktiven Bereichen auf dem Abrichter verschiedene Bereiche auf der Schnecke abgerichtet werden. Wählt man beim gerade betrachteten Beispiel einen großen aktiven Bereich des Abrichters für das Hauptprofil, so lässt sich für dieses die Anzahl der Hübe von 4 auf 2 reduzieren (siehe Figur 20b). Ein solcher Abrichter und ein Verfahren, welches eine solche Zuordnung beschreibt sind bereits aus der DE19624842C2 bekannt. Mit dem dort beschrieben Verfahren ist es jedoch nur möglich, in den einzelnen Bereichen den Profilwinkel über die Abrichtkinematik vorzugeben, einen Vorgabe komplexere Modifikationen, welche an 3 bzw. 4 Punkten erreicht werden sollen, ist jedoch nicht möglich. Insbesondere ist auch keine Vorgabe der Profilballigkeit in den einzelnen Bereichen möglich. Die erzielbaren Profilballigkeiten ergeben sich nur aus der in den Abrichter gelegten Modifikation.

Das Abrichten in mehreren Hüben kann nicht nur zum Erzeugen reiner Profilmodifikationen genutzt werden, sondern kann direkt auf das Abrichten topologisch korrigierter Schnecken übertragen werden, analog zum Abrichten in einem Hub. Dabei ist es möglich, die Bereiche, welche während eines Hubs abgerichtet werden, über die Breite der Schnecke zu verschieben. So können beispielsweise die Positionen der Übergänge zwischen den Bereichen 30 und 31 bzw. 31 und 32 in Figur 20a über die Schneckenbreite frei vorgegeben werden. Eine so modifizierte Schnecke kann dann beispielsweise genutzt werden, um mittels Diagonalwälzschleifens auf der Verzahnung einen über die Verzahnbreite variablen Beginn der Kopf- und Fußrücknahmen zu realisieren.

Ein bei mehreren Hüben verwendeter Abrichter kann auch bereits Modifikationen enthalten, die dann gezielt auf der Schnecke platziert werden. So kann ein Abrichter beispielsweise einen Bereich aufweisen, der zum Erzeugen der Kopfrücknahme, eines Teils des Hauptprofils und des Knicks zwischen beiden genutzt wird und einen zweiten Bereich aufweisen, der zum Erzeugen der Fußrücknahme, eines Teils des Hauptprofils und des Knicks zwischen beiden genutzt wird. Wird dann der obere Teil des Profils in einem Hub mit dem ersten Bereich und der untere Teil mit dem zweiten Bereich abgerichtet, so können die Verläufe des Beginns der Kopf- bzw. Fußrücknahme über die Breite der Schnecke unabhängig voneinander vorgegeben werden und am Übergang zwischen dem oberen und unteren Teil des Profils kann ein tangentialer Übergang realisiert werden. Eine so abgerichtete Schnecke kann im Diagonalwälzverfahren genutzt werden, um den Beginn der Kopf- und Fußrücknahme auf der Verzahnung abhängig von der Breitenposition frei vorzugeben.

Beim Mehrhubabrichten ist es prinzipiell auch möglich, dass mehr als nur ein Abrichter zum Einsatz kommt und so einzelne Hübe mit unterschiedlichen Abrichtern durchgeführt werden. Diese können unterschiedliche Modifikationen und/oder Geometrien haben und erlauben so ein noch flexibleres Abrichten.

**Betrachtung maximal erreichbarer Profilmodifikation insbesondere Profilballigkeit und Auswahl geeigneter Abrichter und Schnecken**

Wie bereits weiter oben erwähnt, sind die mit der Erfindung rein über die Abrichtkinematik herstellbaren Modifikationen durch verschiedene Randbedingungen limitiert. Diese sind:

- die rein mathematische Limitierung, welche sich über die Existenz von Nullstellen der im mathematischen Teil konstruierten Funktionen bestimmen lässt.
- die Kollision des Abrichter mit der Gegenflanke
- das Unterhöhlen der Schneckengänge
- die relative Profilstreckung
  Alle diese limitierenden Faktoren hängen vor allem von
- der Gangzahl der Schnecke $z_S$,
- dem Durchmesser der Schnecke $d_S$,
- dem Durchmesser des Abrichters $d_A$,
- und bei evolventischen Profilen vom Profilwinkel der Schnecke $a_{nFS}$

ab. Die Kollision mit der Gegenflanke und die Unterhöhlung hängen zusätzlich noch von der Breite der äußeren Mantelfläche des Abrichters und der Dicke des Schneckengangs ab. Die sich für eine zu schleifende Verzahnung aus diesen geometrischen Größen ergebenden Beträge der maximal möglichen Modifikationen können sich über mehrere Größenordnungen erstrecken. So kann für eine evolventische Verzahnung die maximal mit der Erfindung erzeugbare Profilballigkeit, abhängig von den geometrischen Größen, unterhalb $0.01\mu m$ oder auch oberhalb von $100\mu m$ liegen. Dieses Beispiel zeigt auf, wie wichtig ein Verständnis dieser Zusammenhänge und die Auswahl geeigneter Geometrien für die Anwendbarkeit dieses Verfahrens ist. Typische Schnecken und Abrichter die heute zum Einsatz kommen, erlauben oft nur kleine oder gar nur sehr kleine Profilballigkeiten.

Teil dieser Erfindung ist auch eine Berechnungseinheit/Software, welche für eine gegebene modifizierte Verzahnung zu einem gegebenen Satz an geometrischen Größen die Herstellbarkeit mit dem erfindungsgemäßen Verfahren vorzugsweise unter Berücksichtigung der in den Abrichter eingebrachten Modifikation prüft. Soll beispielsweise bei einer evolventischen Verzahnung eine Profilballigkeit von $20\mu m$ erzeugt werden, es steht jedoch nur ein Abrichter mit einer Modifikation zur Erzeugung von $15\mu m$ zur Verfügung, so ist zu prüfen, ob für die gegebene Geometrie beispielsweise mit der 3-Punkt-Methode eine Profilballigkeit von $5\mu m$ erzeugt werden kann. Eine solche Berechnungseinheit/Software kann zusätzlich auch eine Funktion enthalten, um für einen Satz an geometrischen Größen inklusive Abrichtermodifikation zu einer Verzahnung alle mit der Erfindung erzeugbaren Modifikationen zu berechnen. Beispielsweise kann im Falle eines evolventischen Profils die maximale und minimale erzeugbare Profilballigkeit bestimmen. Enthält der Abrichter eine Modifikation, welche als Profilmodifikation auf der Verzahnung abgebildet werden soll und diese Modifikation soll von einer gemäß der Erfindung erzeugten Modifikation überlagert zu werden, so ist optional zusätzlich zu prüfen, ob durch die entstehende relative Profilstreckung die Modifikation noch, im Rahmen der Toleranz, richtig auf der Verzahnung abgebildet wird.

Umgekehrt kann eine Berechnungseinheit/Software auch eine Funktionalität enthalten, um zu einer modifizierten Verzahnung und einem unvollständigen Satz an geometrischen Größen inklusive Abrichtermodifikation, Vorschlagswerte für die übrigen geometrischen Größen zu berechnen. Ist beispielsweise der Abrichter samt Modifikation gegeben sowie die Gangzahl der Schnecke, so können Durchmesser der Schnecke und/oder Profilwinkel der Schnecke so bestimmt werden, dass die geforderte Modifikation mit dem erfindungsgemäßen Verfahren erzeugt werden kann. Verfügt eine solche Berechnungseinheit/Software über eine Datenbank mit verfügbaren Abrichtern und/oder Schneckendurchmessern, so kann die Software alle zur Erzeugung einer bestimmten Modifikation geeigneten Kombinationen ermitteln. Eine solche Datenbank kann zusätzlich oder anstatt der Schneckendurchmesser auch Daten über bereits vorprofilierte verfügbare Schnecken enthalten. Solche Daten würden beispielsweise Gangzahl und/oder Durchmesser und/oder Konizität und/oder Profilwinkel und/oder Steigungshöhe enthalten. Eine solche Funktionalität ist insbesondere für Lohnverzahner von großem Interesse, da auf diese Weise Schnecken und Abrichter für verschiedene Verzahnungen genutzt werden können.

Solche Berechnungen können nicht nur für reine Profilmodifikationen durchgeführt werden, sondern auch für topologische Modifikationen auf der Schnecke. Dazu wird die Berechnung beispielsweise für diskrete Breitenpositionen durchgeführt. Eine solche Berechnung liefert beispielsweise mögliche Funktionswerte für die Funktionen $C_{0FS}(X_{FS})$, $C_{1FS}(X_{FS})$ und $C_{2FS}(X_{FS})$ aus Gleichung (23), und beschreibt so die Menge der erzeugbaren topologischen Modifikationen, insbesondere die minimal und maximal erzeugbare Profilballigkeit entlang der Berührline. Sind diese minimal und maximal benötigten Profilballigkeiten für eine topologische Modifikation bekannt, so können wiederum geeignete geometrische Größen bestimmt werden. Insbesondere für solche topologischen Modifikationen ist eine solche Funktionalität nicht nur in der Lohn- und Kleinserienfertigung von großer Bedeutung, sondern auch bei der Prozessauslegung für Serienproduktionen. Bei der Umkehr der Berechnung zu Bestimmung geeigneter geometrischer Größen und Abrichter wird bevorzugt die kritischste Breitenposition berücksichtigt.

**Verwendung von Schnecken mit ausgesparten bzw. inaktiven Gängen**

Die Betrachtung der maximal erzeugbaren Profilmodifikation insbesondere Profilballigkeiten beim einflankigen Abrichten zeigt, dass diese tendenziell größer werden, wenn

- die Gangzahl der Schnecke größer wird
- der Durchmesser der Schnecke kleiner wird
- der Durchmesser des Abrichters kleiner wird
- die Breite der äußeren Mantelfläche des Abrichters kleiner wird
- die Dicke des Schneckengangs kleiner wird
- der Profilwinkel bei evolventischen Schnecken größer wird

wobei die Limitierungen hauptsächlich die Kollision mit der Gegenflanke und das Unterhöhlen sind. Diese Einschränkungen der geometrischen Größen können sich negativ auf den Prozess auswirken. So führen beispielsweise zunehmende Gangzahlen und sinkende Schneckendurchmesser bei gleichbleibender Schnittgeschwindigkeit zu höheren Tischdrehzahlen. Auch wenn moderne Verzahnmaschinen immer höhere Tischdrehzahlen erlauben, so können die nötigen Tischdrehzahlen, die technisch möglichen leicht überschreiten. Zudem können mit Schnecken mit größeren Durchmessern aufgrund der längeren Berührlinie auf der Schnecke beim Wälzschleifen und den dadurch mehr in Eingriff gebrachten Schleifkörner teilweise bessere Rauhheitswerte erreicht werden. Kleinere Durchmesser des Abrichters können dahingehend nachteilig sein, dass sie eine kleinere aktive Fläche aufweisen und somit die Standzeit reduziert wird. Eine Möglichkeit, diese in bestimmten Fällen eintretenden Limitierungen zu umgehen, besteht darin, in der Schnecke einzelne Gänge auszusparen, um auf diese Weise mehr Platz in der Lücke zu schaffen und Kollisionen und Unterhöhlungen zu vermeiden. Soll beispielsweise mit einer zweigängigen Schnecke geschliffen werden, so kann einer der beiden Gänge beim Abrichten zumindest teilweise entfernt werden, wodurch dieser beim Schleifprozess inaktiv wird. Der Fußkreisradius kann gegenüber der ursprünglichen Schnecke optional verkleinert werden. Wie der Schleifprozess mit dieser Schnecke durchzuführen ist, hängt von der Zähnezahl der Verzahnung ab. Hat diese eine ungerade Zähnezahl, so kann der Prozess mit der ursprünglichen Anzahl an Schleifhüben, jedoch mit halbem Vorschub durchgeführt werden, sodass die technologischen Kenngrößen im Wesentlichen unverändert bleiben. Ist die Zähnezahl gerade, so werden alle Hübe doppelt mit dem ursprünglichen Vorschub durchgeführt, wobei vor der Wiederholung jeden Hubs, die Verzahnung um eine Teilung gedreht wird. Dieses Prinzip lässt sich direkt auf höhere Gangzahlen erweitern, wobei es von Vorteil ist, die Gangzahlen so zu wählen, dass die Bearbeitung in einem Hub durchgeführt werden kann, um periodisch auftretende Teilungssprünge zu vermeiden. Es ist dabei auch möglich, mehr als nur die beiden benachbarten Gänge eines verbleibenden Zahns zu entfernen und/oder die Zahl der entfernten Gänge zwischen zwei verbliebenen Gängen nicht immer gleich zu wählen.

**Berücksichtigung von Abweichungen in den Achsen**

Bei der Prüfung der Herstellbarkeit einer gegeben Profilmodifikation für einen Satz an geometrischen Größen bzw. bei der Bestimmung eines Satzes geometrischer Größen aus einer gegebenen Profilmodifikation kann es vorteilhaft sein, neben den bisher diskutierten Limitierungen auch die für das Abrichten nötigen Achskorrekturen $\Delta K$ zu betrachten. Die Figuren 8, 9, 10 und 11 zeigen den zum Teil sehr starken Einfluss vier der geometrischen Größen auf die Achskorrekturen. Zu große Korrekturen können sich jedoch nachteilig auswirken. Werden Achsen zu weit verfahren, kann es beispielsweise zu Kollisionen zwischen Schnecke und/oder Abrichter mit Maschinenteilen kommen. Ein weiteres Problem sind die durch die großen Verfahrwege zunehmenden Abweichungen in der Positionierung des Abrichters relativ zur Schnecke. Ja nach gewählten geometrischen Größen, liegen die Beträge der Achskorrekturen um Größenordnungen über den Beträgen der zu erzeugenden Profilmodifikationen und in diesen Fällen deutlich über Achskorrekturen, welche typischerweise bei Verfahren gemäß dem Stand der Technik benötigt werden. Der Einfluss solcher Abweichungen auf die erzeugte Modifikation kann mit der Funktion $f_{nFS}(w_{FS}; \Delta K)$ berechnet werden, wobei $\Delta K$ mit einer Abweichung versehen wird. Sind die, in erste Linie mechanisch bedingten Abweichungen der Achsen, abhängig von den Achskorrekturen bekannt, so lassen sich der Einfluss auf die zu erzeugende Profilmodifikation und der Fehler in der Profilmodifikation berechnen. Die geometrischen Größen können dann so bestimmt werden, dass der Fehler in der Profilmodifikation unterhalb einer gegebenen Toleranz liegt. Diese Betrachtung kann direkt auf die Erzeugung topologischer Modifikationen übertragen werden, wobei hier vorzugsweise die Berechnung für verschiedene Positionen der Berührline durchzuführen ist.

Die gerade betrachteten Abweichungen ergeben sich sowohl aus den Abweichungen der physikalischen Achsen als auch aus anderen mechanischen Abweichungen wie beispielsweise Schiefstehen des Ständers. Verfügt die Maschine über einen Bewegungsapparat, sodass die Berechnung der Koordinaten $B1,..,B_{N_s}$ nach Gleichung (3) zu einer nicht eindeutigen Lösung führt, so gibt es mehrere Sätze an Koordinaten $B_1,...,B_{N_s}$, welche zur selben Relativstellung zwischen Schnecke und Abrichter führen. Ein Beispiel einer Maschine, welche über einen solchen Bewegungsapparat verfügt, ist in Figur 22 dargestellt. Ihr Bewegungsapparat kann durch Gleichung (4) beschrieben werden. Eine nicht eindeutige Lösung für die Koordinaten $B_1,...,B_{N_s}$ bedeutet in der Regel, dass verschiedene Achsstellungen zur selben Relativstellung führen. Im Allgemeinen führen diese verschiedenen Lösungen zu unterschiedlichen Abweichungen in der Positionierung des Abrichters relativ zur Schnecke und somit zu unterschiedlichen Abweichungen in den Achskorrekturen $\Delta K$. Verzugsweise wird bei der Anwendung der Erfindung die Lösung ausgewählt, welche zum kleinsten, durch die Abweichungen verursachten Fehler im Profil führt. Optional können zusätzlich noch mögliche Kollisionen zwischen Schnecke und/oder Abrichter und/oder Maschinenteilen mit anderen Maschinenteilen bei der Auswahl einer geeigneten Lösung berücksichtigt werden. Diese Betrachtung kann direkt auf die Erzeugung topologischer Modifikationen übertragen werden, wobei hier bei der Auswahl der Lösung zusätzlich noch kinematische Gesichtspunkte berücksichtig werden können. So können beispielsweise technologisch ungünstige Richtungsumkehrungen einer oder mehrerer Achsen durch geeignete Wahl der Lösung in bestimmten Fällen vermieden werden. Lassen sich die Richtungsumkehrungen und/oder das Einstellen von Achswerten mit großen Abweichungen über die abzurichtenden Breite der Schnecke nicht umgehen, so können sich jedoch in bestimmten Fällen die Positionen der Berührlinie, an denen besonders unsichere Achswerte angefahren werden, beeinflussen. Sind die Toleranzen einer topologischen Modifikation nicht überall gleich, so können die ungünstigen Achswerte mit großen Abweichungen bevorzugt dann eingestellt werden, wenn die Berührlinie Bereiche großer Toleranz überstreicht.

**Berechnung von Abweichungen der Achsen aus Fehlern in der Modifikation**

Sind die Abweichungen der Achsen nicht bekannt, können diese aus dem durch sie verursachten Fehler im Profil rückgerechnet werden. Dazu wird die der Erfindung zugrunde liegende Berechnung genutzt, um aus der tatsächlich erzeugten Profilmodifikation die Achskorrekturen $\Delta K$ zu berechnen. Diese werden mit den in der Maschine beim Abrichten eingestellten Achskorrekturen verglichen und aus der Differenz ergibt sich die Abweichung der Achswerte. Wird eine topologische Modifikation abgerichtet, so kann diese Berechnung für verschiedene Positionen der Berührline durchgeführt werden. Auf diese Weise erhält man die Abweichungen für verschiedene Achswerte. Sind die Abweichungen bekannt, können die Achswerte bei weiteren Abrichtvorgängen entsprechend korrigiert und so die Profilfehler minimiert werden.

Die hierfür notwendige Kenntnis über tatsächlich erzeugten Profilmodifikationen auf der Schnecke sind im Allgemeinen nicht direkt bekannt und auch nicht direkt messbar. Sie bilden sich jedoch in der geschliffenen Verzahnung ab, welche vermessen werden kann und aus deren Profilmodifikation die Profilmodifikation auf der Schnecke berechnet werden kann. Dies funktioniert beim Diagonalwälzschleifen mit einer topologisch modifizierten Schnecke analog, wobei hier die Kenntnis über die Zuordnung von Punkten auf der Verzahnung zu Punkten auf der Schnecke von Nöten ist. Eine solche Zuordnung ist in dem Fall jedoch im Allgemeinen bekannt, da diese bereits zur Bestimmung der topologischen Modifikation der Schnecke benötigt wird.

**Gezielte Nutzung der Profilstreckung**

Der Effekt der Profilstreckung kann auch gezielt genutzt werden. Soll beispielsweise eine Schnecke mit einem modifizierten Abrichter abgerichtet werden, die in den Abrichter eingebrachte Modifikation jedoch eine gestreckte oder gestauchte Profilmodifikation auf der Schnecke erzeugen würde, so kann das erfindungsgemäße Verfahren eingesetzt werden, um die relative Profilstreckung so einzustellen, dass die auf der Schnecke erzeugte Profilmodifikation richtig gestreckt ist. Wird eine relative Profilstreckung erzeugt, so entsteht beispielsweise bei evolventischen Profilen gleichzeitig eine Profilballigkeit. Wie groß diese bei gegebener relativer Profilstreckung ist, hängt vor allem von den geometrischen Größen der Schnecke und des Abrichters ab (siehe Figur 13). Diese Profilballigkeit kann in bestimmten Fällen so klein sein, dass sich in wesentlichen nur eine Streckung, jedoch keine Überlagerung mit einer Profilballigkeit ergibt. Um dies zu erreichen, kann die Schneckengeometrie entsprechend gewählt werden. Es ist jedoch auch möglich, die Schneckengeometrie so zu wählen, dass nicht nur die Profilstreckung, sondern auch die durch die Abrichtkinematik erzeugte Profilmodifikation, insbesondere die Profilballigkeit im Falle von Evolventenverzahnungen, entsprechend einer Vorgabe erreicht wird. Dies kann auch auf das Abrichten topologisch modifizierter Schnecken übertragen werden, wodurch es möglich wird, mit einer geeigneten Schnecken- und Abrichtergeometrie, gezielt die Profilstreckung über die Schneckenbreite zu variieren und gleichzeitig nur eine vernachlässigbar kleine Profilballigkeit zu erzeugen. Es ist auch möglich, gezielt die Profilstreckung und die Profilballigkeit über die Schneckenbreite zu variieren, wobei beide aneinander gekoppelt sind. Mit einer exakt abgestimmten Schnecken- und Abrichtergeometrie (insbesondere Gangzahl, Profilwinkel, beide Durchmesser) kann diese Kopplung wie benötigt eingestellt werden. Die in erster Näherung lineare Kopplung ist in Figur 13 dargestellt. Die Profilstreckung und beispielsweise die Profilmodifikation wirken sich dabei für jede Breitenposition entlang der aktuellen Berührlinie aus. Insbesondere bei asymmetrischen Verzahnungen und/oder wenn die Kopplung für linke und rechte Flanke verschieden sein soll, kann eine konische Schnecke verwendet werden und zusätzlich eine Variation des Konuswinkels zum getrennten Einstellen der Kopplung auf linker und rechten Flanke genutzt werden. Mit kleiner werdendem Schneckendurchmesser verändert sich jedoch diese Kopplung, was sich durch eine entsprechend abgestimmte Anpassung des Profilwinkels wieder korrigieren lässt.

**2. Beschreibung Diagonalwälzschleifen**

Der zweite Teil der Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen

- Schälwälzfräsen

- Schaben

- Wälzschleifen

- Honen

Wird das Verfahren beim Wälzschleifen angewandt, können sowohl abrichtbare als auch nicht abrichtbare Werkzeuge eingesetzt werden. Das Abrichten kann mit einer Profilrolle ein- oder zweiflankig erfolgen, aber ebenso ein- oder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfahren).

Größen, die für linke und rechte Flanken unterschiedlich sind bzw. sein können, werden mit dem Index F versehen. F kann $l$ (links) oder r (rechts) sein. Gleichungen, in den der Index F vorkommt, gelten immer für linke und rechte Flanken. Die hier betrachteten Evolventenverzahnungen werden abhängig von den Grundkreisradien ($r_{br}, r_{bl}$) und den Grundschrägungswinkeln ($\beta_{br}, \beta_{bl}$) in folgende vier Typen unterteilt.

1. Zylindrisch symmetrisch:

$$r_b := r_{br} = r_{bl} \text{ und } \beta_b := \beta_{br} = \beta_{bl}$$

2. Zylindrisch asymmetrisch:

$$r_{br} \neq r_{bl} \text{ und } \frac{\tan \beta_{br}}{r_{br}} = \frac{\tan \beta_{bl}}{r_{bl}}$$

3. Konisch symmetrisch:

$$\beta_{br} \neq \beta_{bl} \text{ und } r_{br} \cos \beta_{br} = r_{bl} \cos \beta_{bl}$$

4. Konisch asymmetrisch:

$$\beta_{br} \neq \beta_{bl} \text{ und } r_{br} \cos \beta_{br} \neq r_{bl} \cos \beta_{bl} \text{ und } \frac{\tan \beta_{br}}{r_{br}} \neq \frac{\tan \beta_{bl}}{r_{bl}}$$

Im Folgenden wird die Klasse der topologischen Oberflächenmodifikationen definiert, welche mit dem hier zunächst beschriebenen Verfahren erzeugt werden können. Dazu wird die übliche Beschreibung topologischer Oberflächenmodifikationen betrachtet. Diese werden beschrieben über eine Funktion $f_{Ft}(w_F, z_F)$, wobei $w_F$ der Wälzweg und $z_F$ die Position in Breitenlinienrichtung ist. Eine topologische Oberflächenmodifikation gehört zur hier betrachten Klasse an Oberflächenmodifikationen, wenn Funktionen $F_{FtC}$, $F_{FtL}$ und $F_{FtQ}$ existieren, mit

$$f_{Ft}(w_F, z_F) = F_{FtC}(X_F) + F_{FtL}(X_F) \cdot w_F + F_{FtQ}(X_F) \cdot w_F^2 \, , \tag{25}$$

mit

$$X_F = w_F \sin \rho_F + z_F \cos \rho_F \, , \tag{26}$$

und $f_{Ft}(w_F, z_F)$ die Oberflächenmodifikation exakt oder zumindest näherungsweise beschreibt. Jedes $X_F$ definiert eindeutig eine Gerade auf der Flanke in den Koordinaten $w_F$ und $z_F$.

Anschaulich gesprochen bedeutet die Definition der Oberflächenmodifikation, dass diese entlang jeder durch ein $X_F$ gegeben Gerade die Form einer Parabel (Polynom zweiten Grades) hat oder durch diese angenähert werden kann. Die Form der Parabel und somit die Koeffizienten des Polynoms können für jede solche Gerade verschieden sein. Die Koeffizienten werden, abhängig von $X_F$ durch die Funktionen $F_{FtC}$, $F_{FtL}$ und $F_{FtQ}$ gegeben. Mit eingeschlossen sind hierbei auch die Fälle, in denen einzelne oder alle Koeffizienten für gewisse $X_F$ gleich Null, insbesondere auch die Fälle, in denen die Parabel für bestimmte $X_F$ zu einer linearen oder konstanten Funktion entartet. Auch mit eingeschlossen ist der spezielle Fall, in dem $F_{FTQ} = 0$ für alle $X_F$. In diesem Fall ist die Oberflächenmodifikation entlang der durch $X_F$ definierten Geraden durch eine lineare Funktion gegeben, wobei auch hier die Funktion für gewisse $X_F$ zu einer konstanten Funktion entarten kann.

Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Für den Spezialfall $\rho_F = \pm \frac{\pi}{2}$, ist die Oberflächenmodifikation eine reine Profillinienmodifikation.

Bisher ist kein Verfahren bekannt, mit dem mit einem der hier betrachteten Fertigungsverfahren die hier betrachteten Oberflächenmodifikation abweichnungsfrei oder mit ausreichender Näherung hergestellt werden können, mit Ausnahme einiger Sonderfälle. Mit abweichnungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken $E_F$, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$

$$= \begin{pmatrix} r_{bF} \cdot \sin\left(s_F \cdot \left(\frac{w_F}{r_{bF}} + \eta_{bF}\right) - \frac{z_F \cdot \tan(\beta_{bF})}{r_{bF}}\right) - s_F \cdot w_F \cdot \cos\left(s_F \cdot \left(\frac{w_F}{r_{bF}} + \eta_{bF}\right) - \frac{z_F \cdot \tan(\beta_{bF})}{r_{bF}}\right) \\ r_{bF} \cdot \cos\left(s_F \cdot \left(\frac{w_F}{r_{bF}} + \eta_{bF}\right) - \frac{z_F \cdot \tan(\beta_{bF})}{r_{bF}}\right) + s_F \cdot w_F \cdot \sin\left(s_F \cdot \left(\frac{w_F}{r_{bF}} + \eta_{bF}\right) - \frac{z_F \cdot \tan(\beta_{bF})}{r_{bF}}\right) \\ z_F \end{pmatrix}$$

$$(27)$$

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkzeug so abstimmen, dass auf dem Werkstück die gewünschte Modifikation erzeugt wird.
Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die x-Achse. Analog für *y* und *z*
- $T_x(v)$ Translation um die Strecke *v* in x-Richtung. Analog für *y* und *z*
- $H(A_1,...,A_N)$ allgemeine Transformation beschreibbar durch eine homogene Matrix mit insgesamt *N* Koordinaten $A_1$ bis $A_N$.

Der Begriff "Koordinaten" wird hier für generalisierte, nicht notwendigerweise unabhängige Koordinaten verwendet.
Die Rotationsachse einer Verzahnung fällt in ihrem Ruhesystem immer mit der z-Achse zusammen. Die Verzahnungsmitte liegt bei z = 0.
Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \tag{28}$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- *d*: Achsabstand (Werkzeug/Werkstück)
- $\gamma$: Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \qquad (29)$$

- $\varphi_1$: Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- $d$: Maß für Achsabstand (Werkzeug/Werkstück)
- $\gamma$: Achskreuzwinkel (Werkzeug/Werkstück)
- $\vartheta_1$: Konuswinkel Werkzeug
- $r_{w1}$: Wälzkreisradius des Werkzeugs

**Kinematische Kette für zylindrisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (30)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- $d$: Maß für Achsabstand (Werkzeug/Werkstück)
- $\gamma$: Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot$$
$$T_y(-r_{w2}) \cdot R_z(\varphi_2) \qquad (31)$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- $d$: Maß für Achsabstand (Werkzeug/Werkstück)
- $\gamma$: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \dots, A_{N_s}) \text{ mit } N_s \geq 1 \tag{32}$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \dots, A_{N_s}$ existieren, mit

$$H(A_1, \dots, A_{N_s}) = K_R \tag{33}$$

Die Berechnung der Koordinaten $A_1, \dots, A_{N_s}$ kann mittels einer Koordinatentransformation durchgeführt werden.

Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \tag{34}$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \tag{35}$$

Figur 22 zeigt schematisch eine Verzahnmaschine mit einem durch $H_{Bsp1}$ beschriebenen Bewegungsapparat.

Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.

Wird im Diagonalwälzverfahren bearbeitet, wird zusätzlich die $z_{V1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.

Im weiteren Verlauf wird jedoch auch für zylindrische Werkzeuge bzw. Werkstücke für $z_{V1}$ bzw. $z_{V2}$ der Begriff Vorschub verwendet.

Wird mit einem konstanten Diagonalverhältnis geschliffen, so ist $z_{V1}$ eine Funktion von $z_{V2}$ und es gilt folgender Zusammenhang:

$$z_{V1}(z_{V2}) = K_{Z_{V1}} \cdot z_{V2} + z_{V01} \tag{36}$$

$K_{Z_{V1}}$ ist hierbei das Diagonalverhältnis und $z_{V01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{Z_{V1}} \neq 0$ wird vom Diagonalwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg (w) und der Position in Breitenlinienrichtung (z) in Abhängigkeit der Vorschubpositionen $z_{V1}$ und $z_{V2}$.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben ebenfalls zumindest näherungsweise eine Modifikation gemäß Gleichung (25). Diese Art der Modifikation ist insbesondere bei abrichtbaren Schleifschnecken sehr vorteilhaft, da sich diese beim Abrichten mit einer Abrichtscheibe auf der Schnecke erzeugen lässt. Ein Verfahren zum Abrichten einer Schnecke mit einer solchen Oberflächenmodifikation wird ersten Teil dieser Anmeldung beschrieben.

Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \sin \rho_{F1} + z_{F1} \cos \rho_{F1} = X_{F1} \ . \tag{37}$$

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

Eine Modifikation $f_{nF1}$ an einem Punkt auf der Schnecke, definiert in Normalenrichtung auf der Schneckengangoberfläche führt zu einer Modifikation $f_{nF2} = -f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos\beta_{bF} \tag{38}$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (25) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{V1}$ und $z_{V2}$ beschrieben. Dieser Verlauf hängt von den Grundkreisradien und Grundschrägungswinkeln des Werkstücks und der Schnecke sowie vom Achsabstand $d$ und dem Achskreuzwinkel $\gamma$ ab. Die Relative Lage von Werkstück zu Schnecke wird bei dieser Betrachtung durch Gleichung (28) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1} \tag{39}$$

$$z_{F2} = C_{Fw2} \cdot w_{F2} - z_{V2} + C_{Fc2} \tag{40}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{41}$$

$$C_{Fc1} = C_{Fc1}(\beta_{bF1}, \beta_{bF2}, r_{bF1}, d, \gamma) \tag{42}$$

$$C_{Fw2} = C_{Fw2}(\beta_{bF2}) \tag{43}$$

$$C_{Fc2} = C_{Fc2}(\beta_{bF1}, \beta_{bF2}, r_{bF2}, d, \gamma) \tag{44}$$

Diese Relation zeigt auf, dass es einen linearen Zusammenhang zwischen $z_F$, $w_F$ und $z_V$ sowohl für Schnecke aus auch für Werkstück gibt.

Betrachtet man im Herstellprozesses alle Punkte auf dem Werkstück mit einem festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{45}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fc} = \hat{C}_{Fc}(\beta_{bF1}, r_{bF1}, \beta_{bF2}, r_{bF2}, d, \gamma) \tag{48}$$

Die gerade vorgestellten Relationen folgen direkt aus einer analytischen Berechnung der Berührpunkte zweier Evolventenverzahnungen, welche gemäß der kinematischen Kette aus Gleichung (28) zueinander orientiert sind.

Die Grundidee der Erfindung liegt nun darin, die obigen Beziehungen, zusammen mit dem konstanten Diagonalverhältnis aus Gleichung (36) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (25) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (39) und (40) nach $z_{V1}$ bzw. $z_{V2}$ aufgelöst und in Gleichung (36) eingesetzt, anschließend Gleichung (7) für Schnecke und Werkstück genutzt um $z_{F1}$ und $z_{F2}$ zu eliminieren und mit Gleichung (45) $w_{F1}$ ersetzt. Dies führt zu einer Relation der Form:

$$\bar{C}_{Fc} + \bar{C}_{Fw2} \cdot w_{F2} = 0 \, , \tag{49}$$

welche für alle $w_{F2}$ gelten muss. $\overline{C}_{Fwz}$ hat unter anderem eine Abhängigkeit von $K_{ZV1}$. $\overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{ZV1}$ sowohl für linke als auch für rechte Flanke berechnen, sowie $X_{F2}$ als Funktion von $X_{F1}$, ebenfalls für linke und rechte Flanke. $K_{ZV1}$, wie in Gleichung (36) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{l2} = \rho_{r2}$ führt diese Berechnung bei einer symmetrischen Verzahnung zu gleichen Diagonalverhältnissen $K_{ZV1}$ für linke und rechte Flanke. Somit ist ein zweiflankiges, abweichungsfreies Wälzschleifen möglich.

Ist jedoch $p_{l2} = {}_{\rho r2}$ und/oder die Verzahnung asymmetrisch, so führt die Berechnung im Allgemeinen zu unterschiedlichen Diagonalverhältnissen $K_{ZV1}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{ZV1}$ einzustellen sind. Gibt es ein Diagonalverhältnis $K_{ZV1}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

## Konisches Werkzeug und zylindrisches Werkstück

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (29) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden, d.h. es wird eine Schnecke mit einer Modifikation gemäß Gleichung (25) im Diagonalwälzverfahren verwendet, um auf dem Werkstück eine Modifikation ebenfalls gemäß Gleichung (25) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fc1} \tag{50}$$

$$z_{F2} = C_{Fw2} \cdot w_{F2} + C_{Fz_{V1}2} \cdot z_{V1} - z_{V2} + C_{Fc2} \tag{51}$$

Die hier eingeführten Koeffizienten $C_{Fw1}$, $C_{Fc1}$, $C_{Fw2}$, $C_{Fz_{V1}1}$, $C_{Fz_{V1}2}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_1) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_1) \tag{55}$$

$$C_{Fz_{V1}1} = C_{Fz_{V1}1}(\beta_{bF1}, \beta_{bF2}, r_{bF1}, d, \gamma, \vartheta_1) \tag{56}$$

$$C_{Fz_{V1}2} = C_{Fz_{V1}2}(\beta_{bF1}, \beta_{bF2}, r_{bF2}, d, \gamma, \vartheta_1) \tag{57}$$

Gleichung (45) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fc} = 0 \tag{58}$$

Die hier eingeführten Koeffizienten $\hat{C}_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{61}$$

$$\hat{C}_{Fc} = \hat{C}_{Fc}(\beta_{bF1}, r_{bF1}, \beta_{bF2}, r_{bF2}, d, \gamma, \vartheta_1) \tag{62}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (25) an, führt dies zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$, Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin mit einander kämmen und so ein Schraubwälzgetriebe bilden können.

Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Z_{V1}}$ auf linker und rechter Flanke unterschiedlich. Diese unterschiedliche Beeinflussung erlaubt es, ein $\vartheta_1$ zu bestimmen, sodass $K_{Z_{V1}}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $y$ den Wert $K_{Z_{V1}}$. Somit können zusätzlich zum Konuswinkel diese Größen variiert werden, um gleiches $K_{Z_{V1}}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

**Zylindrisches Werkzeug und konisches Werkstück**

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (25) aufweist. Schnecke und Werkstück bilden wieder ein Schraubwälzgetriebe, dessen Kinematik durch Gleichung (30) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V2}1} \cdot z_{V2} + C_{Fc1} \tag{63}$$

$$z_{F2} = C_{Fw2} \cdot w_{F2} + C_{Fz_{V2}2} \cdot z_{V2} + C_{Fc2} \tag{64}$$

Die hier eingeführten Koeffizienten $C_{Fw1}$, $C_{Fc1}$, $C_{Fw2}$, $C_{Fz_{V2}2}$, $C_{Fz_{V2}1}$ und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_2) \tag{68}$$

$$C_{Fz_{V2}2} = C_{Fz_{V2}2}(\beta_{bF1}, \beta_{bF2}, r_{bF2}, d, \gamma, \vartheta_2) \tag{69}$$

$$C_{Fz_{V2}1} = C_{Fz_{V2}1}(\beta_{bF1}, \beta_{bF2}, r_{bF1}, d, \gamma, \vartheta_2) \tag{70}$$

Gleichung (45) wird ersetzt durch:

$$\hat{C}_{Fw1} \cdot w_{F1} + \hat{C}_{Fw2} \cdot w_{F2} + \hat{C}_{Fz_{V2}} \cdot z_{V2} + \hat{C}_{Fc} = 0 \tag{71}$$

Die hier eingeführten Koeffizienten $\hat{C}_{Fw1}$, $\hat{C}_{Fw2}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{72}$$

$$\hat{C}_{Fw2} = \hat{C}_{Fw2}(\beta_{bF2}) \tag{73}$$

$$\hat{C}_{Fz_{V2}} = \hat{C}_{Fz_{V2}}(\beta_{bF1}, r_{bF1}, \beta_{bF2}, r_{bF2}, \gamma, \vartheta_2) \tag{74}$$

$$\hat{C}_{Fc} = \hat{C}_{Fc}(\beta_{bF1}, r_{bF1}, \beta_{bF2}, r_{bF2}, d, \gamma, \vartheta_2) \tag{75}$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{Z_{V1}}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{Z_{V1}}$, sodass $\rho_{F2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

Konisches Werkzeug und konisches Werkstück

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (31) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fz_{V2}1} \cdot z_{V2} + C_{Fc1} \tag{76}$$

$$z_{F2} = C_{Fw2} \cdot w_{F2} + C_{Fz_{V1}2} \cdot z_{V1} + C_{Fz_{V2}2} \cdot z_{V2} + C_{Fc2} \tag{77}$$

Die hier eingeführten Koeffizienten $C_{Fw1}$, $C_{Fc1}$, $C_{Fw2}$, $C_{Fz_{V2}2}$, $C_{Fz_{V2}1}$, $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \tag{78}$$

$$C_{Fc1} = C_{Fc1}(\beta_{bF1}, \beta_{bF2}, r_{bF1}, d, \gamma, \vartheta_1, \vartheta_2) \tag{79}$$

$$C_{Fw2} = C_{Fw2}(\beta_{bF2}) \tag{80}$$

$$C_{Fc2} = C_{Fc2}(\beta_{bF1}, \beta_{bF2}, r_{bF2}, d, \gamma, \vartheta_1, \vartheta_2) \tag{81}$$

$$C_{Fz_{V2}2} = C_{Fz_{V2}2}(\beta_{bF1}, \beta_{bF2}, r_{bF2}, d, \gamma, \vartheta_1, \vartheta_2) \tag{82}$$

$$C_{F_{Z_{V_2}}1} = C_{F_{Z_{V_2}}1}(\beta_{bF1}, \beta_{bF2}, r_{bF1}, d, \gamma, \vartheta_1, \vartheta_2) \tag{83}$$

$$C_{F_{Z_{V_1}}2} = C_{F_{Z_{V_1}}2}(\beta_{bF1}, \beta_{bF2}, r_{bF2}, d, \gamma, \vartheta_1, \vartheta_2) \tag{84}$$

$$C_{F_{Z_{V_1}}1} = C_{F_{Z_{V_1}}1}(\beta_{bF1}, \beta_{bF2}, r_{bF1}, d, \gamma, \vartheta_1, \vartheta_2) \tag{85}$$

Gleichung (45) wird ersetzt durch:

$$\hat{C}_{Fw1} \cdot w_{F1} + \hat{C}_{Fw2} \cdot w_{F2} + \hat{C}_{F_{Z_{V1}}} \cdot z_{V1} + \hat{C}_{F_{Z_{V2}}} \cdot z_{V2} + \hat{C}_{Fc} = 0 \tag{86}$$

Die hier eingeführten Koeffizienten $\hat{C}_{Fw1}$, $\hat{C}_{Fw2}$, $\hat{C}_{F_{Z_{V1}}}$, $\hat{C}_{F_{Z_{V2}}}$ und $\hat{C}_{Fc}$ haben folgende Abhängigkeiten:

$$\hat{C}_{Fw1} = \hat{C}_{Fw1}(\beta_{bF1}) \tag{87}$$

$$\hat{C}_{Fw2} = \hat{C}_{Fw2}(\beta_{bF2}) \tag{88}$$

$$\hat{C}_{F_{Z_{V1}}} = \hat{C}_{F_{Z_{V1}}}(\beta_{bF1}, r_{bF1}, \beta_{bF2}, r_{bF2}, \gamma, \vartheta_1, \vartheta_2) \tag{89}$$

$$\hat{C}_{F_{Z_{V2}}} = \hat{C}_{F_{Z_{V2}}}(\beta_{bF1}, r_{bF1}, \beta_{bF2}, r_{bF2}, \gamma, \vartheta_1, \vartheta_2) \tag{90}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{91}$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizienten-vergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch der Grundkreisradien und Grundschrägungs-winkel das Diagonalverhältnis $K_{Z_{V1}}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{Z_{V1}}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{t1}(X_{F1})$ gegeben durch:

$$F_{Ft1}(X_{F1}) = -\frac{\cos\beta_{bF2}}{\cos\beta_{bF1}} \cdot F_{Ft2}(X_{F2}(X_{F1})) \tag{92}$$

$\square_{Ff2}(X_{F2})$ beschreibt die Modifikation auf dem Werkstück gemäß Gleichung (25).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

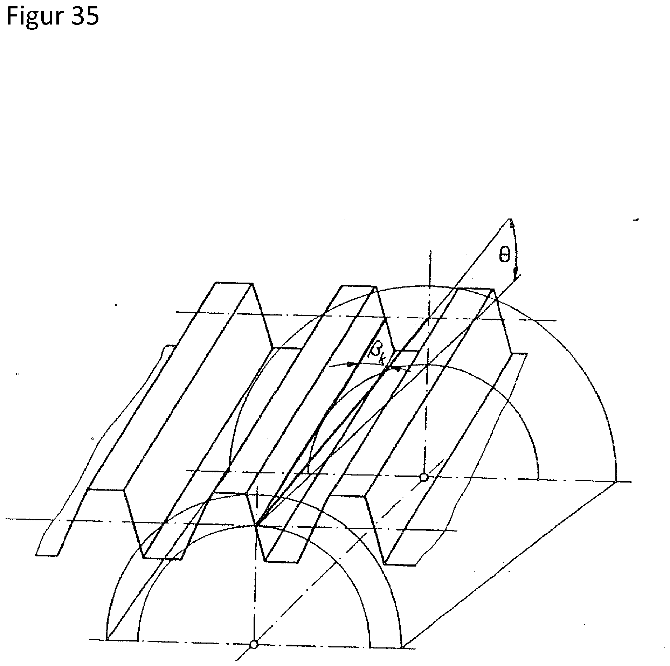

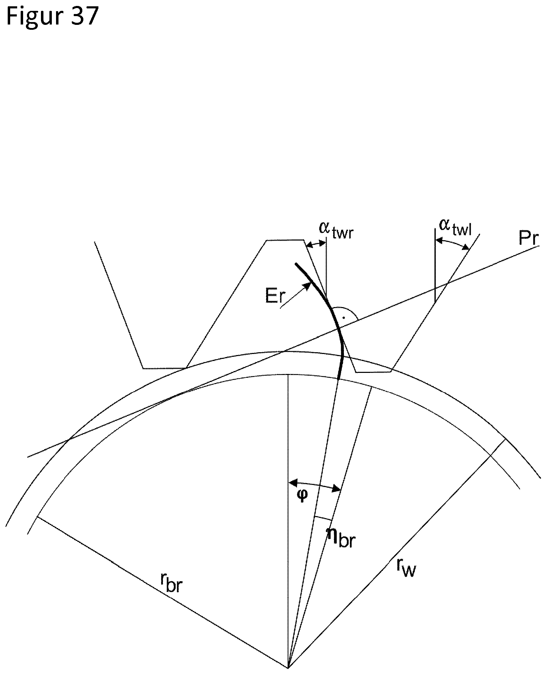

Figur 37 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 35). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über w und z aus der Parametrisierung in Gleichung (27), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigunsghöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, z, $z_V$ und $\varphi$.

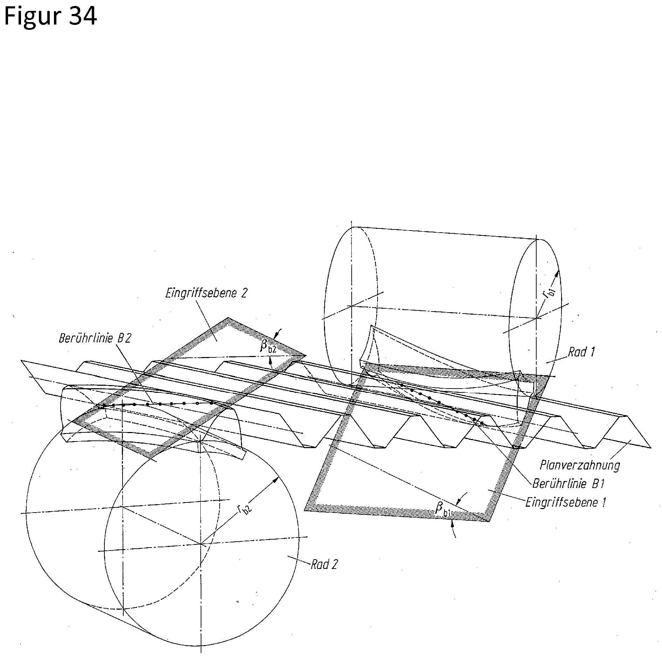

Werden zwei Verzahnungen in einem Schraubwälzgetriebe gepaart, so müssen deren beiden Zahnstangen zu jeder Zeit deckungsgleich sein, wie in Figur 34 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \tag{93}$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten $(w_{F2}, z_{F2})$ auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

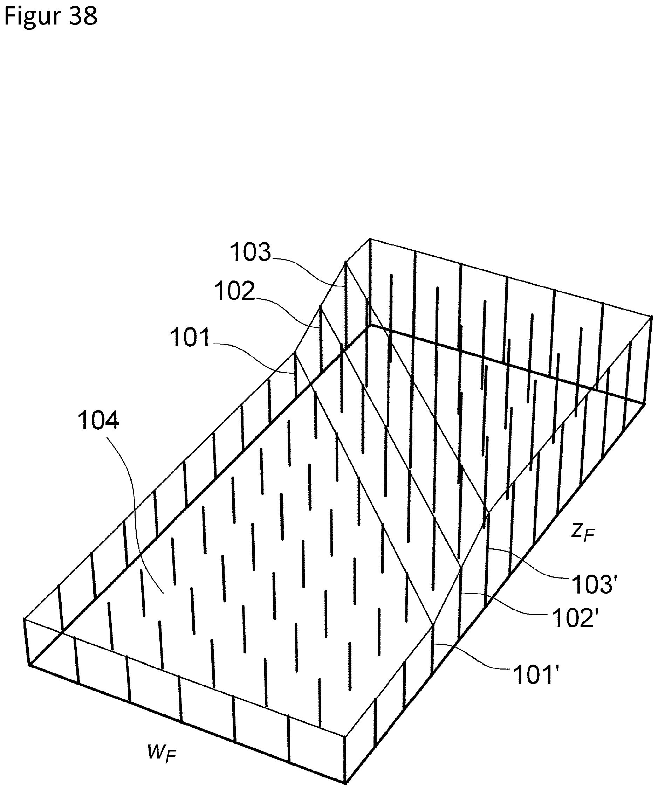

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shiftposition $z_{V2}$ des Werkstücks abgebrochen, so haben, für einen gegebenen Radius auf der Schnecke nur die Vektoren annähernd dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 38). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annähernd gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (39) bzw. (40), beispielsweise mittels einer Ausgleichsrechnung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (45), beispielsweise mittels einer Ausgleichsrechnung bestimmen.

Ist die Schnecke konisch und das Werkstück zylindrisch, so muss der Kontaktpfad für mindestens zwei verschiedene Vorschübe $z_{V1}$ bestimmt werden, um zusätzlich die Koeffizienten vor $z_{V1}$ in den Gleichungen (50), (51) und (58) zu bestimmen. Analog müssen mindestens zwei verschiedene Vorschübe $z_{V2}$ betrachtet werden, wenn Werkstück konisch und Schnecke zylindrisch sind. Sind Werkstück und Schnecke konisch, so müssen die Kontakpfade für mindestens zwei Vorschübe $z_{V1}$ und mindestens zwei Vorschübe $z_{V2}$ betrachtet werden, um alle Koeffizienten aus den Gleichungen (76), (77) und (86) zu bestimmen.

## Wahl der Makrogeometrie der Schnecke und des Abrichters

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten D-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

Weiterhin sind bei der Wahl der Makrogeometrie der Schnecke, im Falle der Nutzung abrichtbarer Werkzeuge, die Aspekte aus dem ersten Teil dieser Anmeldung zu berücksichtigen. So ist die Makrogeometrie so zu wählen, dass die erforderliche Oberflächenmodifikation auf der Schnecke über den Abrichtprozess erzeugt werden kann. Hierbei ist insbesondere sicherzustellen, dass entlang jeder Berührgeraden auf der Schnecke mit dem Abrichter, welche den aktiven Bereich der Schnecke berührt, die geforderte Balligkeit erreicht werden kann. Wird ein zweiflankiges Abrichten eingesetzt, so ist zu berücksichtigen, ob die erforderlichen topologischen Modifikationen auf der Schnecke auf linker und rechter Flanke beispielsweise mit dem Verfahren aus dem ersten Teil dieser Anmeldung erzeugt werden können. Besonders relevant ist dabei der Fall, bei dem nur konstante und lineare Anteile der Modifikation ($F_{FtC}$ und $F_{FtL}$) entlang der Berührlinie zwischen Abrichter und Schnecke benötigt werden. Solche Modifikationen lassen sich mit der 4-Punkt Methode in gewissen Grenzen fertigen. Inwieweit die linearen Anteile $F_{FtL}$ dabei auf linker und rechter Flanke dabei frei gewählt werden können, hängt stark von der Makrogeometrie der Schnecke ab, insbesondere von Durchmesser, Gangzahl, Konuswinkel und Profilwinkel und zusätzlich vom Durchmesser des Abrichters. Die 4-Punkt-Methode erlaubt es zu bestimmen, ob die gewünschte topologische Modifikation für bestimmte Makrogeometrien erzeugt werden können und erlaubt so, geeignete Makrogeometrien zu bestimmen.

## Nicht konstantes Diagonalverhältnis

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

Figur 23 zeigt am Beispiel zweier Dreiecksförmigen Endrücknahme eine Aufteilung in modifizierte (141 und 141') und nicht modifizierte (142, 142', 142") Bereiche. Während der Verlauf des Kotaktpunkts (143 bzw. 143') den Bereich 142 überstreicht, kommen nur nicht modifizierte Bereiche der Schnecke in Eingriff. In diesem Bereiche kann das Diagonalverhältnis frei gewählt werden. Wird ein Bereich oberhalb 143 oder unterhalb 143' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

Figur 24 zeigt am Beispiel zweier Dreiecksförmigen Endrücknahme, welche in unterschiedliche Richtungen verlaufen, eine Aufteilung in modifizierte (151 und 151') und nicht modifizierte (152, 152', 152") Bereiche. Die Richtungen $\rho_{F2}$ (150 bzw. 150') der Modifikationen gemäß Gleichung (25) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (153 bzw. 153') den Bereich 152 überstreicht, kann das Diagonalverhältnis frei gewählt werden. Um die Modifikation abweichnungsfrei herstellen zu können, müssen die Geraden 153 und 153' auf gleicher Höhe liegen oder 153 über 153'. Liegt jedoch 153' über 153 so verläuft der Kontaktpunkt sowohl über den Bereich 151 als auch über den Bereich 151', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (36) durch eine, im Allgemeinen nicht lineare Variante ersetzt:

$$z_{V1}(z_{V2}) = F_{Z_{V1}}(z_{V2}) \qquad\qquad (94)$$

Hierbei ist $F_{Z_{V1}}$ eine beliebige stetige Funktion, welche eine Relation zwischen $z_{V1}$ und $z_{V2}$ beschreibt. Das Diagonalverhältnis ist durch die Ableitung von $F_{Z_{V1}}(z_{V2})$ nach $z_{V2}$ gegeben und somit im Allgemeinen nicht konstant. Ist $F_{Z_{V1}}$ nicht linear, so werden Geraden auf der Schnecke im w-z-Diagramm nicht mehr auf Geraden auf dem Werkstück im w-z-Diagramm abgebildet. Die Kurve, welche den Verlauf der Punkte im w-z-Diagramm auf dem Werkstück beschreibt, welche auf eine durch $X_{F1}$ definierte Gerade auf der Schnecke abgebildet werden, kann durch eine Funktion $z_{F2}(w_{F2}, X_{F1})$ beschrieben werden. Für den allgemeinsten Fall eines konischen Werkstücks und einer konischen Schnecke, erhält man eine Relation (R20) zwischen $F_{Z_{V1}}(z_{V2})$, $z_{F2}(w_{F2}, X_{F1})$, $w_{F2}$ und $X_{F1}$, indem man das Gleichungssystem aus Gleichung (76) und (77) nach $z_{V1}$ und $z_{V2}$ auflöst, die beiden Vorschübe in Gleichung (94) einsetzt und anschließend $z_{F1}$ und $w_{F1}$ mit Hilfe der Gleichungen (37) und (86) ersetzt. Mit dieser Relation lässt sich für eine gegebene Funktion $F_{Z_{V1}}$ für jedes $X_{F1}$ der durch $z_{F2}(w_{F2}, X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$ gegebenem Verlauf $z_{F2}(w_{F2}, X_{F1})$ die Funktion $F_{Z_{V1}}(z_{V2})$ bestimmt werden. Des Weiteren kann aus der Relation (R20) eine Funktion $F_{X_{F1}}(W_{F2}, Z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

Wird für ein $X_{F1}$ nur der Teil des Verlaufs betrachtet, welcher auf der Flanke, d.h. innerhalb des w-z-Diagramms liegt, so definiert dies im Allgemeinen die Funktion ($zV2$) nicht für alle Werte von $z_{V2}$, da für andere Vorschubpositionen des Werkstücks, Teile des dann aktuellen Verlaufs die Flanke überstreichen, welche für $X_{F1}$ noch außerhalb des Diagramms lagen. Figur 25a zeigt dies beispielhaft für ein zylindrisches Werkstück. Dies kann genutzt werden, um $F_{Z_{V1}}$ ($z_{V2}$) abschnittsweise aus den Verläufen für verschiedene $X_{F1}$ zusammenzusetzten, bzw. den Definitionsbereich zu erweitern. Alternativ ist es auch möglich, $F_{Z_{V1}}$ ($z_{V2}$) aus einem Verlauf für ein $X_{F1}$, welcher über die Grenzen des w-z-Diagramm hinaus fortgesetzt wurde zu bestimmen. Diese Verlauf wird vorteilhafterweise soweit fortgesetzt, dass jeder Teil des w-z-Diagramme von dem Verlauf überstrichen wird. Figur 25a zeigt wie ein solcher Verlauf gewählt werden kann. In diesem Beispiel kann die Funktion $F_{Z_{V1}}$ ($z_{V2}$) dann aus einem der vier Verläufe 160-163 bestimmt werden.

Insbesondere wenn $F_{Z_{V1}}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{F1}$ verändert. Für den allgemeinen Fall berechnet sich dies durch die Schritte:

- Berechnen von $F_{Z_{V1}}(z_{V2})$ aus dem Verlauf für ein $X_{F1}$
- Berechnen des Verlauf für ein anderes $X_{F1}$ aus dem zuvor bestimmten $F_{Z_{V1}}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 25 ist diese Richtung durch die beiden parallelen Geraden 165 und 166 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bF1}$, $\vartheta_1$) und Achskreuzwinkel beeinflusst werden. Der Zusammenhang lässt sich in dem Fall jedoch nicht mehr leicht anschaulich beschreiben und muss durch die oben beschriebenen Schritte ermittelt werden.

Wird einflankig Wälzgeschliffen, so kann $F_{Z_{V1}}(z_{V2})$ und somit der Verlauf für jede Flanke separat vorgegeben werden.

Wird zweiflankig Wälzgeschliffen, so beeinflusst ein $F_{ZV1}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{ZV1}(z_{V2})$ aus dem Verlauf von Flanke 1
- Berechnen des Verlaufs von Flanke 2 aus $F_{ZV1}(Z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bF1}$, $\vartheta_1$) und Achskreuzwinkel und Achsabstand. Diese Beeinflussung kann genutzt werden, um $F_{ZV1}(z_{V2})$, die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (25), so ist der Wert der Modifikation auf dem Werkstück entlang eines Verlaufs $z_{F2}(w_{F2},X_{F1})$ zumindest näherungsweise gleich :

$$-\frac{\cos \beta_{bF1}}{\cos \beta_{bF2}} \cdot (F_{Ft1C}(X_{F1}) + F_{Ft1L}(X_{F1}) \cdot w_{F1} + F_{Ft1Q}(X_{F1}) \cdot w_{F1}^2) \tag{95}$$

Eine zumindest näherungsweise Parametrisierung der Modifikation $f_{Ft2}(w_{F2},z_{F2})$ auf dem Werkstück über $w_{F2}$ und $z_{F2}$ erhält man dann durch die Beziehung

$$X_{F1} = F_{X_{F1}}(w_{F2}, z_{F2}) \tag{96}$$

und der Relation (R7) aus der sich mit Hilfe des Verlauf des Kontaktpunkts zwischen Werkstück und Schnecke $w_{F1}$ durch $w_{F2}$ ausdrücken.

Ist die Modifikation auf der Verzahnung bekannt, so können für alle Verläufe die Funktionswerte der Funktionen $F_{Ft1C}$, $F_{Ft1L}$ und $F_{Ft1Q}$ bestimmt werden. Hierzu können in einer einfachen Variante die Funktionswerte unter Berücksichtigung der Modifikation an drei Wälzwinkeln entlang des Verlaufs bestimmt werden, in einer erweiterten Variante kann dies mittels einer Ausgleichsrechnung geschehen.

Ein konkretes Beispiel ist in Figur 26 gezeigt und wird im Folgenden diskutiert. Die Modifikation ist so gewählt, dass sie die Kombination aus einer Dreiecksförmigen Endrücknahme und einer Endrücknahme in Flankenlinienrichtung annähert, wobei die Endrücknahme, je dichter man an die Stirnfläche kommt, am Kopf und Fuß der Verzahnung stärker ausgeprägt ist, als in der Mitte des Profils. Der Übergang zwischen dem Beginn der beiden Rücknahmen ist hier beispielhaft tangential gewählt, wodurch der Verlauf 170 durch eine differenzierbare Kurve gegeben ist. Der Wert der Modifikation entlang 170 ist hier gleich 0 gewählt. Die Modifikation entlang 170 und 171, abhängig vom Wälzwinkel der Verzahnung, kann mit Hilfe von Gleichung (95) aus Figur 27c abgelesen werden. Da die Abstände zwischen den Verläufen 170 bis 172 im Bereich der Endrücknahme in Flankenlinienrichtung kleiner sind, als die Abstände zwischen den Verläufen 170 bis 172 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (175 bzw. 176) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

## Überlagerung mit anderen Modifikationen

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen bei zylindrischen Verzahnungen nur vom Wälzweg und nicht von der z-Position ab. Mathematisch beschrieben werden können sie durch folgende Gleichung:

$$f_{PFt} = f_{PFt}(w_F) \tag{97}$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (25) additiv überlagern. Beim Wälzschleifen mit abrichtbaren Schnecken wird diese Modifikation in der Regel in den Abrichter gelegt.

Der Abrichtprozess kann dann unverändert durchgeführt werden und die Profilmodifikationen bilden sich, wie gewünscht auf der Schnecke und später beim Schleifen auf dem Werkstück ab. Bei konischen Werkstücken jedoch hängen Profilmodifikationen von der z-Position. In einem w-z-Diagramm liegen dabei Punkte mit selben Wert der Modifikation auf einer Geraden mit Steigung $m_F$. Diese Steigung lässt sich sowohl bei Verwendung zylindrischer als auch konischer Schnecken aus der hier dargestellten Abbildung von Punkte auf der Schnecke zu Punkten auf dem Werkstück bestimmen. Für konische Verzahnungen kann $f_{PFt}$ geschrieben werden als:

$$f_{PFt} = f_{PFt}(w_F + m_F z_F) \tag{98}$$

Eine weitere, aus dem Stand der Technik DE10208531 bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die durch $\rho_{KF}$ gegebene Richtung des Kontaktpfads kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{KFt}(w_F, z_F) = F_{KFt}(w_F \sin \rho_{KF} + z_F \cos \rho_{KF}) \tag{99}$$

Hierbei können die Funktionen $F_{KFt}$ beliebige stetige Funktionen sein. Aus den Funktionen $F_{KFt}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (99) störungsfrei additiv überlagert werden.

Zusammengefasst lassen sich die herstellbaren Modifikationen $f_{GFt}$ wie folgt beschreiben:

$$f_{GFt}(w_F, z_F) = F_{FtC}(X_F) + F_{FtL}(X_F) \cdot w_F + F_{FtQ}(X_F) \cdot w_\square^2 + f_{PFt}(w_F + m_F z_F) +$$
$$F_{KFt}(w_F \sin \rho_{KF} + z_F \cos \rho_{KF}) \tag{100}$$

Mit $X_F = w_F \sin \rho_F + z_F \cos \rho_F$ und wobei $F_{FtC}$, $F_{FtL}$, $F_{FtQ}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{FtC}$, $F_{FtL}$, $F_{FtQ}$, $f_{PFt}$ und $F_{KFt}$ konstant, insbesondere 0 ist. Im Spezialfall zylindrischer Werkstücke ist $m_F = 0$.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (100) zerlegt werden. Dazu werden die Funktionen $F_{FtC}$, $F_{PtL}$, $F_{PtQ}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten $(w_{Fi}, z_{Fi})$ oder kontinuierlich über das ganze w-z-Diagramm berechnet werden. Die kontinuierliche Berechnung der Abweichung kann beispielsweise mit Hilfe eines Integrals einer Abstandsfunktion über alle Werte von w und z durchgeführt werden. Möglich ist es auch, die Abweichungen abhängig von der Position der Punkte in einem w-z-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwendet.

Die gewünschte Modifikation kann beispielsweise durch eine stetige Funktion $f_F$, durch eine Punktewolke $(w_{Fj}, z_{Fj}, f_{Fj})$ oder eine Kombination aus beidem gegeben sein. Die Funktionen $F_{FtC}$, $F_{FtL}$, $F_{FtQ}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten $(w_{Fk}, z_{Fk})$ zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die Richtungen $\rho_F$ einzuschränken. Im Allgemeinen kann die in der Ausgleichsrechnung verwendete und zu minimierende Abstandsfunktion, neben der Abweichung zwischen $f_{GFT}$ und $f_F$ auch von technologischen Größen abhängen:

Wird das Verfahren mit nicht konstantem Diagonalverhältnis angewendet, so muss Gleichung (100) dahingehend modifiziert werden, dass $F_{FtC}$, $F_{FtL}$, $F_{FtQ}$ durch eine Modifikation, welche sich aus Gleichung (95) ergibt, ersetzten werden. Soll durch eine Ausgleichsrechnung eine gegeben Modifikation durch eine so zusammengesetzte Modifikation angenähert bzw. exakt in eine solche zerlegt werden, können die Funktionen $F_{Ft1C}$, $F_{Ft1L}$, $F_{Ft1Q}$, $F_{ZV1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{ZV1}$ für linke und rechte Flanke gleich. Die Funktionen $F_{Ft1C}$, $F_{Ft1L}$, $F_{Ft1Q}$, $f_{PFt}$ und $F_{KFt}$ sind für linke und rechte Flanke, sowohl beim einflankigen aus auch beim zweiflankigen Schleifen im Allgemeinen verschieden.

## Aufteilung des Werkzeugs

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es ist jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung.
Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

## Übertragbarkeit auf andere Fertigungsverfahren

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (25) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.
Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (25) aufweisen. Je nach Fertigungsverfahren des Werkzeugs, ist auch hier eine freie Wahl von $\rho_F$ auf dem Werkzeug möglich.

## Anwendungsbeispiele

Im Folgenden werden einige einfache Anwendungsbeispiele beschrieben, an denen teilweise auch der Vorteil der hier beschriebenen Erfindung gegenüber dem Stand der Technik aufgezeigt wird und welche zugleich das Verfahren etwas veranschaulichen sollen.
Eine besondere Unterklasse an Modifikationen, welche mit dem hier beschriebenen Verfahren gefertigt werden kann und bereits heute von großer Relevanz ist, sind Modifikationen, die durch ein Polynom zweiten Grades in $w$ und $z$ gegeben sind. Solche Modifikationen $f_{P2}$ können allgemein durch

$$f_{P2}(w_F, z_F) = A_{w0z0} + A_{w1z0} \cdot w_F + A_{w0z1} \cdot z_F + A_{w1z1} \cdot w_F \cdot z_F + A_{w2z0} \cdot w_F^2 + A_{w0z2} \cdot z_F^2 \quad (101)$$

beschrieben werden, wobei die Koeffizienten $A$ in gewissen Grenzen frei wählbare reelle Zahlen sind. Zerlegt man $f_{P2}$ gemäß Gleichung (100) in $F_{FtC}$, $F_{FtL}$ und $F_{KFt}$ und wählt den Ansatz

$$F_{FtC}(X_F) = K_{F02} \cdot X_F^2 + K_{F01} \cdot X_F + K_{F00}$$

$$F_{FtL}(X_F) = K_{F11} \cdot X_F + K_{F10} \qquad (102)$$

$$F_{KFt}(X_{KF}) = K_{KF2} \cdot X_{KF}^2 + K_{KF1} \cdot X_{KF}$$

mit $X_{KF} = w_F \sin\rho_{KF} + z_F \cos\rho_{KF}$, so liefert ein Koeffizientenvergleich 6 Gleichungen, aus denen die im Ansatz eingeführten Koeffizienten $K$ bestimmt werden können.

Das Gleichungssystem ist immer lösbar, unabhängig von $\rho_F$ und somit auch unabhängig vom gewählten Diagonalverhältnis. Somit kann dieses bei der Herstellung einer Modifikation $f_{P2}$ in gewissen Grenzen freie gewählt werden.

Da insgesamt 7 Koeffizienten eingeführt wurden, ist das Gleichungssystem unterbestimmt und die Lösung nicht eindeutig. Diese Freiheit kann beispielsweise genutzt werden, um die Koeffizienten so zu wählen, dass sich die Schnecke möglichst gut abrichten lässt, so kann beispielsweise $K_{F10}$ jeweils für linke und rechte Flanke frei vorgegeben werden. Dies ist insbesondere dann von Interesse, wenn das Abrichten zweiflankig erfolgen soll. Anschaulich gesprochen beschreibt $K_{F10}$ im Wesentlichen wie weit der Abrichter um die C5-Achse an einer Position $X_{F1}$ geschwenkt werden muss, wenn zum Abrichten ein Bewegungsappart wie in Figur 22 genutzt wird. $K_{l10}$ und $K_{r10}$ können nun so gewählt werden, dass für zwei Position $X_{l1}$ und Position $X_{r1}$ auf linker und rechter Flanke der Schnecke, welche zur selben Zeit abgerichtet werden, derselbe Schwenkwinkel der C5-Achse einzustellen ist. Ob der Schwenkwinkel der C5-Achse über den ganzen abzurichtenden Bereich der Schnecke gleich ist, hängt von den Koeffizienten $K_{F11}$ ab und den Makrogeometrien von Werkzeug und Werkstück, insbesondere ob diese symmetrisch oder asymmetrisch und zylindrisch oder konisch sind. Es ist jedoch auch in gewissen Grenzen möglich, eine Schnecke zweiflankig abzurichten, wenn unterschiedliche C5-Winkel erforderlich sind. Dazu können alle Freiheitsgrade beim Abrichten genutzt werden, wie dies im ersten Teil dieser Anmeldung beschrieben wird. Dazu können beispielsweise jeweils zwei der exakt zu erreichenden 4 Punkte auf linker und rechter Flanke gewählt werden. Damit steht ein Verfahren zur Verfügung, um einen sehr großen Bereich der durch Gleichung (101) definierten Modifikationen zu fertigen und dabei ein ein- oder zweiflankiges Abrichten einzusetzen.

Ein solches zweiflankiges Abrichten lässt sich noch dadurch optimieren, dass das Diagonalverhältnis so bestimmt wird, dass sich die benötigte topologische Modifikation auf der Schnecke möglichst einfach erzeugen lässt. Für das hier betrachtete Beispiel der Polynome zweiten Grades bedeutet dies, dass das Diagonalverhältnis so angepasst wird, dass die C5-Winkel, welche zum Abrichten der linken bzw. rechten Flanke erforderlich sind, sich über die Breite der Schnecke in gleichem oder zumindest ähnlichem Maße ändern. Dazu ist das Diagonalverhältnis so zu wählen, dass $K_{l11}$ und $K_{r11}$ entsprechende Werte annehmen. Dadurch geht zwar die Flexibilität der freien Wahl des Diagonalverhältnisses verloren, es kann jedoch ein noch größeres Spektrum an Modifikationen auf dem Werkstück unter Einsatz eines zweiflankigen Abrichtens erzeugt werden.

Die heute relevantesten Modifikationen, welche durch Gleichung (101) beschrieben werden können sind Balligkeiten und additive Überlagerungen mehrerer Balligkeiten. Eine Balligkeit $f_B$ kann allgemein geschrieben werden als

$$f_B(w_F, z_F) = K_{B2} \cdot (w_F \sin \rho_{BF} + z_F \cos \rho_{BF})^2 + K_{B1} \cdot (w_F \sin \rho_{BF} + z_F \cos \rho_{BF}) + K_{B0} \qquad (103)$$

Für $\rho_{BF} = 0$ handelt es sich um eine Flankenlinienballigkeit, für $\rho_{BF} = \pm\frac{\pi}{2}$ um eine Profilballigkeit. In den übrigen Fällen handelt es sich um gerichtete Balligkeiten. Da diese zu einer Verschränkung führen, werden diese häufig auch als Balligkeiten mit gezielter Verschränkung bezeichnet. Balligkeiten werden oft auch als Kreisballigkeiten definiert, solche können jedoch in sehr guter Näherung durch die hier beschriebenen quadratischen Balligkeiten angenähert werden.

Verfahren, abgesehen vom Zeilenabrichten, um Profilballigkeiten über die Abricht- und/oder Schleifkinematik zu beeinflussen sind bisher nicht bekannt. Verfahren um verschränkungsfreie oder gezielt verschränkte Flankenlinienballigkeiten zu erzeugen sind aus den eingangs zitierten Druckschiften zwar bekannt. Alle diese Verfahren verursachen jedoch ungewollte Profilballigkeiten, welche mit dem hier vorgestellten Verfahren nicht entstehen. Das hier vorgestellte Verfahren geht sogar noch weiter und erlaubt eine gezielte Erzeugung einer Profilballigkeit, was bisher nur über die Geometrie des Abrichters möglich war. Es entfallen dadurch hohe Anschaffungskosten für neue Abrichter, wenn lediglich die Profilballigkeit geändert werden muss. Dies ist insbesondere in der Lohn- und Kleinserienfertigung von besonderer Relevanz. Des Weiteren ist es auch möglich, Abrichter mit fehlerhaft erzeugter Profilballigkeit einzusetzen und diese zu korrigieren. So können geschliffenen Verzahnungen gemessen und der erzeugte Profilballigkeit bestimmt und entsprechend korrigiert werden. Somit steht, neben dem im ersten Teil dieser Anmeldung vorgestelltem Verfahren, noch ein weiteres zur Verfügung, welches es erlaubt, die Profilballigkeit beim Wälzschleifen zu beeinflussen. Beide diese Verfahren haben gegenüber dem anderen Vor- und Nachteile, welche hier kurz aufgeführt werden. Das im ersten Teil vorgestellte Verfahren erlaubt es, die Profilballigkeit der Schnecke über deren ganze Länge gleich zu beeinflussen. Dadurch kann mit einer solchen Schnecke das Schleifen im Axialschleifverfahren erfolgen, solange keine topologischen Modifikationen gefordert sind. Dieses Axialschleifverfahren führt im Allgemeinen zu einer höheren Anzahl an Werkstücken, die pro Abrichtzyklus geschliffen werden können. Voraussetzung für die Anwendung ist jedoch, dass die Makrogeometrie der Schnecke eine hinreichend große Beeinflussung der Profilballigkeit erlaubt, was tendenziell den Einsatz kleiner mehrgängiger Schnecken erfordert. Das hier im zweiten Teil vorgestellte Verfahren erlaubt den Einsatz von Schnecken mit quasi beliebiger Makrogeometrie, es erfordert jedoch den Einsatz des Diagonalwälzschleifens. Wird das Werkstück ohnehin im Diagonalwälzschleifen geschliffen, um beispielsweise topologische Modifikationen zu erzeugen oder weil ein Diagonalwälzschleifen aufgrund der Breite der Verzahnung technologisch nötig ist, so bringt dieses Verfahren keinerlei Nachteile mehr mit sich.

Zur Erzeugung einer Balligkeit oder einer additiven Überlagerung mehrerer Balligkeiten kann das Diagonalverhältnis und somit der Schiftbereich und die Größe des auf der Schnecke genutzten Bereiches in gewissen Grenzen frei gewählt werden. Somit kann die Anzahl der Bereich auf einer Schnecke beispielsweise unter Beachtung technologischer Gesichtspunkte optimiert werden bzw. optimal der Schneckenlänge angepasst.

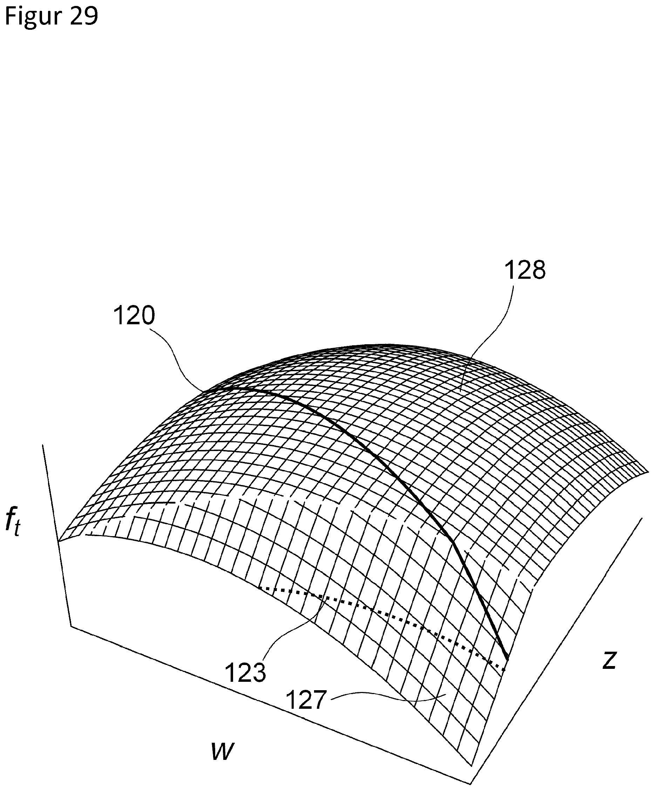

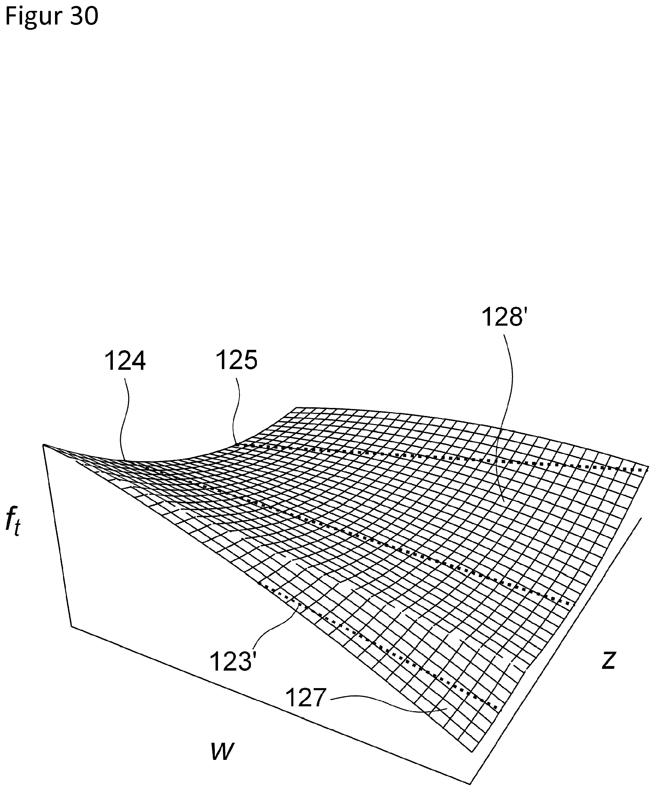

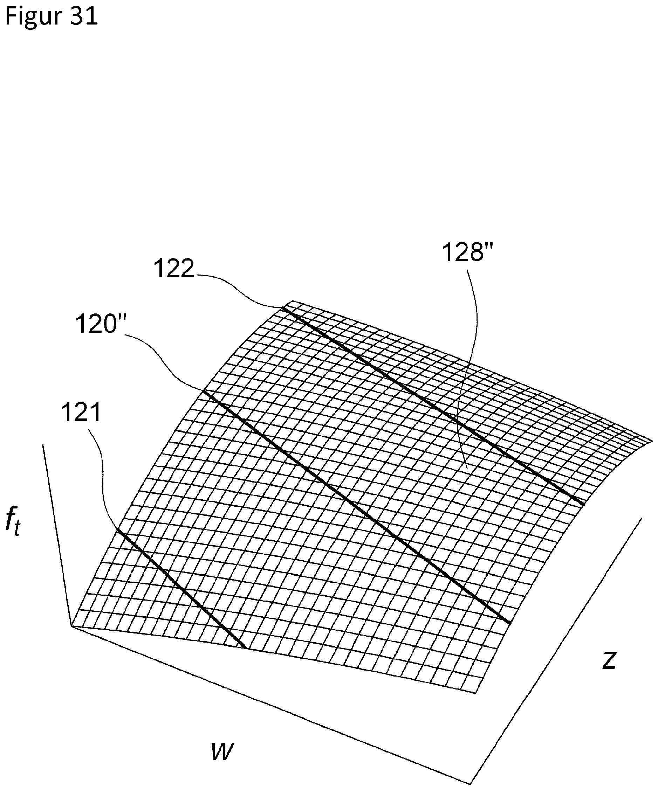

Ein weiterer Effekt, der sich aus der freien Wahl des Diagonalverhältnisses ergibt, ist die Möglichkeit der Überlagerung mit Modifikationen, welche ein fest vorgegebenes Diagonalverhältnis erfordern. Ein solches Beispiel ist in Figur 29 dargestellt. Hierbei handelt es sich um die additive Überlagerung einer Dreiecksförmigen Endrücknahme, einer Profilballigkeit und einer verschränkungsfreien Flankenlinienballigkeit, wobei die Profilballigkeit mit dem hier beschriebenen Verfahren und nicht über einen entsprechend ausgelegten Abrichter erzeugt wird. Um die dreiecksförmige Endrücknahme zu fertigen, muss das Diagonalverhältnis so gewählt werden, dass die Rücknahme in der richtigen Richtung abfällt. Diese Richtung wird durch die Line 123, welche eine Gerade in w und z ist, definiert. Entlang dieser Linie ist der Anteil der Modifikation, der rein aus der dreiecksförmigen Endrücknahme kommt, konstant. Dies gilt ebenso für alle Linien parallel zu Line 123, welche im Bereich 127 liegen, wobei entlang jeder dieser Linien der Anteil der Modifikation aus der dreiecksförmigen Endrücknahme einen anderen Wert hat. Um die gesamte Modifikation mit dem hier vorgestellten Verfahren schleifen zu können, kann diese in einen Anteil ($F_{KFt}$), welcher aus der Schleifkinematik kommt und in Figur 31 dargestellt ist und einen Anteil ($F_{FtC} + F_{FtL}$), welcher über das Diagonalschiften aus der Modifikation der Schnecke kommt und in Figur 30 dargestellt ist, zerlegt werden, wie in Gleichung (102) besch rieben.

Der hier beispielhaft aufgezeigte Weg zur Erzeugung einer Modifikation gemäß Gleichung (101) kann auch auf Polynome höheren Grades in w und z übertragen werden. Dazu können im Ansatz aus Gleichung (102) höhere Ordnungen in $X_{\square}$ bzw. $X_{KF}$ hinzugenommen werden und es kann des Weiteren die Funktion $F_{FtQ}$ analog mit aufgenommen werden. Auf diese Weise lassen sich zum Beispiel Polynome dritten Grades fertigen. Diese sind ebenfalls von besonderem Interesse, da mit ihnen sehr gut kreisförmige Balligkeiten, bestehend aus zwei tangential anschließenden Kreisbögen mit unterschiedlichen Radien, angenähert werden können. Somit steht erstmals ein Verfahren zur Verfügung, mit dem es möglich ist, solche Balligkeiten gezielt gerichtet, bzw. mit gezielter Verschränkung oder verschränkungsfrei bei in gewissen Grenzen frei wählbarem Diagonalverhältnis mit den hier betrachteten Fertigungsverfahren zu fertigen.

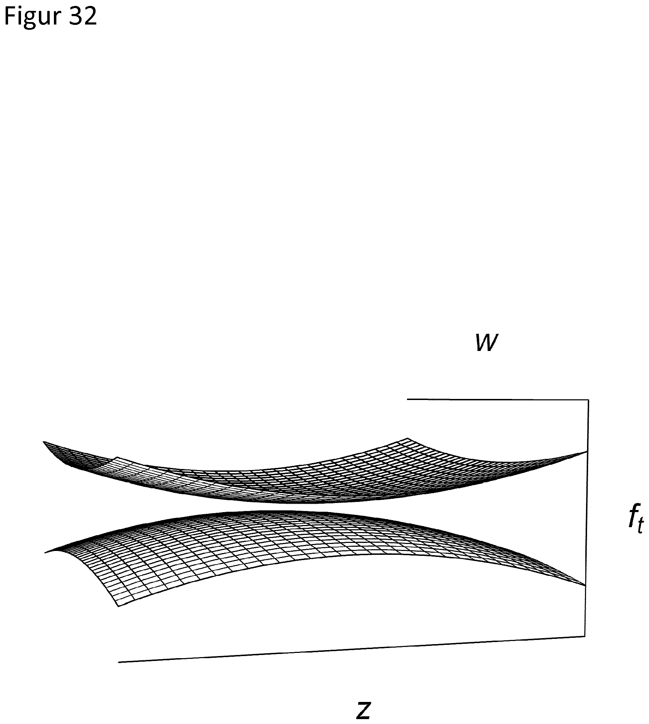

Ein weiteres Beispiel sind Welligkeiten mit über die Zahnflanke veränderter Amplitude. Aus DE102012015846 ist ein Verfahren bekannt, mit dem Welligkeiten mit definierter Richtung ($\rho_{F2}$), Phasenlange ($\delta$), Wellenlänge ($\lambda$) und Amplitude im Wälzschleifen gefertigt werden können. Dabei ist die Amplitude der Welligkeit entlang der ersten Richtung $G_{C2}$ konstant, kann jedoch entlang der zweiten Richtung, senkrecht zur ersten Richtung, verändert werden. Mit dem hier vorgestellten Verfahren ist es nun möglich, die Amplitude über der ganzen Flanke zu variieren. Figur 32 zeigt eine obere und einer untere Fläche, welche die Welligkeit einhüllen. Die obere Fläche definiert dabei die Amplitudenfunktion der Welligkeit in Abhängigkeit von w und z. Hier wurde beispielhaft eine Amplitudenfunktion gewählt, welche in der Mitte der Flanke einen kleineren Wert hat im Vergleich zum am Rand der Flanke und als Summe zweier Polynom zweiten Grades in w bzw. z gegeben ist. Es sind ebenso Amplitudenfunktionen möglich, die zu kleineren Amplituden am Rand der Flanke führen. Die Welligkeit mit nicht konstanter Amplitude ergibt sich durch Multiplikation der Amplitudenfunktion

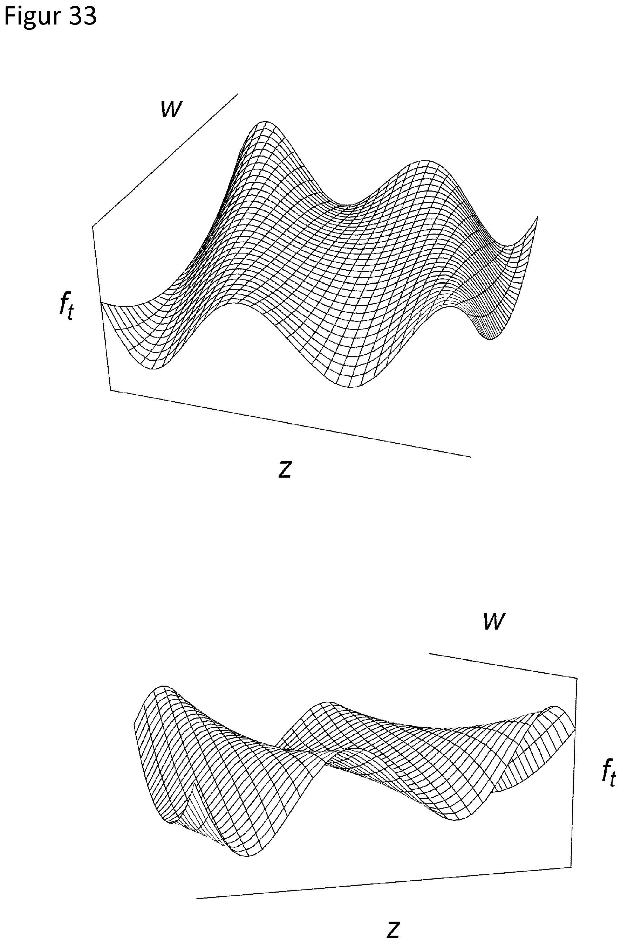

mit der Welligkeit $(\sin(\frac{X_{F2}}{\lambda} + \delta))$. Die sich daraus ergebende Modifikation hat dadurch eine Form gemäß Gleichung (25) und ist in Figur 33 gezeigt. Solche Welligkeiten können, wie auch in DE102012015846 beschrieben zur Optimierung des Anregungsverhaltens von Getrieben genutzt werden, erlauben jedoch auf Grund der Unterschiedlichen Amplitude über die Zahnflanke zusätzlich eine Optimierung für unterschiedliche Lastniveaus.

Werden die Flanken der Schneckengänge in mehreren Hüben abgerichtet, so ist es möglich, in jedem Hub unterschiedliche Bereiche der Flanken abzurichten, z.B. beim ersten Hub einen oberer Teil des Profils, beim zweiten einen unteren Teil, und dadurch in den verschiedenen Bereichen unterschiedliche Modifikationen aufzubringen. Somit wird es beispielsweise möglich, eine Welligkeit nur in einem oberen Bereich des Profils auf einem Werkstück aufzubringen, bzw. den Übergang zwischen wellig modifiziertem Bereich und nicht modifiziertem Bereich diagonal über die Flanke v.

## Patentansprüche

1. Verfahren zum Abrichten eines Werkzeuges, welches zur Verzahnbearbeitung eines Werkstückes einsetzbar ist, auf einer Abrichtmaschine, wobei das Abrichten mit Linienkontakt zwischen Abrichter und Werkzeug erfolgt,

   wobei eine gezielte Modifikation der Oberflächengeometrie des Werkzeuges erzeugt wird, indem die Position des Abrichters zum Werkzeug beim Abrichten in Abhängigkeit von der Werkzeugbreitenposition variiert wird, wobei bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade unabhängig voneinander zur Erzeugung der gewünschten Modifikation angesteuert werden,
   **dadurch gekennzeichnet,**
   **dass** die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, und/oder
   **dass** die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens zwei Wälzwinkeln als eine Funktion der Werkzeugbreitenposition vorgebbar ist,
   und/oder
   **dass** die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist,
   und/oder
   **dass** zumindest die Steigung der durch die Veränderung der Position des Abrichters zum Werkzeug beim Abrichten in Abhängigkeit von der Werkzeugbreitenposition erzeugten gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, und zusätzlich eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist,
   und/oder
   **dass** zumindest die Balligkeit der durch die Veränderung der Position des Abrichters zum Werkzeug beim Abrichten in Abhängigkeit von der Werkzeugbreitenposition erzeugten gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist,
   und/oder dass eine Modifikation des Werkzeuges vorgebbar ist oder erzeugt wird,
   welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,
   und/oder dass eine Modifikation des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert,
   und/oder
   **dass** mindestens vier Freiheitsgrade der relativen Position des Abrichters zum Werkzeug beim Abrichten in Linienkontakt unabhängig voneinander als Funktion der Werkzeugbreitenposition angesteuert werden.

2. Verfahren nach Anspruch 1, wobei die durch die Veränderung der Position des Abrichters zum Werkzeug beim Abrichten in Abhängigkeit von der Werkzeugbreitenposition erzeugte gezielte Modifikation der Oberflächengeometrie des Werkzeuges im Wälzbild in der ersten Richtung zumindest näherungsweise als eine lineare, quadratische oder kubische Funktion beschreibbar ist, deren Koeffizienten in Werkzeugbreitenrichtung durch Funktionen $C_{0FS}$, $C_{1FS}$, $C_{2FS}$ und/oder $C_{3FS}$ und/oder durch Koeffizienten-Funktionen $F_{FtC,1}$ für den konstanten Anteil, $F_{FtL,1}$ für den linearen Anteil und/oder $F_{FTQ,1}$ für den quadratischen Anteil gegeben sind.

3. Verfahren nach einem der vorangegangenen Ansprüche, wobei die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens drei oder vier Wälzwinkeln als eine Funktion der Werkzeugbreitenposition vorgebbar ist,

   und/oder wobei eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist,
   und/oder wobei eine Zuordnung zweier bestimmter Radien des Abrichters zu zwei bestimmten Radien des Werkzeuges erfolgt, wobei die Zuordnung bevorzugt als eine Funktion der Position in Werkzeugbreitenrichtung vorgebbar ist,
   und/oder wobei mindestens einer der Wälzwinkel und weiter bevorzugt zwei oder drei Wälzwinkel, an welchem oder welchen die Modifikation vorgebbar ist, in Werkzeugbreitenrichtung unterschiedlich gewählt wird oder werden, und weiter bevorzugt als eine Funktion der Werkzeugbreitenposition vorgebbar ist oder werden.

4. Verfahren nach einem der vorangegangenen Ansprüche, wobei das Abrichten einflankig erfolgt und die mindestens zwei oder drei Wälzwinkel auf einer Flanke angeordnet sind, oder wobei das Abrichten zweiflankig erfolgt und die mindestens zwei oder drei Wälzwinkel auf die zwei Flanken verteilt sind und/oder wobei das Abrichten zweiflankig erfolgt und ein Werkzeug mit einer konischen Grundform eingesetzt wird, wobei bevorzugt der Konuswinkel zum Einstellen der Modifikation eingesetzt wird.

5. Verfahren nach einem der vorangegangenen Ansprüche zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird, und wobei die Position, in welcher die Modifikation des Abrichters beim Abrichten auf dem Werkzeug aufgebracht wird, in Abhängigkeit von der Werkzeugbreitenposition vorgebbar ist oder durch Ansteuerung der Bewegungsachsen der Abrichtmaschine beim Abrichten verändert wird.

6. Verfahren nach einem der vorangegangenen Ansprüche zum modifizierten Abrichten eines Werkzeuges, welches zur Verzahnbearbeitung eines Werkstückes einsetzbar ist, auf einer Abrichtmaschine, wobei das Abrichten in mindestens einem ersten und einem zweiten Hub jeweils mit Linienkontakt erfolgt, und wobei die Position, an welcher die in einem ersten Hub erzeugte Modifikation an die mit einem zweiten Hub erzeugte Modifikation anschließt, in Abhängigkeit von der Werkzeugbreitenposition verändert wird.

7. Verfahren nach Anspruch 6, wobei bevorzugt die Bewegungsachsen der Abrichtmaschine beim Abrichten in mindestens einem ersten und zweiten Hub zusätzlich zu der für die unterschiedliche Positionierung zwischen Abrichter und Werkzeug bei den beiden Hüben notwendigen Veränderung unterschiedlich eingestellt werden, um die Steigung und/oder Balligkeit der Modifikation bei mindestens einem der Hübe zu beeinflussen, wobei die Steigung und/oder Balligkeit bevorzugt als Funktion der Werkzeugbreitenposition vorgebbar sind,

   und/oder wobei bevorzugt die gezielte Modifikation bei mindestens einem der Hübe so eingestellt wird, dass die durch den ersten Hub erzeugte Oberflächengeometrie in einem gewünschten Winkel und insbesondere tangential an die durch den zweiten Hub erzeugte Oberflächengeometrie anschließt,
   und/oder wobei bevorzugt für mindestens einen und bevorzugt jeden Hub eine gewünschte Modifikation des Werkzeuges an mindestens zwei und bevorzugt drei Wälzwinkeln vorgegeben wird, wobei die Modifikation bevorzugt als Funktion der Werkzeugbreitenposition vorgebbar ist,
   und/oder wobei für mindestens einen und bevorzugt jeden Hub eine Zuordnung eines bestimmten Radius des Abrichters zu einem bestimmten Radius des Werkzeuges erfolgt, wobei die Zuordnung bevorzugt als Funktion der Werkzeugbreitenposition vorgebbar ist,
   und/oder wobei für den ersten und den zweiten Hub unterschiedliche Bereiche des Abrichters eingesetzt werden oder wobei für den ersten und den zweiten Hub unterschiedliche Abrichter eingesetzt werden, und/oder wobei einer der Hübe zum Erzeugen einer Modifikation des Zahnfußes oder des Zahnkopfes eingesetzt wird, bspw.

zum Erzeugen einer Rücknahme des Zahnkopfes oder des Zahnfußes.

8. Verfahren nach einem der vorangegangenen Ansprüche, wobei eine durch eine Modifikation des Abrichters erzeugte Modifikation mit einer durch die Veränderung der Position des Abrichters zum Werkzeug beim Abrichten erzeugten gezielten Modifikation der Oberflächengeometrie des Werkzeuges überlagert wird,

wobei bevorzugt die Position der durch eine Modifikation des Abrichters erzeugten Modifikation vorgebbar ist, insbesondere als eine Funktion der Position in Werkzeugbreitenrichtung vorgebbar ist und/oder durch eine Zuordnung eines bestimmten Radius des Abrichters zu einem bestimmten Radius des Werkzeuges, und/oder wobei bevorzugt eine gewünschte Streckung oder Stauchung der Modifikation des Abrichters auf dem Werkzeug vorgebbar ist, welche bevorzugt als eine Funktion der Position in Werkzeugbreitenrichtung vorgebbar ist, insbesondere durch eine Zuordnung zweier bestimmter Radien des Abrichters zu zwei bestimmten Radien des Werkzeuges,
und/oder wobei bevorzugt der modifizierte Abrichter über sein komplettes aktives Profil eine gleichbleibende Modifikation aufweist, bspw. eine gleichbleibende Balligkeit, oder wobei bevorzugt der modifizierte Abrichter in einem ersten Teilbereich seines Profils eine Modifikation aufweist, welche sich von der Profilform in einem zweiten Teilbereich unterscheidet, wobei die Modifikation im ersten Teilbereich vorteilhafterweise einen anderen Profilwinkel und/oder eine andere Balligkeit aufweist, wobei die Modifikation insbesondere eine Kante aufweisen kann, und/oder wobei der Abrichter beim Abrichten bevorzugt gleichzeitig in dem ersten und dem zweiten Bereich in Kontakt mit der Werkzeugoberfläche steht,
und/oder wobei ein Kombi-Abrichter zum gleichzeitigen Abrichten des Zahnkopfes und der Zahnflanke eingesetzt wird, wobei bevorzugt die Höhe des Zahnkopfes vorgegeben und durch Einstellung der Bewegungsachsen der Abrichtmaschine beim Abrichten erzeugt wird, wobei die Höhe des Zahnkopfes bevorzugt als eine Funktion der Werkzeugbreitenposition vorgebbar ist.

9. Verfahren nach einem der vorangegangenen Ansprüche, wobei aus einer Mehrzahl an Einstellungen der Bewegungsachsen der Abrichtmaschine, welche die gleiche relative Position zwischen Abrichter und Werkzeug erzeugen, eine Einstellung gewählt wird, welche vorgegebene Bedingungen besser erfüllt, wobei bevorzugt die Einstellung gewählt wird, welche die gewünschte Relativposition mit höherer Genauigkeit und/oder geringeren Positionsfehlern bereitstellt und/oder wobei die Einstellung gewählt wird, welche geringere Verfahrbewegungen der Maschinenachsen erfordert, und/oder wobei die Einstellung gewählt wird, welche Kollisionen des Abrichters, des Werkzeuges und/oder von Maschinenteilen untereinander vermeidet,
und/oder wobei die durch das Werkzeug erzeugte Verzahngeometrie oder die auf dem Werkzeug durch das Abrichten erzeugte Verzahngeometrie vermessen wird und aus Abweichungen von einer Soll-Geometrie die beim Abrichten vorliegenden Abweichungen der Bewegungsachsen der Abrichtmaschine von ihren Solleinstellungen bestimmt werden.

10. Verfahren nach einem der vorangegangenen Ansprüche, wobei es sich bei den Freiheitsgraden, welche zur Erzeugung der gewünschten Modifikation genutzt werden, um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander als Funktion der axialen Position des Werkzeuges, d.h. der Werkzeugbreitenposition, zur Beeinflussung der Modifikation entlang der Berührlinie herangezogen werden.

11. Verfahren nach einem der vorangegangenen Ansprüche, wobei Fehler in der Oberflächengeometrie eines Abrichters durch Vorgabe entsprechender Korrekturwerte beim Einstellen der Bewegungsachsen der Abrichtmaschine zumindest teilweise korrigiert werden,

und/oder wobei ein Abrichter, welcher auf ein Werkzeug mit einer ersten Makrogeometrie und/oder ersten gewünschten Oberflächengeometrie ausgelegt wurde, zum Abrichten eines Werkzeuges mit einer zweiten Makrogeometrie und/oder zweiten gewünschten Oberflächengeometrie eingesetzt wird, wobei die sich durch die Auslegung auf das Werkzeug mit der ersten Makrogeometrie und/oder ersten gewünschten Oberflächengeometrie ergebenden Fehler durch eine entsprechende Einstellung der Bewegungsachsen der Abrichtmaschine beim Abrichten des Werkzeuges mit einer zweiten Makrogeometrie und/oder zweiten gewünschten Oberflächengeometrie zumindest teilweise ausgeglichen werden,
und/oder wobei die Einstellung der Bewegungsachsen der Abrichtmaschine beim Abrichten und/oder die Makrogeometrie oder Modifikation des Abrichters und/oder die Makrogeometrie des Werkzeuges mittels einer Ausgleichsrechnung bestimmt wird, wobei bevorzugt die durch die Veränderung der Einstellung der Bewegungsachsen der Abrichtmaschine erzielbaren Modifikationen im Wälzbild in einer Richtung mit einen Winkel $\rho_{FS}$ zur Werkzeugbreitenrichtung an zwei, drei oder vier Wälzwinkeln variiert und bevorzugt dazwischen interpoliert und insbesondere als lineare, quadratische und/oder kubische Funktion angenommen werden, und mit einer gewünschten Modifikation verglichen werden, wobei bevorzugt eine Abstandsfunktion zur Quantifizierung der Abweichung eingesetzt wird, wobei die Abstandsfunktion bevorzugt eine von der Position im Wälzbild abhängige Gewichtung aufweist.

12. Verfahren nach einem der vorangegangenen Ansprüche, wobei ein Werkzeug eingesetzt wird, bei welchem mindestens ein Gang inaktiv und/oder ausgespart ist, und/oder bei welchem der Abrichter beim Abrichten einer ersten Flanke zumindest teilweise in die Kontur der gegenüberliegenden Flanke eingreift, und/oder wobei mindestens eine Zahnflanke so abgerichtet wird, dass sie beim Bearbeiten des Werkstückes nicht in Kontakt mit dem Werkstück kommt und daher inaktiv ist, wobei bevorzugt mindestens ein Gang so abgerichtet wird, dass er beim Bearbeiten des Werkstückes nicht in Kontakt mit dem Werkstück kommt und daher inaktiv ist,

wobei bevorzugt zwischen zwei aktiven Gängen mindestens ein inaktiver und/oder ausgesparter Gang vorgesehen ist,
und/oder wobei bevorzugt beim Bearbeiten des Werkstückes in Wälzkopplung nacheinander maximal jeder zweite Zahn in Eingriff mit dem Werkzeug kommt, und/oder wobei bevorzugt in Abhängigkeit von der Anzahl der Zähne des Werkstückes und/oder der Anzahl der Gänge in mindestens einem ersten Durchgang mindestens ein erster Teil der Zähne des Werkstückes bearbeitet wird, woraufhin das Werkstück relativ zum Werkstück gedreht wird, um mindestens einen zweiten Teil der Zähne in mindestens einem zweiten Durchgang zu bearbeiten.

13. Verfahren zur Herstellung eines Werkstückes mit modifizierter Verzahnungsgeometrie durch ein Wälzverfahren, insbesondere ein Diagonalwälzverfahren mittels eines modifizierten Werkzeuges,
wobei durch ein Verfahren gemäß einem der vorangegangenen Ansprüche eine gezielte Modifikation der Oberflächengeometrie des Werkzeuges erzeugt wird, und wobei die gezielte Modifikation des Werkzeuges durch das Wälzverfahren, insbesondere das Diagonalwälzverfahren eine entsprechende Modifikation auf der Oberfläche des Werkstückes erzeugt.

14. Softwareprogramm zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwendigen Einstellungen der Bewegungsachsen einer Abrichtmaschine, insbesondere zur Durchführung eines Verfahrens nach einem der vorangegangenen Ansprüche, mit

einer Eingabefunktion, durch welche die gewünschte Modifikation des Werkzeuges vorgebbar ist, und eine Berechnungsfunktion, welche aus der gewünschten Modifikation die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen als Funktion der Werkzeugbreitenposition bestimmt,
wobei die Eingabefunktion und die Berechnungsfunktion so ausgestaltet sind, dass sie zur Durchführung eines der vorangegangenen Verfahren eingesetzt werden können, und/oder
wobei die Eingabefunktion und die Berechnungsfunktion so ausgestaltet sind,
dass die gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung und/oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, wobei die Modifikation durch den berechneten Verlauf der Relativposition oder der Einstellung der Bewegungsachsen der Abrichtmaschine erzeugbar ist,
und/oder
wobei die Eingabefunktion und die Berechnungsfunktion so ausgestaltet sind, dass die gezielte Modifikation der Oberflächengeometrie des Werkzeuges an mindestens zwei Wälzwinkeln als eine Funktion der Werkzeugbreitenposition vorgebbar ist, wobei die Modifikation durch den berechneten Verlauf der Relativposition oder der Einstellung der Bewegungsachsen der Abrichtmaschine erzeugbar ist,
und/oder

wobei die Eingabefunktion und die Berechnungsfunktion so ausgestaltet sind, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Modifikation durch den berechneten Verlauf der Relativposition oder der Einstellung der Bewegungsachsen der Abrichtmaschine erzeugbar ist, wobei die Zuordnung bevorzugt als eine Funktion der Werkzeugbreitenposition vorgebbar ist,
und/oder
wobei die Eingabefunktion und die Berechnungsfunktion so ausgestaltet sind, dass eine gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,
und/oder
wobei die Eingabefunktion und die Berechnungsfunktion so ausgestaltet sind, dass eine gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert.

**15.** Softwareprogramm nach Anspruch 14 mit einer Eingabefunktion, durch welche eine vorgegebene Modifikation des Abrichters eingebbar und eine gewünschten Position der Modifikation des Abrichters auf dem Werkzeug vorgebbar sind, wobei die Vorgabe der gewünschten Position der Modifikation des Abrichters auf dem Werkzeug bevorzugt durch Zuordnung eines bestimmten Radius des Abrichters zu einem bestimmten Radius des Werkzeuges erfolgt, und

eine Berechnungsfunktion, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen bestimmt,
wobei die Eingabefunktion und die Berechnungsfunktion bevorzugt so ausgestaltet sind, dass sie zur Durchführung eines der vorangegangenen Verfahren eingesetzt werden können, und/oder
wobei die Eingabefunktion und die Berechnungsfunktion so ausgestaltet sind, dass über die Eingabefunktion die Position der Modifikation auf dem Werkzeug in Abhängigkeit von der Werkzeugbreitenposition vorgebbar ist und die Berechnungsfunktion die notwendige Relativposition zwischen Abrichter und Werkzeug oder die zu deren Bereitstellung notwendigen Einstellungen der Bewegungsachsen als Funktion der Werkzeugbreitenposition bestimmt.

**16.** Softwareprogramm nach Anspruch 14 oder 15 zum Berechnen der zur Erzeugung einer gewünschten Modifikation eines Werkzeuges beim Mehrhub-Abrichten im Linienkontakt mit einem Abrichter notwendigen Relativposition zwischen Abrichter und Werkzeug oder der zu deren Bereitstellung notwendigen Einstellungen der Bewegungsachsen einer Abrichtmaschine, insbesondere zur Durchführung eines Verfahrens nach einem der vorangegangenen Ansprüche,

mit einer Mehrhub-Berechnungsfunktion, welche die zum Mehrhub-Abrichten mit Linienkontakt zwischen Abrichter und Werkzeug notwendigen Einstellungen der Bewegungsachsen bestimmt,
mit einer Eingabefunktion, durch welche die Position, an welcher die in einem ersten Hub erzeugte Modifikation an die mit einem zweiten Hub erzeugte Modifikation anschließt, als eine Funktion der Werkzeugbreitenposition vorgebbar ist, und/oder mit einer Eingabefunktion und einer Bestimmungsfunktion, wobei durch die Eingabefunktion eine gewünschte Modifikation des Werkzeuges vorgebbar ist, und die Bestimmungsfunktion die zu deren Herstellung notwendigen Hübe bestimmt,
wobei die Bestimmungsfunktion die Position, an welcher die in einem ersten Hub erzeugte Modifikation an die mit einem zweiten Hub erzeugte Modifikation anschließt, als eine Funktion der Werkzeugbreitenposition variiert oder bestimmt,
wobei die Mehrhub-Berechnungsfunktion aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt,

wobei bevorzugt die Eingabefunktion, die Berechnungsfunktion und die Steuerungsfunktion so ausgestaltet sind, dass sie zur Durchführung eines der vorangegangenen Verfahren eingesetzt werden können.

**17.** Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine eine Bewegungsachse aufweist, durch welche die Werkzeugbreitenposition einstellbar ist,

**dadurch gekennzeichnet,**

**dass** die Abrichtmaschine weitere Bewegungsachsen aufweist, durch welche mindestens weitere drei oder vier Freiheitsgrade der Relativposition zwischen Werkzeug und Abrichter unabhängig voneinander einstellbar sind, und wobei die Abrichtmaschine eine Steuerung aufweist, welche so ausgestaltet ist, dass die Einstellung der weiteren drei oder vier Freiheitsgrade in Linienkontakt mit dem Abrichter unabhängig voneinander als Funktion der Werkzeugbreitenposition angesteuert werden,

und/oder

**dass** die Abrichtmaschine eine Steuerung mit einer Eingabefunktion aufweist, durch welche die gewünschte Modifikation des Werkzeuges als Funktion der Werkzeugbreitenposition vorgebbar ist,

wobei die Steuerung eine Berechnungsfunktion aufweist, welche aus der gewünschten Modifikation die zu ihrer Erzeugung notwendigen Einstellungen der Bewegungsachsen als Funktion der Werkzeugbreitenposition beim Abrichten mit Linienkontakt zwischen Abrichter und Werkzeug bestimmt,

und wobei die Steuerung eine Steuerungsfunktion aufweist, welche die entsprechende Einstellung der Bewegungsachsen als Funktion der Werkzeugbreitenposition beim Abrichten mit Linienkontakt zwischen Abrichter und Werkzeug vornimmt,

wobei die Eingabefunktion, die Berechnungsfunktion und die Steuerungsfunktion so ausgestaltet sind, dass sie zur Durchführung eines der vorangegangenen Verfahren eingesetzt werden können,

und/oder

wobei die Eingabefunktion, die Berechnungsfunktion und die Steuerungsfunktion so ausgestaltet sind, dass die gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung und/oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, wobei die Modifikation durch die von der Steuerungsfunktion vorgenommene Einstellung der Bewegungsachsen der Abrichtmaschine erzeugbar ist,

und/oder

wobei die Eingabefunktion, die Berechnungsfunktion und die Steuerungsfunktion so ausgestaltet sind, dass die gezielte Modifikation der Oberflächengeometrie des Werkzeuges an mindestens zwei Wälzwinkeln als eine Funktion der Werkzeugbreitenposition vorgebbar ist, wobei die Modifikation durch die von der Steuerungsfunktion vorgenommene Einstellung der Bewegungsachsen der Abrichtmaschine erzeugbar ist,

und/oder

wobei die Eingabefunktion, die Berechnungsfunktion und die Steuerungsfunktion so ausgestaltet sind, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Modifikation durch die von der Steuerungsfunktion vorgenommene Einstellung der Bewegungsachsen der Abrichtmaschine erzeugbar ist, wobei die Zuordnung bevorzugt als eine Funktion der Werkzeugbreitenposition vorgebbar ist,

und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,

und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert.

18. Abrichtmaschine nach Anspruch 17, mit einer Steuerung, wobei die Steuerung eine Eingabefunktion aufweist, durch welche eine vorgegebene Modifikation des Abrichters eingebbar und eine gewünschte Position der Modifikation des Abrichters auf dem Werkzeug vorgebbar sind, wobei die Vorgabe der gewünschten Position der Modifikation des Abrichters auf dem Werkzeug bevorzugt durch Zuordnung eines bestimmten Radius des Abrichters zu einem bestimmten Radius des Werkzeuges erfolgt, und

wobei die Steuerung eine Berechnungsfunktion aufweist, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendigen Einstellungen der Bewegungsachsen bestimmt,
und wobei die Steuerung eine Steuerungsfunktion aufweist, welche die entsprechende Einstellung der Bewegungsachsen beim Abrichten mit Linienkontakt zwischen Abrichter und Werkzeug vornimmt,
wobei die Eingabefunktion, die Berechnungsfunktion und die Steuerungsfunktion so ausgestaltet sind, dass über die Eingabefunktion die Position der Modifikation auf dem Werkzeug in Abhängigkeit von der Werkzeugbreitenposition vorgebbar ist und die Berechnungs- und Steuerungsfunktion die Einstellungen der Bewegungsachsen als eine Funktion der Werkzeugbreitenposition vornimmt, wobei bevorzugt die Eingabefunktion, die Berechnungsfunktion und die Steuerungsfunktion so ausgestaltet sind, dass sie zur Durchführung eines der vorangegangenen Verfahren eingesetzt werden können.

19. Abrichtmaschine nach Anspruch 17 und/oder 18, mit einer Steuerung, wobei die Steuerung eine Mehrhub-Abrichtfunktion aufweist, welche einen Abrichtvorgang mit mindestens einem ersten und einem zweiten Hub durchführt, in welchem der Abrichter jeweils in Linienkontakt mit dem Werkzeug ist,

wobei die Steuerung weiterhin eine Eingabefunktion aufweist, durch welche die Position, an welcher die in einem ersten Hub erzeugte Modifikation an die mit einem zweiten Hub erzeugte Modifikation anschließt, als eine Funktion der Werkzeugbreitenposition vorgebbar ist, und/oder durch welche eine gewünschte Modifikation des Werkzeuges vorgebbar ist, wobei die Steuerung eine Bestimmungsfunktion zur Bestimmung der zu deren Herstellung notwendigen Hübe aufweist, welche die Position, an welcher die in einem ersten Hub erzeugte Modifikation an die mit einem zweiten Hub erzeugte Modifikation anschließt, als eine Funktion der Werkzeugbreitenposition bestimmt,
wobei die Steuerung eine Berechnungsfunktion aufweist, welche aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt,
und wobei die Steuerung eine Steuerungsfunktion aufweist, welche die entsprechende Einstellung der Bewegungsachsen beim Abrichten mit Linienkontakt zwischen Abrichter und Werkzeug vornimmt,
wobei bevorzugt die Eingabefunktion, die Berechnungsfunktion und die Steuerungsfunktion so ausgestaltet sind, dass sie zur Durchführung eines der vorangegangenen Verfahren eingesetzt werden können.

20. Verzahnmaschine mit einer Abrichtmaschine nach einem der Ansprüche 17 bis 19, wobei die Verzahnmaschine bevorzugt eine Werkstückaufnahme und eine ggf. zusätzlich zu der Werkzeugaufnahme der Abrichtmaschine vorgesehene Werkzeugaufnahme aufweist, und eine Verzahnbearbeitungssteuerung zur Ansteuerung von Werkstückaufnahme und Werkzeugaufnahme zur Durchführung einer Verzahnbearbeitung.

## Claims

1. A method of dressing a tool, which can be used for the gear tooth machining of a workpiece, on a dresser, wherein the dressing takes place with line contact between the dresser and the tool,

wherein a specific modification of the surface geometry of the tool is produced in that the position of the dresser with respect to the tool is varied in dependence on the tool width position during dressing, wherein at least three and preferably four or five degrees of freedom are used in the relative positioning between the dresser and the tool to generate the desired modification, wherein the degrees of freedom are controlled separately from one another to generate the desired modification,
**characterized in that**
the specific modification of the surface geometry of the tool produced by the change of the position of the dresser with respect to the tool when dressing in dependence on the tool width position is specifiable at a rolling angle as a function $C_{0FS}$ of the position in the tool width direction and at least the pitch of the surface geometry of the tool is specifiable as a function of the position in the tool width direction in a first direction of the tool which has an angle $\rho_{FS}$ to the tool width direction; and/or

**in that** the specific modification of the surface geometry of the tool produced by the change of the position of the dresser with respect to the tool when dressing in dependence on the tool width position is specifiable as a function of the tool width position at at least two rolling angles;
and/or

**in that** the specific modification of the surface geometry of the tool produced by the change of the position of the dresser with respect to the tool when dressing in dependence on the tool width position is specifiable as a function of the tool width position at at least one rolling angle and additionally an association of a specific radius of the dresser with a specific radius of the tool takes place, with the association preferably being specifiable as a function of the tool width position;
and/or

**in that** at least the pitch of the specific modification of the surface geometry of the tool produced by the change of the position of the dresser with respect to the tool when dressing in dependence on the tool width position is specifiable as a function of the position in the tool width position in a first direction of the tool which has an angle $\rho_{FS}$ to the tool width direction and additionally an association of a specific radius of the dresser with a specific radius of the tool takes place, with the association preferably being specifiable as a function of the tool width position;
and/or

**in that** at least the crowning of the specific modification of the surface geometry of the tool produced by the change of the position of the dresser with respect to the tool when dressing in dependence on the tool with position is specifiable as a function of the position in the tool width direction in a first direction of the tool which has an angle $\rho_{FS}$ to the tool width direction;
and/or **in that** a modification of the tool is specifiable or is produced which can be described at least approximately in the generating pattern at least locally in a first direction of the tool by a linear and/or quadratic function, with the coefficients of these linear and/or quadratic functions being formed in a second direction of the tool which is perpendicular to the first direction by coefficient functions $F_{FtC,1}$ for the constant portion and $F_{FtL,1}$ for the linear portion and/or $F_{FtQ,1}$ for the quadratic portion, with $F_{FtC,1}$ depending non-linearly on the position in the second direction and $F_{FtL,1}$ not being constant;
and/or **in that** a modification of the tool is specifiable or is produced whose pitch and/or crowning varies in dependence on the angle of rotation of the tool and/or on the tool width position, with additionally the tooth thickness varying non-linearly in dependence on the angle of rotation of the tool and/or on the tool width position;
and/or

**in that** at least four degrees of freedom of the relative position of the dresser with respect to the tool are controlled when dressing in line contact independently of one another as a function of the tool width position.

2. A method in accordance with claim 1, wherein the specific modification of the surface geometry of the tool produced by the change of the position of the dresser with respect to the tool when dressing in dependence on the tool with position can be described at least approximately in the generating pattern in the first direction as a linear, quadratic or cubic function whose coefficients in the tool width direction are given by functions $C_{0FS}$, $C_{1FS}$, $C_{2FS}$ and/or $C_{3FS}$ and/or by coefficient functions $F_{FtC,1}$ for the constant portion, $F_{FtL,1}$ for the linear portion and/or $F_{FtQ,1}$ for the quadratic portion.

3. A method in accordance with one of the preceding claims, wherein the specific modification of the surface geometry of the tool produced by the change of the position of the dresser with respect to the tool when dressing in dependence on the tool width position is specifiable as a function of the tool width position at at least three or four rolling angles;

and/or wherein an association of a specific radius of the dresser with respect to a specific radius of the tool takes place, with the association preferably being specifiable as a function of the tool width position;
and/or wherein an association of two specific radii of the dresser with two specific radii of the tool takes place, with the association preferably being specifiable as a function of the position in the tool width direction;
and/or wherein at least one of the rolling angles, and further preferably two or three rolling angles, at which the modification is/are specifiable, is or are selected differently in the tool width direction and is or are further preferably specifiable as a function of the tool width position.

4. A method in accordance with one of the preceding claims, wherein the dressing takes place on one flank and the at least two or three rolling angles are arranged on one flank; or wherein the dressing takes place on two flanks and the at least two or three rolling angles are distributed over the two flanks; and/or wherein the dressing takes place on two flanks and a tool having a conical base shape is used, with the conical angle preferably being used for setting the modification.

5. A method in accordance with one of the preceding claims for the modified dressing of a tool which can be used for the gear manufacturing machining of a workpiece on a dressing machine, wherein a modified dresser is used for dressing the tool and wherein the position in which the modification of the dresser is applied to the tool during dressing is specifiable in dependence on the tool width position or is changed by controlling the axes of movement of the dressing machine during dressing.

6. A method in accordance with one of the preceding claims for the modified dressing of a tool which can be used for the gear manufacturing machining of a workpiece on a dressing machine, wherein the dressing takes place in at least one first stroke and one second stroke in line contact in each case, and wherein the position at which the modification produced in a first stroke adjoins the modification produced with a second stroke is changed in dependence on the tool width position.

7. A method in accordance with claim 6, wherein the axes of movement of the dressing machine during dressing are preferably set differently in at least one first and second stroke in addition to the change required for the different positioning between the dresser and the tool in the two strokes in order to influence the pitch and/or crowning of the modification in at least one of the strokes, with the pitch and/or crowning preferably being specifiable as a function of the tool width position;

and/or wherein the specific modification is preferably set in at least one of the strokes such that the surface geometry produced by the first stroke adjoins the surface geometry produced by the second stroke at a desired angle and in particular tangentially;
and/or wherein a desired modification of the tool is preferably specified for at least one stroke and preferably for each stroke at at least two rolling angles and preferably at three rolling angles, with the modification preferably being specifiable as a function of the tool width position;
and/or wherein an association of a specific radius of the dresser with a specific radius of the tool takes place for at least one stroke and preferably for each stroke, with the association preferably being specifiable as a function of the tool width position;
and/or wherein different regions of the dresser are used for the first and second strokes; or wherein different dressers are used for the first and second strokes; and/or wherein one of the strokes is used for producing a modification of the dedendum or of the addendum, for example for producing a relief of the addendum or of the dedendum.

8. A method in accordance with one of the preceding claims, wherein a modification produced by a modification of the dresser is superposed with a specific modification of the surface geometry of the tool produced by the change of the position of the dresser to the tool during dressing,

wherein the position of the modification produced by a modification of the dresser is preferably specifiable, is in particular specifiable as a function of the position in the tool width direction, and/or by an association of a specific radius of the dresser with respect to a specific radius of the tool; and/or
wherein a desired stretching or compression of the modification of the dresser on the tool is preferably specifiable which is preferably specifiable as a function of the position in the tool width direction, in particular by an association of two specific radii of the dresser with two specific radii of the tool;
and/or wherein the modified dresser preferably has an unchanging modification over its complete active profile, for example an unchanging crowning; or wherein the modified dresser preferably has a modification in a first part region of its profile which differs from the profile shape in a second part region, with the modification in the first part region advantageously having a different profile angle and/or a different crowning, with the modification in particular being able to have an edge; and/or wherein the dresser is preferably in contact with the tool surface simultaneously in the first and second regions during dressing;
and/or wherein a combination dresser is used for a simultaneous dressing of the addendum and of the tooth flank, with the height of the addendum preferably being specified and being produced by setting the axes of movement of the dressing machine during dressing, with the height of the addendum preferably being specifiable as a function of the tool width position.

9. A method in accordance with one of the preceding claims, wherein a setting is selected from a plurality of settings of the axes of movement of the dressing machine which produce the same relative position between the dresser and the tool, which setting better satisfies specified conditions, with that setting preferably being selected which provides the desired relative position with a higher accuracy and/or with smaller positional errors, and/or with that setting being selected which requires smaller travel movements of the machine axes, and/or with that setting being selected which avoids collisions of the dresser, of the tool and/or of machine parts with one another;

and/or wherein the gear geometry produced by the tool or the gear geometry produced on the tool by the dressing is measured and the deviations of the axes of movement of the dressing machine present during dressing from their desired settings are determined from deviations from a desired geometry.

10. A method in accordance with one of the preceding claims, wherein the degrees of freedom which are used for producing the desired modification at least three, four or all of the following five degrees of freedom: angle of rotation of the tool; axial position of the tool; y position of the dresser; center distance and/or axial cross angle, with the axial position of the tool, i.e. the tool width position, preferably being used to displace the contact line of the dresser, and with two, three or four of the remaining four degrees of freedom being used independently of one another as a function of the axial position of the tool, i.e. at the tool width position, to influence the modification along the contact line.

11. A method in accordance with one of the preceding claims, wherein errors in the surface geometry of a dresser are at least partly corrected by specifying corresponding correction values on the setting of the axes of movement of the dressing machine;

and/or wherein a dresser which was configured for a tool having a first macrogeometry and/or a first desired surface geometry is used for dressing a tool having a second macrogeometry and/or having a second desired surface geometry, with the errors resulting by the configuration for the tool having the first macrogeometry and/or the first desired surface geometry being at least partly compensated by a corresponding setting of the axes of movement of the dressing machine when dressing the tool having a second macrogeometry and/or a second desired surface geometry;

and/or wherein the setting of the axes of movement of the dressing machine during dressing and/or the macrogeometry or the modification of the dresser and/or the macrogeometry of the tool is/are determined by means of curve fitting, with the modifications in the generating pattern achievable by the change of the setting of the axes of movement of the dressing machine preferably varying in a direction having an angle $\rho_{FS}$ to the tool width direction at two, three or four rolling angles and preferably being interpolated therebetween and in particular being assumed as a linear, quadratic and/or cubic function, and being compared with a desired modification, with a distance function preferably being used for quantifying the deviation, with the distance function preferably having a weighting dependent on the position in the generating pattern.

12. A method in accordance with one of the preceding claims, wherein a tool is used in which at least one thread is inactive and/or omitted, and/or in which the dresser at least partly engages into the contour of the oppositely disposed flank during the dressing of a first flank; and/or wherein at least one tooth flank is dressed such that it does not come into contact with the workpiece during the machining of the workpiece and is therefore inactive, with at least one thread preferably being dressed such that it does not come into contact with the workpiece during the machining of the workpiece and is therefore inactive;

with at least one inactive and/or omitted thread being provided between two active threads;

and/or wherein maximally every second tooth comes into engagement with the tool during the machining of the workpiece in a generating coupling, after one another; and/or wherein at least one first portion of the teeth of the workpiece is preferably machined in dependence on the number of teeth of the workpiece and/or on the number of threads in at least one first passage, whereupon the workpiece is rotated relative to the tool in order to machine at least one second portion of the teeth in at least one second passage.

13. A method of producing a workpiece having a modified gear geometry by a generating method, in particular a diagonal generating method, by means of a modified tool,

wherein a specific modification of the surface geometry of the tool is produced by a method in accordance with one of the preceding claims; and

wherein the specific modification of the tool by the generating method, in particular the diagonal generating method, produces a corresponding modification on the surface of the workpiece.

14. A software program for calculating the relative position between the dresser and the tool required for producing a desired modification of a tool during dressing in line contact with a specified dresser or the settings of the axes of movement of a dressing machine required for its provision, in particular for carrying out a method in accordance with one of the preceding claims, comprising

an input function by which the desired modification of the tool is specifiable; and

a calculation function which determines from the desired modification the relative position between the dresser and the tool required for the production of said specific modification during dressing with line contact between the dresser and the tool or which determines the settings of the axes of movement required for providing said specific modification as a function of the tool width position;

wherein the input function and the calculation function are configured such that they can be used for carrying out one of the preceding methods; and/or

wherein the input function and the calculation function are configured

such that the specific modification of the surface geometry of the tool is specifiable at a rolling angle as a function $C_{0FS}$ of the position in the tool width direction and such that at least the pitch and/or crowning of the surface geometry of the tool is specifiable in a first direction of the tool which has an angle $\rho_{FS}$ to the tool width direction as a function of the position in the tool width direction, with the modification being able to be produced by the calculated progression of the relative position and/or setting of the axes of movement of the dressing machine; and/or

wherein the input function and the calculation function are configured such that the specific modification of the surface geometry of the tool is specifiable as a function of the tool width position at at least two rolling angles, with the modification being able to be produced by the calculated progression of the relative position or the setting of the axes of movement of the dressing machine; and/or

wherein the input function and the calculation function are configured such that the specific modification of the surface geometry of the tool is specifiable as a function of the tool width position at at least one rolling angle and in addition an association of a specific radius of the dresser with a specific radius of the tool takes place, with the modification being able to be produced by the calculated progression of the relative position or of the setting of the axes of movement of the dressing machine, with the association preferably being specifiable as a function of the tool width position; and/or

wherein the input function and the calculation function are configured such that a specific modification of the surface geometry of the tool is specifiable or is produced which can be described at least approximately in the generating pattern at least locally in a first direction of the tool by a linear and/or quadratic function, with the coefficients of this linear and/or quadratic function being formed in a second direction of the tool which is perpendicular to the first direction by coefficient functions $F_{FtC,1}$ for the constant portion and $F_{FtL,1}$ for the linear portion and/or $F_{FtQ,1}$ for the quadratic portion, with $F_{FtC,1}$ depending in a non-linear manner on the position in the second direction and with $F_{FtL,1}$ being non-constant; and/or

wherein the input function and the calculation function are configured such that a specific modification of the surface geometry of the tool is specifiable or is produced whose pitch and/or crowning varies in dependence on the angle of rotation of the tool and/or on the tool width position, with additionally the tooth thickness varying non-linearly in dependence on the angle of rotation of the tool and/or on the tool width position.

15. A software program in accordance with claim 14, comprising an input function by which a specified modification of the dresser can be input and a desired position of the modification of the dresser on the tool are specifiable, with the specification of the desired position of the modification of the dresser on the tool preferably taking place by associating a specific radius of the dresser with a specific radius of the tool; and

a calculation function which determines from the specified modification of the dresser and from the desired position of the modification of the dresser on the tool, the relative position between the dresser and the tool required for the production of said specified modification during dressing with line contact between the dresser and the tool or the settings of the axes of movement required for providing said specified modification; wherein the input function and the calculation function are preferably configured such that they can be used for carrying out one of the preceding methods; and/or

wherein the input function and the calculation function are configured such that the position of the modification on the tool is specifiable via the input function in dependence on the tool width position and the calculation function determines the required relative position between the dresser and the tool or the settings of the axes of movement required for providing said relative position as a function of the tool width position.

16. A software program in accordance with claim 14 or claim 15 for calculating the relative position between the dresser and the tool required for producing a desired modification of a tool during multi-hub dressing in line contact with a dresser or the settings of the axes of movement of a dressing machine required for its provision, in particular for carrying out a method in accordance with one of the preceding claims,

    having a multi-hub calculation function which determines the settings of the axes of movement required for multi-hub dressing with line contact between the dresser and the tool;
    having an input function by which the position at which the modification produced in a first stroke adjoins the modification produced using a second stroke is specifiable as a function of the tool width position; and/or
    having an input function and a determination function, wherein a desired modification of the tool is specifiable by the input function and the determination function determines the strokes required for producing said desired modification, with the determination function varying or determining the position at which the modification produced in a first stroke adjoins the modification produced using a second stroke as a function of the tool width position;
    wherein the multi-hub calculation function determines from the position at which the modification produced in a first stroke adjoins the modification produced using a second stroke, the settings of the axes of movement required for producing said modification during dressing with line contact between the dresser and the tool;
    wherein the input function, the calculation function and the control function are preferably configured such that they can be used for carrying out one of the preceding methods.

17. A dressing machine having a tool holder for holding the tool to be dressed and a dresser holder for holding the dresser used for this purpose, wherein the dresser holder has an axis of rotation, and wherein the dressing machine has an axis of movement by which the tool width position can be set,
**characterized in that**

    the dressing machine has further axes of movement by which at least a further three or four degrees of freedom, of the relative position between the tool and the dresser can be set independently of one another, and wherein the dressing machine has a control which is configured such that the setting of the further three or four degrees of freedom are controlled in line contact with the dresser independently of one another as a function of the tool width position;
    and/or
    **in that** the dressing machine has a control having an input function by which the desired modification of the tool is specifiable as a function of the tool width position;
    wherein the control has a calculation function which determines from the desired modification the settings of the axes of movement required for the production of said specific modification during dressing with line contact between the dresser and the tool as a function of the tool width position;
    and wherein the control has a control function which carries out the corresponding setting of the axes of movement during the dressing with line contact between the dresser and the tool as a function of the tool width position;
    wherein the input function, the calculation function and the control function are configured such that they can be used for carrying out one of the preceding methods;
    and/or
    wherein the input function, the calculation function and the control function are configured such that they can be used to carry out one of the preceding methods:
    and/or
    wherein the input function, the calculation function and the control function are configured such that
    the specific modification of the surface geometry of the tool is specifiable at a rolling angle as a function $C_{0FS}$ of the position in the tool width direction and such that at least the pitch and/or crowning of the surface geometry of the tool is specifiable in a first direction of the tool which has an angle $\rho_{FS}$ to the tool width direction as a function of the position in the tool width direction, with the modification being able to be produced by the setting of the axes of movement of the dressing machine carried out by the control function;
    and/or
    wherein the input function, the calculation function and the control function are configured such that the specific modification of the surface geometry of the tool is specifiable as a function of the tool width position at at least two rolling angles, with the modification being able to be produced by the setting of the axes of movement of the dressing machine carried out by the control function;

and/or

wherein the input function, the calculation function and the control function are configured such that the specific modification of the surface geometry of the tool is specifiable as a function of the tool width position at at least one rolling angle and in addition an association of a specific radius of the dresser with a specific radius of the tool takes place, with the modification being able to be produced by the setting of the axes of movement of the dressing machine carried out by the control function, with the association preferably being specifiable as a function of the tool width position;

and/or

wherein the input function and the calculation function are configured such that a specific modification of the surface geometry of the tool is specifiable or is produced which can be described at least approximately in the generating pattern at least locally in a first direction of the tool by a linear and/or quadratic function, with the coefficients of this linear and/or quadratic function being formed in a second direction of the tool which is perpendicular to the first direction by coefficient functions $F_{FtC,1}$ for the constant portion and $F_{FtL,1}$ for the linear portion and/or $F_{FtQ,1}$ for the quadratic portion, with $F_{FtC,1}$ depending in a non-linear manner on the position in the second direction and with $F_{FtL,1}$ being non-constant;

and/or

wherein the input function and the calculation function are configured such that a specific modification of the surface geometry of the tool is specifiable or is produced whose pitch and/or crowning varies in dependence on the angle of rotation of the tool and/or on the tool width position, with additionally the tooth thickness varying non-linearly in dependence on the angle of rotation of the tool and/or on the tool width position.

18. A dressing in accordance with claim 17; having a control, wherein the control has an input function by which a specified modification of the dresser can be input and a desired position of the modification of the dresser on the tool is specifiable, with the specification of the desired position of the modification of the dresser on the tool preferably taking place by associating a specific radius of the dresser with a specific radius of the tool; and

wherein the control has a calculation function which determines from the specified modification of the dresser and from the desired position of the modification of the dresser on the tool, the settings of the axes of movement required for the production of said modification during dressing with line contact between the dresser and the tool; and wherein the control has a control function which carries out the corresponding setting of the axes of movement during the dressing with line contact between the dresser and the tool;

wherein the input function, the calculation function and the control function are configured such that the position of the modification on the tool is specifiable via the input function in dependence on the tool width position and the calculation and control function carries out the settings of the axes of movement as a function of the tool width position, wherein the input function, the calculation function and the control function are preferably configured such that they can be used for carrying out one of the preceding methods.

19. A dressing machine in accordance with claim 17 and/or claim 18; having a control wherein the control has a multi-stroke dressing function which carries out a dressing procedure with at least one first stroke and one second stroke in which the dresser is respectively in line contact with the tool;

wherein the control furthermore has an input function by which the position at which the modification produced in a first stroke adjoins the modification produced with a second stroke is specifiable as a function of the tool width position; and/or by which a desired modification of the tool is specifiable, with the control having a determination function for determining the strokes required for their production which determines the position at which the modification produced in a first stroke adjoins the modification produced using a second stroke as a function of the tool width position;

wherein the control has a calculation function which determines from the position at which the modification produced in a first stroke adjoins the modification produced using a second stroke, the settings of the axes of movement required for producing said modification during dressing with line contact between the dresser and the tool; and wherein the control has a control function which carries out the corresponding setting of the axes of movement during the dressing with line contact between the dresser and the tool;

wherein the input function, the calculation function and the control function are preferably configured such that they can be used for carrying out one of the preceding methods.

20. A gear manufacturing machine having a dressing machine in accordance with one of the claims 17 to 19, wherein the gear cutting machine preferably has a workpiece holder and a tool holder provided optionally in addition to the tool holder of the dressing machine, and a gear manufacturing machining control for controlling the workpiece holder and the tool holder for carrying out a gear manufacturing machining.

**Revendications**

1. Procédé de dressage d'un outil, qui peut être utilisé pour l'usinage de denture d'une pièce, sur une machine à dresser, le dressage étant effectué avec contact linéaire entre le dresseur et l'outil,

dans lequel une modification ciblée de la géométrie de surface de l'outil est engendrée par le fait que la position du dresseur par rapport à l'outil, lors du dressage, est variée en fonction de la position en largeur de l'outil,

dans lequel, pour le positionnement relatif entre le dresseur et l'outil, au moins trois et de préférence quatre ou cinq degrés de liberté sont utilisés pour engendrer la modification souhaitée, les degrés de liberté étant commandés indépendamment les uns des autres pour engendrer la modification souhaitée,

**caractérisé en ce que**

la modification ciblée de la géométrie de surface de l'outil sur un angle de taille en développante, engendrée par le changement de la position du dresseur par rapport à l'outil lors du dressage en fonction de la position en largeur de l'outil, peut être prédéfinie comme fonction $C_{0FS}$ de la position dans le sens de la largeur de l'outil et au moins la pente de la géométrie de surface de l'outil dans une première direction de l'outil, qui présente un angle $\rho_{FS}$ par rapport au sens de la largeur de l'outil, peut être prédéfinie comme fonction de la position dans le sens de la largeur de l'outil, et/ou

**en ce que** la modification ciblée de la géométrie de surface de l'outil sur au moins deux angles de taille en développante, engendrée par le changement de la position du dresseur par rapport à l'outil lors du dressage en fonction de la position en largeur de l'outil, peut être prédéfinie comme fonction de la position en largeur de l'outil, et/ou

**en ce que** la modification ciblée de la géométrie de surface de l'outil sur au moins un angle de taille en développante, engendrée par le changement de la position du dresseur par rapport à l'outil lors du dressage en fonction de la position en largeur de l'outil, peut être prédéfinie comme fonction de la position en largeur de l'outil et une association d'un rayon donné du dresseur avec un rayon donné de l'outil est effectuée en plus, l'association pouvant de préférence être prédéfinie comme fonction de la position en largeur de l'outil, et/ou

**en ce qu'**au moins la pente de la modification ciblée de la géométrie de surface de l'outil, engendrée par le changement de la position du dresseur par rapport à l'outil lors du dressage en fonction de la position en largeur de l'outil, dans une première direction de l'outil, qui présente un angle $\rho_{FS}$ par rapport au sens de la largeur de l'outil, peut être prédéfinie comme fonction de la position dans le sens de la largeur de l'outil, et une association d'un rayon donné du dresseur avec un rayon donné de l'outil est effectuée en plus, l'association pouvant de préférence être prédéfinie comme fonction de la position en largeur de l'outil, et/ou

**en ce qu'**au moins le bombé de la modification ciblée de la géométrie de surface de l'outil, engendrée par le changement de la position du dresseur par rapport à l'outil lors du dressage en fonction de la position en largeur de l'outil, dans une première direction de l'outil, qui présente un angle $\rho_{FS}$ par rapport au sens de la largeur de l'outil, peut être prédéfini comme fonction de la position dans le sens de la largeur de l'outil,

et/ou **en ce qu'**une modification de l'outil peut être prédéfinie ou est engendrée, qui peut être décrite, au moins approximativement, dans l'image de la taille en développante au moins localement dans une première direction de l'outil par une fonction linéaire et/ou quadratique, les coefficients de cette fonction linéaire et/ou quadratique dans une seconde direction de l'outil, qui s'étend perpendiculairement à la première direction, étant formés par des fonctions de coefficient $F_{FtC,1}$ pour la part constante ainsi que $F_{FtL,1}$ pour la part linéaire, et/ou $F_{FtQ,1}$ pour la part quadratique, $F_{FtC,1}$ dépendant de manière non linéaire de la position dans la seconde direction et $F_{FtL,1}$ n'étant pas constante,

et/ou **en ce qu'**une modification de l'outil peut être prédéfinie ou est engendrée, dont la pente et/ou le bombé varie en fonction de l'angle de rotation de l'outil et/ou de la position en largeur de l'outil, l'épaisseur de dent variant en plus de manière non linéaire en fonction de l'angle de rotation de l'outil et/ou de la position en largeur de l'outil,

et/ou

**en ce qu'**au moins quatre degrés de liberté de la position relative du dresseur par rapport à l'outil lors du dressage en contact linéaire sont commandés indépendamment les uns des autres comme fonction de la position en largeur de l'outil.

**2.** Procédé selon la revendication 1, dans lequel la modification ciblée de la géométrie de surface de l'outil, engendrée par le changement de la position du dresseur par rapport à l'outil lors du dressage en fonction de la position en largeur de l'outil, peut être décrite, au moins approximativement, dans l'image de la taille en développante dans la première direction comme fonction linéaire, quadratique ou cubique, dont les coefficients sont donnés dans le sens de la largeur de l'outil par les fonctions $C_{0FS}$, $C_{1FS}$, $C_{2FS}$ et/ou $C_{3FS}$ et/ou par les fonctions de coefficient $F_{FtC,1}$ pour la part constante, $F_{Ftl,1}$ pour la part linéaire et/ou $F_{FtQ,1}$ pour la part quadratique.

**3.** Procédé selon l'une des revendications précédentes, dans lequel la modification ciblée de la géométrie de surface de l'outil sur au moins trois ou quatre angles de taille en développante, engendrée par le changement de la position du dresseur par rapport à l'outil lors du dressage en fonction de la position en largeur de l'outil, peut être prédéfinie comme fonction de la position en largeur de l'outil,

et/ou dans lequel une association d'un rayon donné du dresseur avec un rayon donné de l'outil est effectuée, l'association pouvant de préférence être définie comme fonction de la position en largeur de l'outil,
et/ou dans lequel une association de deux rayons donnés du dresseur avec deux rayons donnés de l'outil est effectuée, l'association pouvant de préférence être prédéfinie comme fonction de la position dans le sens de la largeur de l'outil,
et/ou dans lequel au moins un des angles de taille en développante et de préférence encore deux ou trois angles de taille en développante, sur lequel ou lesquels la modification peut être prédéfinie, est ou sont choisis différents dans le sens de la largeur de l'outil, et de préférence encore peut ou peuvent être définis comme fonction de la position en largeur de l'outil.

**4.** Procédé selon l'une des revendications précédentes, dans lequel le dressage est effectué sur un flanc et les au moins deux ou trois angles de taille en développante sont disposés sur un flanc, ou dans lequel le dressage est effectué sur deux flancs et les au moins deux ou trois angles de taille en développante sont distribués sur les deux flancs, et/ou dans lequel le dressage est effectué sur deux flancs et un outil avec une forme de base conique est utilisé, l'angle de cône étant de préférence utilisé pour le réglage de la modification.

**5.** Procédé selon l'une des revendications précédentes pour le dressage modifié d'un outil, qui peut être utilisé pour l'usinage de denture d'une pièce, sur une machine à dresser, un dresseur modifié étant utilisé pour le dressage de l'outil, et la position, dans laquelle la modification du dresseur est appliquée sur l'outil lors du dressage, pouvant être prédéfinie en fonction de la position en largeur de l'outil ou étant modifiée par une commande des axes de déplacement de la machine à dresser lors du dressage.

**6.** Procédé selon l'une des revendications précédentes pour le dressage modifié d'un outil, qui peut être utilisé pour l'usinage de denture d'une pièce, sur une machine à dresser, le dressage étant effectué en au moins une première et une seconde course respectivement avec contact linéaire, et la position, dans laquelle la modification engendrée dans une première course suit la modification engendrée avec une seconde course, est modifiée en fonction de la position en largeur de l'outil.

**7.** Procédé selon la revendication 6, dans lequel les axes de déplacement de la machine à dresser sont de préférence réglés différemment lors du dressage dans au moins une première et une seconde course en plus de la modification nécessaire pour le positionnement différent entre le dresseur et l'outil pour les deux courses, pour influencer la pente et/ou le bombé de la modification pour au moins une des courses, la pente et/ou le bombé pouvant de préférence être prédéfini(e) comme fonction de la position en largeur de l'outil,

et/ou dans lequel la modification ciblée est de préférence réglée pour au moins une des courses de telle sorte que la géométrie de surface engendrée par la première course suit selon un angle souhaité et en particulier de manière tangentielle la géométrie de surface engendrée par la seconde course,
et/ou dans lequel, pour au moins une et de préférence chaque course, une modification souhaitée de l'outil est de préférence prédéfinie sur au moins deux et de préférence trois angles de taille en développante, la modification pouvant de préférence être prédéfinie comme fonction de la position en largeur de l'outil,
et/ou dans lequel, pour au moins une et de préférence chaque course, une association d'un rayon donné du dresseur avec un rayon donné de l'outil est effectuée, l'association pouvant de préférence être prédéfinie comme fonction de la position en largeur de l'outil,
et/ou, pour la première et la seconde course, des zones différentes du dresseur sont utilisées ou pour la première et la seconde course, différents dresseurs sont utilisés, et/ou dans lequel une des courses est utilisée pour engendrer une modification du pied de la dent ou du sommet de la dent, par exemple pour engendrer une dépouille du sommet de la dent ou du pied de la dent.

8. Procédé selon l'une des revendications précédentes, dans lequel une modification ciblée de la géométrie de surface de l'outil engendrée lors du dressage par le changement de la position du dresseur par rapport à l'outil est superposée à une modification engendrée par une modification du dresseur,

dans lequel la position de la modification engendrée par une modification du dresseur peut de préférence être prédéfinie, peut en particulier être prédéfinie comme fonction de la position dans le sens de la largeur de l'outil et/ou par une association d'un rayon donné du dresseur avec un rayon donné de l'outil, et/ou dans lequel un allongement ou un écrasement souhaité de la modification du dresseur sur l'outil peut de préférence être prédéfini, ledit allongement ou écrasement pouvant de préférence être prédéfini comme fonction de la position dans le sens de la largeur de l'outil, en particulier par une association de deux rayons donnés du dresseur avec deux rayons donnés de l'outil,
et/ou dans lequel le dresseur modifié présente de préférence une modification constante sur son profil actif complet, par exemple un bombé constant, ou dans lequel le dresseur modifié présente de préférence une modification dans une première partie de son profil, qui diffère de la forme du profil dans une seconde partie, la modification dans la première partie présentant de manière avantageuse un autre angle d'incidence et/ou un autre bombé, la modification pouvant en particulier présenter une arête, et/ou dans lequel le dresseur est de préférence simultanément en contact avec la surface de l'outil dans la première et la seconde partie lors du dressage,
et/ou dans lequel un dresseur combiné pour le dressage simultané du sommet de la dent et du flanc de la dent est utilisé, la hauteur du sommet de la dent étant de préférence prédéfinie et engendrée par le réglage des axes de déplacement de la machine à dresser lors du dressage, la hauteur du sommet de la dent pouvant de préférence être prédéfinie comme fonction de la position en largeur de l'outil.

9. Procédé selon l'une des revendications précédentes, dans lequel, parmi une pluralité de réglages des axes de déplacement de la machine à dresser, qui engendrent la même position relative entre le dresseur et l'outil, un réglage qui satisfait mieux à des conditions prédéfinies est choisi, le réglage qui fournit la position relative souhaitée avec une plus grande précision et/ou de plus faibles erreurs de position étant de préférence choisi, et/ou dans lequel le réglage qui nécessite de plus petits mouvements de déplacement des axes de la machine est choisi et/ou dans lequel le réglage qui évite des collisions entre le dresseur, l'outil et/ou des pièces de la machine est choisi,
et/ou dans lequel la géométrie de denture engendrée par l'outil ou la géométrie de denture engendrée sur l'outil par le dressage est mesurée et, à partir d'écarts avec une géométrie désirée, les écarts des axes de déplacement de la machine à dresser présents lors du dressage par rapport à leurs réglages désirés sont déterminés.

10. Procédé selon l'une des revendications précédentes, dans lequel, pour les degrés de liberté utilisés pour engendrer la modification souhaitée sont au moins trois, quatre ou la totalité des cinq degrés de liberté suivants : l'angle de rotation de l'outil, la position axiale de l'outil, la position en y du dresseur, l'entraxe et/ou l'angle de croisement des axes, dans lequel la position axiale de l'outil, c'est-à-dire la position en largeur de l'outil, est de préférence utilisée pour déplacer la ligne de contact du dresseur, et parmi les quatre degrés de liberté restants, deux, trois ou quatre degrés de liberté sont pris en compte indépendamment les uns des autres comme fonction de la position axiale de l'outil, c'est-à-dire de la position en largeur de l'outil, pour influencer la modification le long de la ligne de contact.

11. Procédé selon l'une des revendications précédentes, dans lequel des erreurs dans la géométrie de surface d'un dresseur sont corrigées au moins en partie par la définition de valeurs de correction correspondantes lors du réglage des axes de déplacement de la machine à dresser,

et/ou dans lequel un dresseur, qui a été conçu pour un outil avec une première macrogéométrie et/ou une première géométrie de surface souhaitée, est utilisé pour le dressage d'un outil avec une seconde macrogéométrie et/ou une seconde géométrie de surface souhaitée, les erreurs qui résultent de la conception pour l'outil avec la première macrogéométrie et/ou la première géométrie de surface souhaitée étant compensées au moins en partie par un réglage correspondant des axes de déplacement de la machine à dresser lors du dressage de l'outil avec une seconde macrogéométrie et/ou une seconde géométrie de surface souhaitée,
et/ou dans lequel le réglage des axes de déplacement de la machine à dresser lors du dressage et/ou la macrogéométrie ou la modification du dresseur et/ou la macrogéométrie de l'outil sont déterminés au moyen d'un calcul d'ajustement, les modifications de l'image de la taille en développante qui peuvent être obtenues par la modification du réglage des axes de déplacement de la machine à dresser étant de préférence variées dans une direction à un angle $\rho_{FS}$ par rapport au sens de la largeur de l'outil sur deux, trois ou quatre angles de taille en développante et de préférence interpolées entre ceux-ci et en particulier supposées comme fonction linéaire, quadratique et/ou cubique, et étant comparées à une modification souhaitée, une fonction de distance étant de préférence utilisée pour quantifier l'écart, la fonction de distance présentant de préférence une pondération dépendante de la position dans l'image de la taille en développante.

12. Procédé selon l'une des revendications précédentes, dans lequel un outil est utilisé, dont au moins un filet est inactif et/ou réservé, et/ou pour lequel le dresseur s'engrène, lors du dressage d'un premier flanc, au moins en partie dans le contour du flanc opposé, et/ou dans lequel au moins un flanc de dent est dressé de telle manière qu'il ne vient pas en contact avec la pièce lors de l'usinage de la pièce et est par conséquent inactif, au moins un filet étant de préférence dressé de telle manière qu'il ne vient pas en contact avec la pièce lors de l'usinage de la pièce et est par conséquent inactif,

dans lequel au moins un filet inactif et/ou réservé est de préférence prévu entre deux filets actifs,
et/ou dans lequel de préférence au maximum une dent sur deux vient successivement en prise avec l'outil lors de l'usinage de la pièce en engrènement de génération, et/ou dans lequel de préférence, en fonction du nombre de dents de la pièce et/ou du nombre de filets, au moins une première partie des dents de la pièce est usinée dans au moins un premier passage, puis la pièce est tournée par rapport à la pièce pour usiner au moins une seconde partie des dents dans au moins un second passage.

13. Procédé de fabrication d'une pièce avec géométrie de denture modifiée par un procédé de taille en développante, en particulier un procédé de taille en développante diagonale au moyen d'un outil modifié,

dans lequel une modification ciblée de la géométrie de surface de l'outil est engendrée par un procédé selon l'une des revendications précédentes, et
dans lequel la modification ciblée de l'outil engendre, par le procédé de taille en développante, en particulier le procédé de taille en développante diagonale, une modification correspondante sur la surface de la pièce.

14. Programme logiciel destiné au calcul de la position relative entre le dresseur et l'outil nécessaire pour engendrer une modification souhaitée d'un outil lors du dressage en contact linéaire avec un dresseur prédéfini ou des réglages des axes de déplacement d'une machine à dresser nécessaires pour la mise en place de celle-ci, en particulier pour exécuter un procédé selon l'une des revendications précédentes, comprenant

une fonction de saisie, par laquelle la modification souhaitée de l'outil peut être prédéfinie, et
une fonction de calcul, qui détermine, à partir de la modification souhaitée, la position relative entre le dresseur et l'outil nécessaire pour engendrer cette modification lors du dressage avec contact linéaire entre le dresseur et l'outil ou les réglages des axes de déplacement nécessaires pour la mise en place de celle-ci comme fonction de la position en largeur de l'outil,
la fonction de saisie et la fonction de calcul étant conçues de manière à pouvoir être utilisées pour l'exécution d'un des procédés précédents, et/ou
dans lequel la fonction de saisie et la fonction de calcul sont conçues de telle manière que
la modification ciblée de la géométrie de surface de l'outil sur un angle de taille en développante peut être prédéfinie comme fonction $C_{0FS}$ de la position dans le sens de la largeur de l'outil et au moins la pente et/ou le bombé de la géométrie de surface de l'outil dans une première direction de l'outil, qui présente un angle $\rho_{FS}$ par rapport au sens de la largeur de l'outil, peut être prédéfini(e) comme fonction de la position dans le sens de la largeur de l'outil, la modification pouvant être engendrée par le cheminement calculé de la position relative ou du réglage des axes de déplacement de la machine à dresser,
et/ou
dans lequel la fonction de saisie et la fonction de calcul sont conçues de telle manière que la modification ciblée de la géométrie de surface de l'outil sur au moins deux angles de taille en développante peut être prédéfinie comme fonction de la position en largeur de l'outil, la modification pouvant être engendrée par le cheminement calculé de la position relative ou du réglage des axes de déplacement de la machine à dresser,
et/ou
dans lequel la fonction de saisie et la fonction de calcul sont conçues de telle manière que la modification ciblée de la géométrie de surface de l'outil sur au moins un angle de taille en développante peut être prédéfinie comme fonction de la position en largeur de l'outil et une association d'un rayon donné du dresseur avec un rayon donné de l'outil est effectuée en plus, la modification pouvant être engendrée par le cheminement calculé de la position relative ou du réglage des axes de déplacement de la machine à dresser, l'association pouvant de préférence être prédéfinie comme fonction de la position en largeur de l'outil,

et/ou

dans lequel la fonction de saisie et la fonction de calcul sont conçues de telle manière qu'une modification ciblée de la géométrie de surface de l'outil peut être prédéfinie ou est engendrée, laquelle peut être décrite, au moins approximativement, dans l'image de la taille en développante au moins localement dans une première direction de l'outil par une fonction linéaire et/ou quadratique, les coefficients de cette fonction linéaire et/ou quadratique dans une seconde direction de l'outil, qui s'étend perpendiculairement à la première direction, étant formés par les fonctions de coefficient $F_{FtC,1}$ pour la part constante ainsi que $F_{FtL,1}$ pour la part linéaire et/ou $F_{FtQ,1}$ pour la part quadratique, $F_{FtC,1}$ dépendant de manière non linéaire de la position dans la seconde direction et $F_{FtL,1}$ n'étant pas constante,

et/ou

dans lequel la fonction de saisie et la fonction de calcul sont conçues de telle manière qu'une modification ciblée de la géométrie de surface de l'outil peut être prédéfinie ou est engendrée, dont la pente et/ou le bombé varie en fonction de l'angle de rotation de l'outil et/ou de la position en largeur de l'outil, l'épaisseur de dent variant en plus de manière non linéaire en fonction de l'angle de rotation de l'outil et/ou de la position en largeur de l'outil.

15. Programme logiciel selon la revendication 14, comprenant une fonction de saisie, par laquelle une modification prédéfinie du dresseur peut être saisie et une position souhaitée de la modification du dresseur sur l'outil peut être prédéfinie, la définition de la position souhaitée de la modification du dresseur sur l'outil étant de préférence effectuée par l'association d'un rayon donné du dresseur avec un rayon donné de l'outil, et

une fonction de calcul, qui détermine, à partir de la modification prédéfinie du dresseur et de la position souhaitée de la modification du dresseur sur l'outil, la position relative entre le dresseur et l'outil nécessaire pour engendrer cette modification lors du dressage avec contact linéaire entre le dresseur et l'outil ou les réglages des axes de déplacement nécessaires pour la mise en place de celle-ci, la fonction de saisie et la fonction de calcul étant de préférence conçues de manière à pouvoir être utilisées pour l'exécution d'un des procédés précédents, et/ou dans lequel la fonction de saisie et la fonction de calcul sont conçues de telle manière que, par le biais de la fonction de saisie, la position de la modification sur l'outil peut être prédéfinie en fonction de la position en largeur de l'outil et la fonction de calcul détermine la position relative nécessaire entre le dresseur et l'outil ou les réglages des axes de déplacement nécessaires pour la mise en place de celle-ci comme fonction de la position en largeur de l'outil.

16. Programme logiciel selon la revendication 14 ou 15, destiné au calcul de la position relative entre le dresseur et l'outil nécessaire pour engendrer une modification souhaitée d'un outil lors du dressage par courses multiples en contact linéaire avec un dresseur ou des réglages des axes de déplacement d'une machine à dresser nécessaires pour la mise en place de celle-ci, en particulier pour l'exécution d'un procédé selon l'une des revendications précédentes,

comprenant une fonction de calcul de courses multiples, qui détermine les réglages des axes de déplacement nécessaires pour le dressage par courses multiples avec contact linéaire entre le dresseur et l'outil, comprenant une fonction de saisie, par laquelle la position, dans laquelle la modification engendrée dans une première course suit la modification engendrée avec une seconde course, peut être prédéfinie comme fonction de la position en largeur de l'outil, et/ou comprenant une fonction de saisie et une fonction de détermination, la fonction de saisie permettant de prédéfinir une modification souhaitée de l'outil, et la fonction de détermination déterminant les courses nécessaires pour obtenir celle-ci, la fonction de détermination modifiant ou déterminant la position, dans laquelle la modification engendrée dans une première course suit la modification engendrée avec une seconde course, comme fonction de la position en largeur de l'outil,

dans lequel la fonction de calcul des courses multiples détermine, à partir de la position dans laquelle la modification engendrée dans une première course suit la modification engendrée avec une seconde course, les réglages des axes de déplacement nécessaires pour engendrer celle-ci lors du dressage avec contact linéaire entre le dresseur et l'outil,

dans lequel, de préférence, la fonction de saisie, la fonction de calcul et la fonction de commande sont conçues de manière à pouvoir être utilisées pour l'exécution d'un des procédés précédents.

17. Machine à dresser comprenant un logement d'outil pour recevoir l'outil à dresser et un logement de dresseur pour recevoir le dresseur utilisé à cet effet, le logement de dresseur présentant un axe de rotation, et la machine à dresser présentant un axe de déplacement, par lequel la position en largeur de l'outil peut être réglée, **caractérisée en ce que**

la machine à dresser présente d'autres axes de déplacement, par lesquels trois ou quatre autres degrés de liberté de la position relative entre l'outil et le dresseur peuvent être réglés indépendamment les uns des autres, et la machine à dresser comportant un dispositif de commande, qui est conçu de telle sorte que le réglage des trois ou quatre autres degrés de liberté en contact linéaire avec le dresseur est commandé indépendamment les uns des autres comme fonction de la position en largeur de l'outil,

et/ou

**en ce que** la machine à dresser comporte un dispositif de commande doté d'une fonction de saisie, par laquelle la modification souhaitée de l'outil peut être prédéfinie comme fonction de la position en largeur de l'outil,

dans laquelle le dispositif de commande comporte une fonction de calcul, qui détermine, à partir de la modification souhaitée, les réglages des axes de déplacement nécessaires pour engendrer cette modification comme fonction de la position en largeur de l'outil lors du dressage avec contact linéaire entre le dresseur et l'outil,

et dans laquelle le dispositif de commande comporte une fonction de commande, qui effectue le réglage correspondant des axes de déplacement comme fonction de la position en largeur de l'outil lors du dressage avec contact linéaire entre le dresseur et l'outil,

dans laquelle la fonction de saisie, la fonction de calcul et la fonction de commande sont conçues de manière à pouvoir être utilisées pour l'exécution d'un des procédés précédents,

et/ou

dans laquelle la fonction de saisie, la fonction de calcul et la fonction de commande sont conçues de telle manière que

la modification ciblée de la géométrie de surface de l'outil sur un angle de taille en développante peut être prédéfinie comme fonction $C_{0FS}$ de la position dans le sens de la largeur de l'outil et au moins la pente et/ou le bombé de la géométrie de surface de l'outil dans une première direction de l'outil, qui présente un angle $\rho_{FS}$ par rapport au sens de la largeur de l'outil, peut être prédéfini(e) comme fonction de la position dans le sens de la largeur de l'outil, la modification pouvant être engendrée par le réglage des axes de déplacement de la machine à dresser effectué par la fonction de commande,

et/ou

dans laquelle la fonction de saisie, la fonction de calcul et la fonction de commande sont conçues de telle manière que la modification ciblée de la géométrie de surface de l'outil sur au moins deux angles de taille en développante peut être prédéfinie comme fonction de la position en largeur de l'outil, la modification pouvant être engendrée par le réglage des axes de déplacement de la machine à dresser effectué par la fonction de commande,

et/ou

dans laquelle la fonction de saisie, la fonction de calcul et la fonction de commande sont conçues de telle manière que la modification ciblée de la géométrie de surface de l'outil sur au moins un angle de taille en développante peut être prédéfinie comme fonction de la position en largeur de l'outil et une association d'un rayon donné du dresseur avec un rayon donné de l'outil est effectuée en plus, la modification pouvant être engendrée par le réglage des axes de déplacement de la machine à dresser effectué par la fonction de commande, l'association pouvant de préférence être prédéfinie comme fonction de la position en largeur de l'outil,

et/ou

dans laquelle la fonction de saisie et la fonction de calcul sont conçues de telle manière qu'une modification ciblée de la géométrie de surface de l'outil peut être prédéfinie ou est engendrée, laquelle peut être décrite, au moins approximativement, dans l'image de la taille en développante au moins localement dans une première direction de l'outil par une fonction linéaire et/ou quadratique, les coefficients de cette fonction linéaire et/ou quadratique dans une seconde direction de l'outil, qui s'étend perpendiculairement à la première direction, étant formés par les fonctions de coefficient $F_{FtC,1}$ pour la part constante ainsi que $F_{FtL,1}$ pour la part linéaire et/ou $F_{FtQ,1}$ pour la part quadratique, $F_{FtC,1}$ dépendant de manière non linéaire de la position dans la seconde direction et $F_{FtL,1}$ n'étant pas constante,

et/ou

dans laquelle la fonction de saisie et la fonction de calcul sont conçues de telle manière qu'une modification ciblée de la géométrie de surface de l'outil peut être prédéfinie ou est engendrée, dont la pente et/ou le bombé varie en fonction de l'angle de rotation de l'outil et/ou de la position en largeur de l'outil, l'épaisseur de dent variant en plus de manière non linéaire en fonction de l'angle de rotation de l'outil et/ou de la position en largeur de l'outil.

**18.** Machine à dresser selon la revendication 17, comprenant un dispositif de commande, le dispositif de commande comportant une fonction de saisie, par laquelle une modification prédéfinie du dresseur peut être saisie et une position souhaitée de la modification du dresseur sur l'outil peut être prédéfinie, la définition de la position souhaitée de la modification du dresseur sur l'outil étant de préférence effectuée par l'association d'un rayon donné du dresseur avec un rayon donné de l'outil, et

dans laquelle le dispositif de commande comporte une fonction de calcul, qui détermine, à partir de la modification prédéfinie du dresseur et de la position souhaitée de la modification du dresseur sur l'outil, les réglages des axes de déplacement nécessaires pour engendrer cette modification lors du dressage avec contact linéaire entre le dresseur et l'outil,

et dans laquelle le dispositif de commande comporte une fonction de commande, qui effectue le réglage correspondant des axes de déplacement lors du dressage avec contact linéaire entre le dresseur et l'outil,

dans laquelle la fonction de saisie, la fonction de calcul et la fonction de commande sont conçues de telle manière que la fonction de saisie permet de prédéfinir la position de la modification sur l'outil en fonction de la position en largeur de l'outil et la fonction de calcul et de commande effectue les réglages des axes de déplacement comme fonction de la position en largeur de l'outil, la fonction de saisie, la fonction de calcul et la fonction de commande étant de préférence conçues de manière à pouvoir être utilisées pour l'exécution d'un des procédés précédents.

19. Machine à dresser selon la revendication 17 et/ou 18, comprenant un dispositif de commande, le dispositif de commande comportant une fonction de dressage par courses multiples, qui effectue un processus de dressage avec au moins une première et une seconde course, dans lesquelles le dresseur est respectivement en contact linéaire avec l'outil,

dans laquelle le dispositif de commande comporte en outre une fonction de saisie, par laquelle la position, dans laquelle la modification engendrée dans une première course suit la modification engendrée avec une seconde course, peut être prédéfinie comme fonction de la position en largeur de l'outil et/ou par laquelle une modification souhaitée de l'outil peut être prédéfinie, le dispositif de commande comportant une fonction de détermination pour déterminer les courses nécessaires pour la réalisation de cette modification, laquelle détermine la position, dans laquelle la modification engendrée dans une première course suit la modification engendrée avec une seconde course, comme fonction de la position en largeur de l'outil,

dans laquelle le dispositif de commande comporte une fonction de calcul, qui détermine, à partir de la position dans laquelle la modification engendrée dans une première course suit la modification engendrée avec une seconde course, les réglages des axes de déplacement nécessaires pour engendrer celle-ci lors du dressage avec contact linéaire entre le dresseur et l'outil,

et dans laquelle le dispositif de commande comporte une fonction de commande, qui effectue le réglage correspondant des axes de déplacement lors du dressage avec contact linéaire entre le dresseur et l'outil,

dans laquelle, de préférence, la fonction de saisie, la fonction de calcul et la fonction de commande sont conçues de manière à pouvoir être utilisées pour l'exécution d'un des procédés précédents.

20. Machine à tailler les engrenages comprenant une machine à dresser selon l'une des revendications 17 à 19, dans laquelle la machine à tailler les engrenages comporte de préférence une fixation de pièce et un logement d'outil prévu le cas échéant en plus du logement d'outil de la machine à dresser, ainsi qu'un dispositif de commande d'usinage de denture pour commander la fixation de pièce et le logement d'outil pour exécuter un usinage de denture.

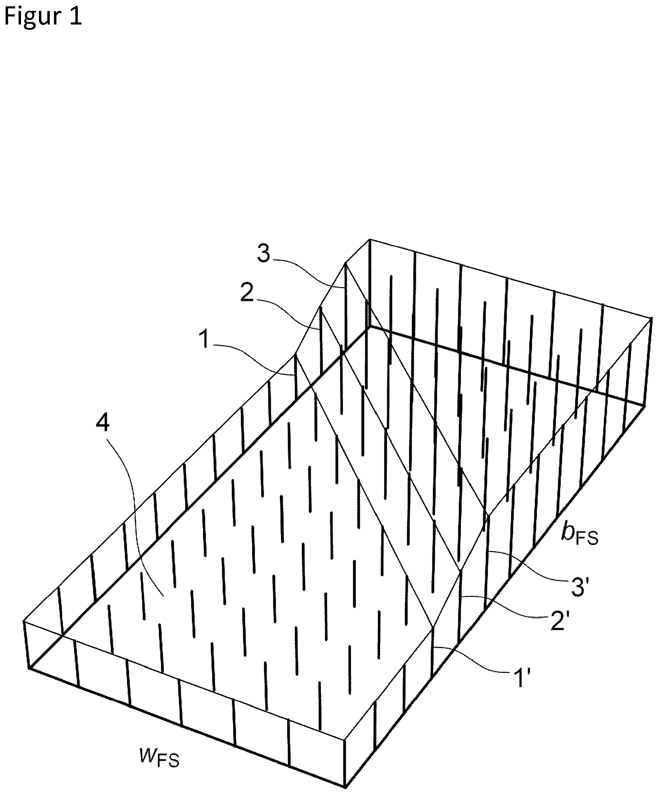

Figur 1

Figur 2

Figur 3

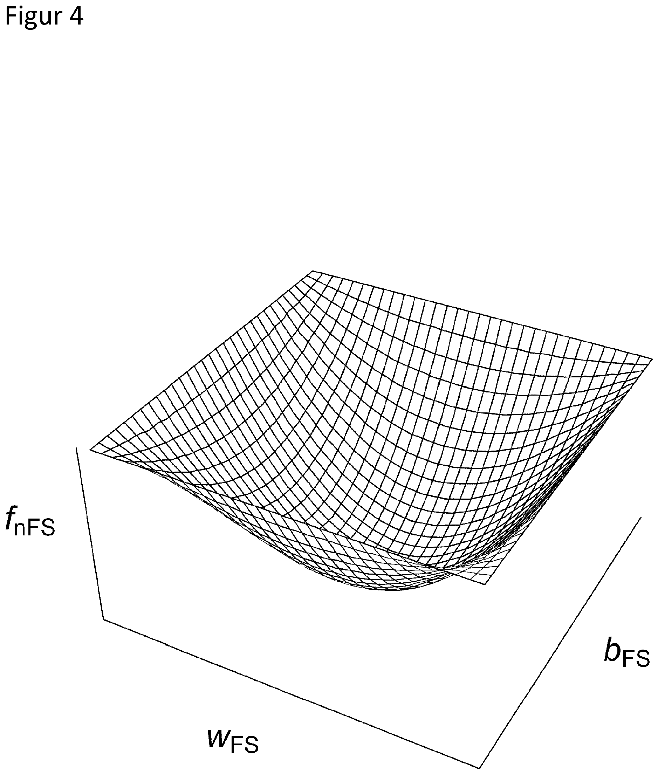

Figur 4

$f_{nFS}$

$b_{FS}$

$w_{FS}$

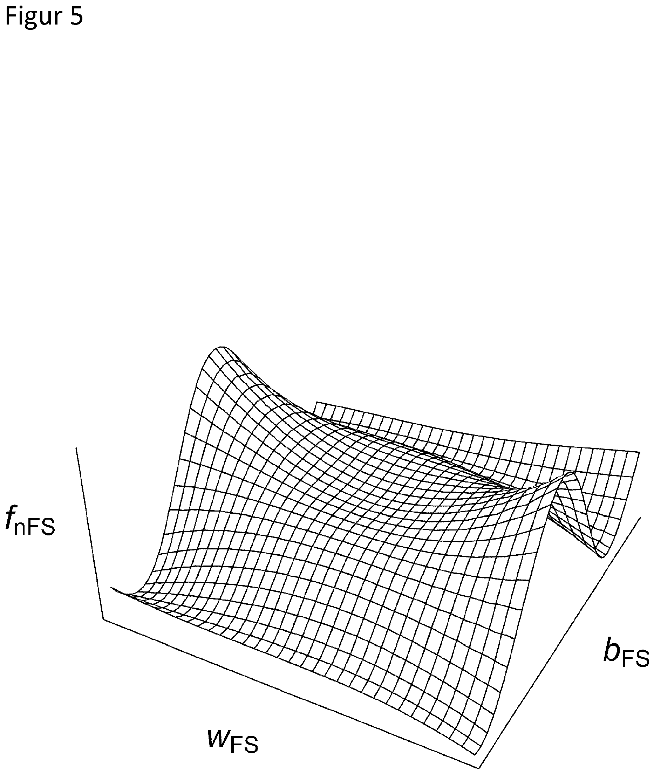

Figur 5

# Figur 6

$$v_{zS}$$

$$c_{\alpha FV}$$

$$\Delta\varphi_S$$

$$c_{\alpha FV}$$

$$\Delta d$$

$$c_{\alpha FV}$$

$$\Delta v_{yA}$$

$$c_{\alpha FV}$$

$$\Delta\gamma$$

$$c_{\alpha FV}$$

$z_S=7$

$d_S=240\text{mm}$

$d_A=150\text{mm}$

$\alpha_{nFS}=20°$

# Figur 7

$$z_S = 7$$
$$d_S = 240\,\text{mm}$$
$$d_A = 150\,\text{mm}$$
$$\alpha_{nFS} = 20°$$

# Figur 8

$v_{zS}$

$c_{\alpha FV}$

$\Delta\varphi_S$

$c_{\alpha FV}$

$\Delta d$

$c_{\alpha FV}$

$\Delta v_{yA}$

$c_{\alpha FV}$

$\Delta\gamma$

$c_{\alpha FV}$

$z_S=7$

$d_A=150\,\text{mm}$

$\alpha_{nFS}=20°$

————— $d_S=240\,\text{mm}$

- - - - - - $d_S=120\,\text{mm}$

·············· $d_S=80\,\text{mm}$

Figur 9

# Figur 10

# Figur 11

Figur 12

a) $f_{nFS}$

41     40                 42

$w_{NfFS}$                 $w_{NaFS}$    $w_{FS}$

b) $f_{nFS}$

40'      41'              42'

$w_{NfSF}w_{PFS}$         $w_{NaSF}$    $w_{FS}$

## Figur 13

a)

$P_{FV}$

$c_{\alpha FV}$

—— $z_S = 2$

---- $z_S = 4$

········· $z_S = 6$

b)

$P_{FV}$

$c_{\alpha FV}$

—— $d_S = 80mm$

---- $d_S = 120mm$

········· $d_S = 240mm$

c)

$P_{FV}$

$c_{\alpha FV}$

—— $d_A = 80mm$

---- $d_A = 150mm$

········· $d_A = 200mm$

d)

$P_{FV}$

$c_{\alpha FV}$

—— $\alpha_{nFS} = 16°$

---- $\alpha_{nFS} = 20°$

········· $\alpha_{nFS} = 24°$

## Figur 14a

Figur 14b

# Figuren 15

## Figur 16a

Figur 16b

EP 3 139 229 B2

## Figur 17

89

# Figur 18

a)

b)

# Figur 19

a)

b)

c)

— $z_S = 2$

---- $z_S = 4$

······· $z_S = 6$

Figur 20

Figur 21

Figur 22

## Figur 23

Figur 24

Figur 25

a)

b)

Figur 26

# Figur 27

a)

b)

c)

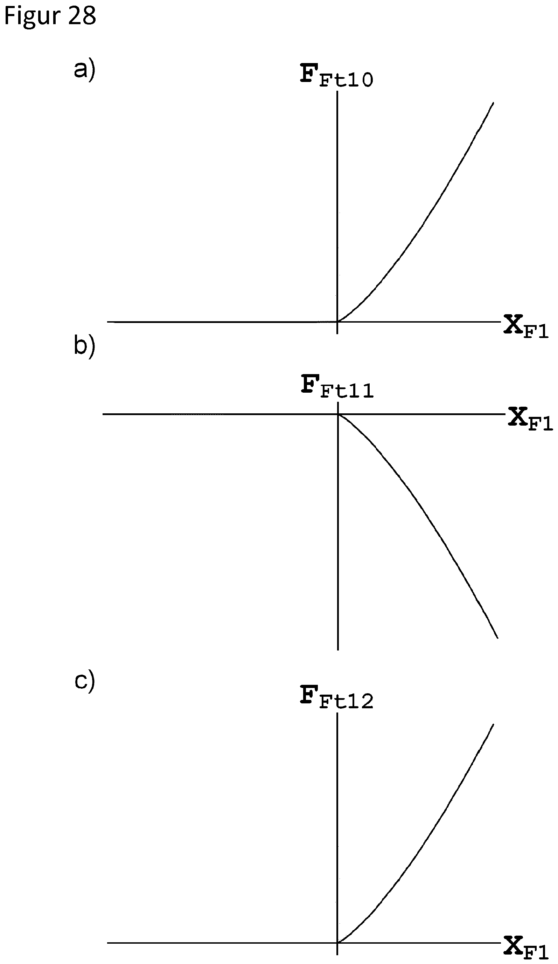

Figur 28

a)

$\mathbf{F}_{Ft10}$

$\mathbf{X}_{F1}$

b)

$\mathbf{F}_{Ft11}$

$\mathbf{X}_{F1}$

c)

$\mathbf{F}_{Ft12}$

$\mathbf{X}_{F1}$

Figur 29

Figur 30

Figur 31

Figur 32

$W$

$f_t$

$Z$

## Figur 33

# Figur 34

# Figur 35

Figur 36

a)

b)

# Figur 37

Figur 38

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012015846 A1
- EP 1995010 A1
- WO 2010060596 A1
- DE 19624842 A1
- DE 19706867 A1
- DE 102005030846 A1
- DE 102006061759 A1
- DE 102013015232 A1
- DE 19624842 C2
- DE 10208531
- DE 102012015846

**In der Beschreibung aufgeführte Nicht-Patentliteratur**

- **NIEMANN, G ; WINTER, H.** Maschinenelemente. Springer Verlag, 1983, vol. 3
- **ZIERAU, S.** Die geometrische Auslegung konischer Zahnräder und Paarungen mit parallelen Achsen. Institut für Konstruktionslehre, Technische Universität Braunschweig
- Die geometrische Auslegung konischer Zahnräder und Paarungen mit parallelen Achsen. Institut für Konstruktionslehre, Technische Universität Braunschweig